(19) Europäisches Patentamt
European Patent Office
Office européen des brevets

(11) EP 4 674 889 A1

(12) **EUROPEAN PATENT APPLICATION**
published in accordance with Art. 153(4) EPC

(43) Date of publication:
**07.01.2026 Bulletin 2026/02**

(21) Application number: **24778977.9**

(22) Date of filing: **27.02.2024**

(51) International Patent Classification (IPC):
***C08G 64/00*** *(2006.01)* ***C08G 18/44*** *(2006.01)*
***C08G 63/66*** *(2006.01)* ***C08G 63/78*** *(2006.01)*
***C09D 175/06*** *(2006.01)*

(52) Cooperative Patent Classification (CPC):
**C08G 18/44; C08G 63/66; C08G 63/78; C08G 64/00; C09D 175/06**

(86) International application number:
**PCT/JP2024/007151**

(87) International publication number:
**WO 2024/202836 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 JP 2023057070**

(71) Applicant: **Tosoh Corporation**
**Yamaguchi 746-8501 (JP)**

(72) Inventors:
- **HONDA, Kohei**
  **Yokkaichi-shi, Mie 510-8540 (JP)**
- **NOGUCHI, Ikumi**
  **Yokkaichi-shi, Mie 510-8540 (JP)**

(74) Representative: **TBK**
**Bavariaring 4-6**
**80336 München (DE)**

(54) **COMPOSITION AND METHOD FOR PRODUCING SAME, URETHANE RESIN, AQUEOUS URETHANE RESIN DISPERSION, AND COATING AGENT**

(57) The present disclosure relates to a composition including: a compound (A-1) including a repeating unit (A) having a specific structure and a structural unit (I) derived from a polyhydric alcohol having a specific structure. The content of a structure (C) derived from an oxetane compound having a specific structure in the composition is 0.90 to 10.7 mol% relative to the total amount of the structure (C) derived from the oxetane compound, a structure (D) derived from a diol having a specific structure, and a structure (E) derived from a polyhydric alcohol having a specific structure.

EP 4 674 889 A1

## Description

### Technical Field

The present disclosure relates to a composition and a method for producing the same, a urethane resin, an aqueous urethane resin dispersion, and a coating agent.

### Background Art

Similar to polyester polyols, polyether polyols, and the like, polycarbonate polyols are beneficial as raw materials for producing urethane resins (also called polyurethane resins) by reaction with polyisocyanate compounds, and are beneficial as raw materials for adhesives, paints, and the like.

Since a polyester polyol has an ester bond, a urethane resin obtained from a polyester polyol has a disadvantage of inferior hydrolysis resistance. In addition, since a polyether polyol has an ether bond, a urethane resin obtained from a polyether polyol has a disadvantage of inferior weather resistance and heat resistance. On the other hand, a urethane resin obtained from a polycarbonate polyol tends to have better durability (heat resistance, weather resistance, hydrolysis resistance, chemical resistance, and the like).

A polycarbonate polyol is generally produced by reacting a carbonate ester with a diol in the presence of a transesterification catalyst (transesterification reaction).

So far, polycarbonate polyols having various structures have been proposed according to their purpose. For example, Patent Literature 1 and 2 propose polycarbonate polyols obtained by a transesterification reaction between a polycarbonate diol and a triol compound and/or a tetraol compound.

### Citation List

### Patent Literature

[Patent Literature 1] Japanese Unexamined Patent Publication No. H3-220233
[Patent Literature 2] Japanese Unexamined Patent Publication No. 2012-184380

### Summary of Invention

### Technical Problem

However, while the polycarbonate polyols according to Patent Literature 1 and 2 exhibit favorable mechanical properties when used as raw materials for urethane resins, their handling properties are insufficient.

Therefore, one aspect of the present disclosure is directed to providing a composition that contributes to the formation of a urethane resin having high tensile strength and has favorable handling properties, and a method for producing the same. In addition, another aspect of the present disclosure is directed to providing a urethane resin having high tensile strength, an aqueous urethane resin dispersion using the urethane resin, and a coating agent.

### Solution to Problem

The present disclosure provides the following aspects.

[1] A composition including: a compound (A-1) including a repeating unit (A) represented by the following Formula (A), a structural unit (I) derived from a polyhydric alcohol represented by the following Formula (I), a structure (C) derived from an oxetane compound represented by the following Formula (C), and a terminal hydroxy group, in which the content of the structure (C) derived from the oxetane compound represented by the following Formula (C) in the composition is 0.90 to 10.7 mol% relative to the total amount of the structure (C) derived from an oxetane compound, a structure (D) derived from a diol represented by the following Formula (D), and a structure (E) derived from a polyhydric alcohol represented by the following Formula (E) in the composition.

[Chem. 1]

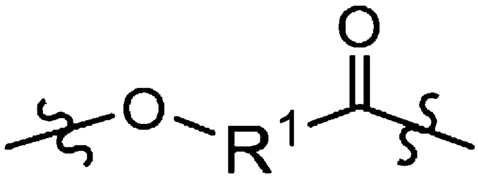

(A)

[In Formula (A), $R^1$ represents an alkanediyl group, *1-O-$R^a$-*2, or * 1-$R^b$-C(=O)-O-$R^c$-*2, where $R^a$, $R^b$, and $R^c$ each independently represent an alkanediyl group, *1 represents a bonding site with a carbonyl group, and *2 represents a bonding site with an oxygen atom.]

[Chem. 2]

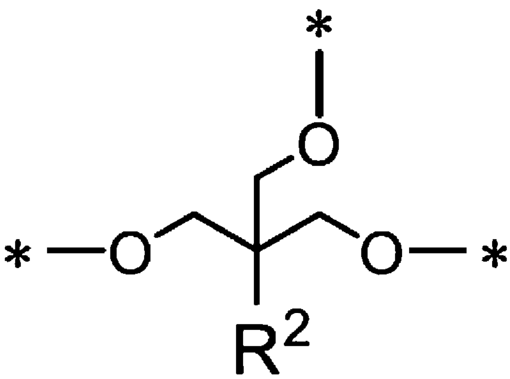

(I)

[In Formula (I), $R^2$ represents a hydrogen atom, an alkyl group, or a hydroxyalkyl group, and * represents a bonding site.]

[Chem. 3]

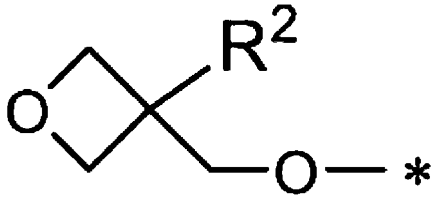

(C)

[In Formula (C), $R^2$ has the same meaning as above, and * represents a bonding site.]

[Chem. 4]

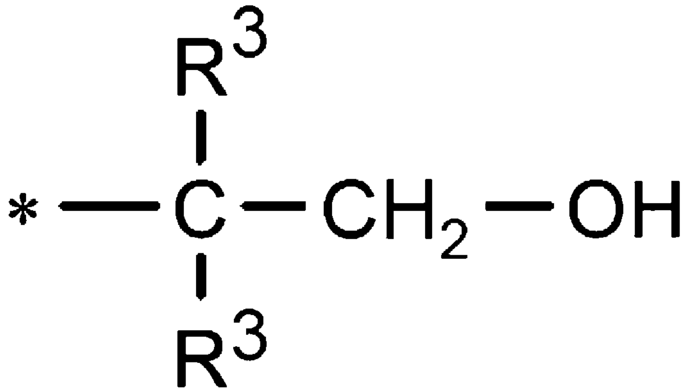

(D)

[In Formula (D), $R^3$ represents a hydrogen atom or an alkyl group, and * represents a bonding site, and $R^3$'s may be the same or different from each other.]

[Chem. 5]

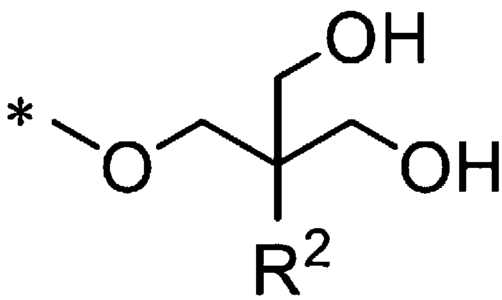

(E)

[In Formula (E), $R^2$ has the same meaning as above, and * represents a bonding site.]

[2] A composition including: a compound (A-1) including a repeating unit (A) represented by the following Formula (A) and a structural unit (I) derived from a polyhydric alcohol represented by the following Formula (I), in which the content of a structure (C) derived from an oxetane compound represented by the following Formula (C) is 2.80 to 28 mol% relative to the total amount of the structural unit (I) derived from the polyhydric alcohol represented by the following Formula (I) and the structure (C) derived from the oxetane compound.

[Chem. 6]

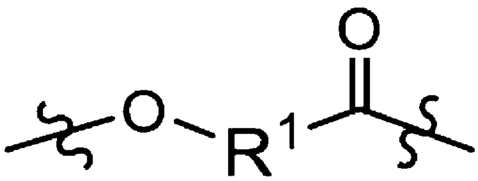

(A)

[2] A composition including: a compound (A-1) including a repeating unit (A) represented by the following Formula (A) and a structural unit (I) derived from a polyhydric alcohol represented by the following Formula (I), in which the content of a structure (C) derived from an oxetane compound represented by the following Formula (C) is 2.80 to 28 mol% relative to the total amount of the structural unit (I) derived from the polyhydric alcohol represented by the following Formula (I) and the structure (C) derived from the oxetane compound.

[Chem. 7]

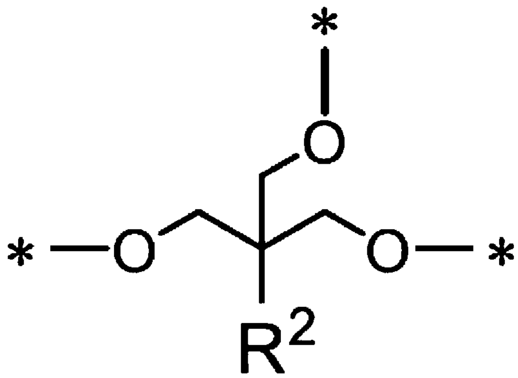

(I)

[In Formula (I), $R^2$ represents a hydrogen atom, an alkyl group, or a hydroxyalkyl group, and * represents a bonding site.]

[Chem. 8]

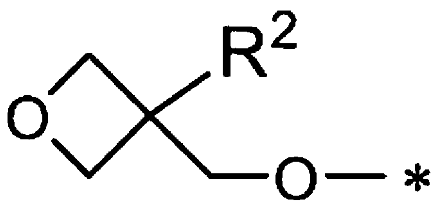

(C)

[In Formula (C), $R^2$ has the same meaning as above, and * represents a bonding site.]

[3] The composition according to [1], in which the content of the structure (C) derived from the oxetane compound is 2.80 to 28 mol% relative to the total amount of the structural unit (I) derived from the polyhydric alcohol and the structure (C) derived from the oxetane compound.

[4] The composition according to any one of [1] to [3], in which $R^1$ is *1-O-$R^a$-*2, and all of $R^a$'s are linear alkanediyl groups.

[5] The composition according to any one of [1] to [3], in which $R^1$ is *1-O-$R^a$-*2, and at least one of $R^a$'s is a branched alkanediyl group.

[6] The composition according to any one of [1] to [4], in which $R^1$ is * 1-O-$R^a$-*2, and two or more alkanediyl groups are contained as $R^a$.

[7] The composition according to any one of [1] to [3], in which $R^1$ includes *1-O-$R^a$-*2, and an alkanediyl group and/or *1-$R^b$-C(=O)-O-$R^c$-*2.

[8] The composition according to any one of [1] to [3], in which $R^1$ includes *1-O-$R^a$-*2 and an alkanediyl group.

[9] The composition according to any one of [1] to [8], further including: a diol (d) represented by the following Formula (d); a polyhydric alcohol (e) represented by the following Formula (e); and an oxetane compound (F) represented by the following Formula (f).

[Chem. 9]

$$HO-R^a-OH \quad (d)$$

[In Formula (d), $R^a$ has the same meaning as above.]

[Chem. 10]

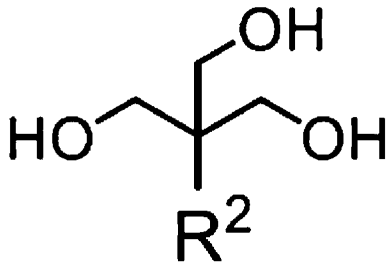

(e)

[In Formula (e), $R^2$ has the same meaning as above.]

[Chem. 11]

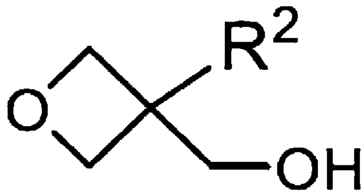

(f)

[In Formula (f), $R^2$ has the same meaning as above.]

[10] The composition according to any one of [1] to [9], further including: a compound (A-2) represented by the following Formula (A-2); a compound (A-3) represented by the following Formula (A-3); and a compound (A-4) represented by the following Formula (A-4).

[Chem. 12]

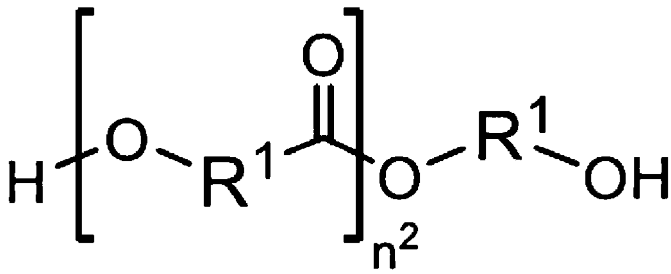

(A-2)

[In Formula (A-2), $R^1$ has the same meaning as above, and $n^2$ represents an integer of 1 or more, and a plurality of $R^1$'s may be the same or different from each other.]

[Chem. 13]

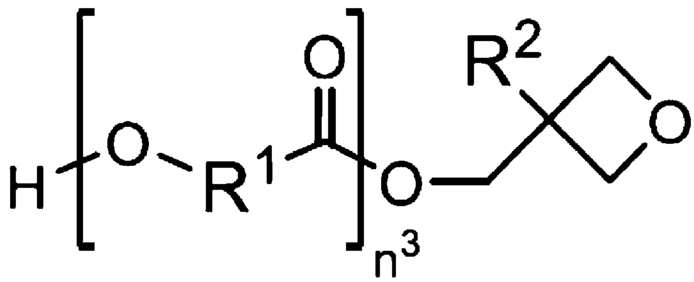

(A-3)

[In Formula (A-3), $R^1$ and $R^2$ have the same meaning as above, and $n^3$ represents an integer of 1 or more, and a plurality of $R^1$'s may be the same or different from each other.]

[Chem. 14]

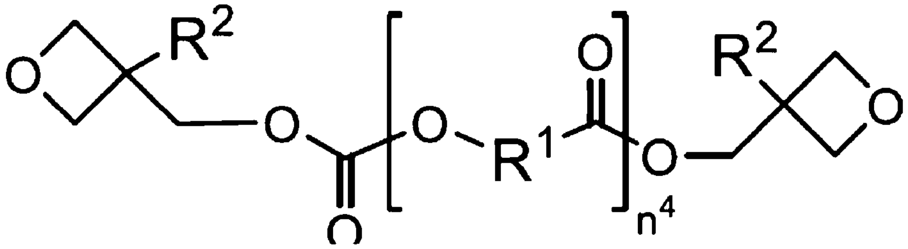

(A-4)

[In Formula (A-4), $R^1$ and $R^2$ have the same meaning as above, and $n^4$ represents an integer of 1 or more, a plurality of $R^2$'s may be the same or different from each other, and when a plurality of $R^1$'s are present, they may be the same or different from each other.]

[11] The composition according to any one of [1] to [3], further containing lithium acetylacetonate.
[12] A method for producing the composition according to any one of [1] to [11], including: a step of heating a mixed solution containing a polyhydric alcohol (B1), a diol (D1), a carbonate ester, and a transesterification catalyst to perform a reflux reaction while removing an alcohol derived from the carbonate ester from the reaction system, thereby obtaining the composition.
[13] A method for producing the composition according to any one of [1] to [12], including: a reaction step of obtaining the compound (A-1) by reacting a polycarbonate polyol (B2) with a polyester polyol (C2) in a mixed solution containing the polycarbonate polyol (B2), the polyester polyol (C2), and a transesterification catalyst, in which at least one of the polycarbonate polyol (B2) and the polyester polyol (C2) includes a group represented by the following Formula (I), or the mixed solution further contains a polyhydric alcohol (E2).

[Chem. 15]

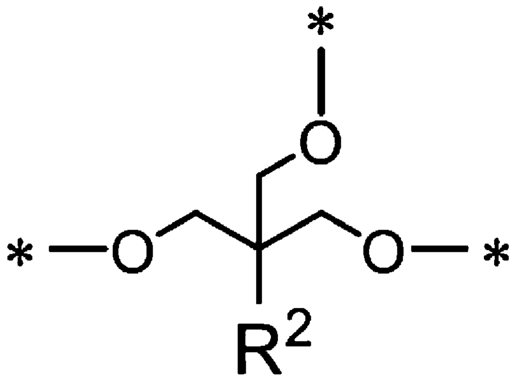

(I)

[In Formula (I), $R^2$ has the same meaning as above, and * represents a bonding site.]
[14] The production method according to [12] or [13], in which the content of the transesterification catalyst in the mixed solution is 0.001 to 0.050 parts by mass relative to 100 parts by mass of the total amount of the polyhydric alcohol (B1), the diol (D1), and the carbonate ester in the mixed solution.
[15] The production method according to any one of [12] to [14], in which the content of the transesterification catalyst in the mixed solution is 0.001 to 0.050 parts by mass relative to 100 parts by mass of the total amount of the polycarbonate polyol (B2) and the polyester polyol (C2).
[16] The production method according to any one of [12] to [15], in which the transesterification catalyst includes lithium acetylacetonate.
[17] A urethane resin which is a polycondensate of a polyol component and a polyisocyanate component or a crosslinked product thereof, in which the polyol component contains the composition according to any one of [1] to [11].
[18] The urethane resin according to [17], in which the polyol component further contains a polyol having an acid

group.

[19] An aqueous urethane resin dispersion containing an aqueous medium, and the urethane resin according to [18] dispersed in the aqueous medium or a neutralized product thereof.

[20] A coating agent containing the urethane resin according to [17] or [18].

## Advantageous Effects of Invention

According to one aspect of the present disclosure, it is possible to provide a composition that contributes to the formation of a urethane resin having high tensile strength and has favorable handling properties, and a method for producing the same. According to another aspect of the present disclosure, it is also possible to provide a urethane resin having high tensile strength, an aqueous urethane resin dispersion using the urethane resin, and a coating agent.

## Brief Description of Drawings

FIG. 1 is a diagram showing the $^1$H-NMR spectrum of a composition containing a polycarbonate polyol obtained in Example 1B.

FIG. 2 is a diagram showing the $^1$H-NMR spectrum of a composition containing a polycarbonate polyol obtained in Example 1C.

## Description of Embodiments

Hereinafter, an embodiment of each aspect of the present disclosure will be described in detail. A numerical range indicated using "to" in the present specification indicates a range including numerical values denoted before and after "to" as a minimum value and a maximum value. The minimum value or maximum value of the numerical range indicated using "to" can be arbitrarily combined with the maximum value or the minimum value of other numerical ranges indicated using "to." In addition, upper limit values and lower limit values denoted individually can also be arbitrarily combined.

A composition of the present disclosure includes a compound (A-1) that includes a repeating unit (A) represented by the following Formula (A) and a structural unit (I) derived from a polyhydric alcohol represented by the following Formula (I).

[Chem. 16]

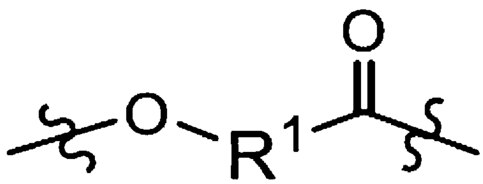

(A)

[In Formula (A), $R^1$ represents an alkanediyl group, *1-O-$R^a$-*2, or *1-$R^b$-C(=O)-O-$R^c$-*2, where $R^a$, $R^b$, and $R^c$ each independently represent an alkanediyl group, *1 represents a bonding site with a carbonyl group, and *2 represents a bonding site with an oxygen atom.]

[Chem. 17]

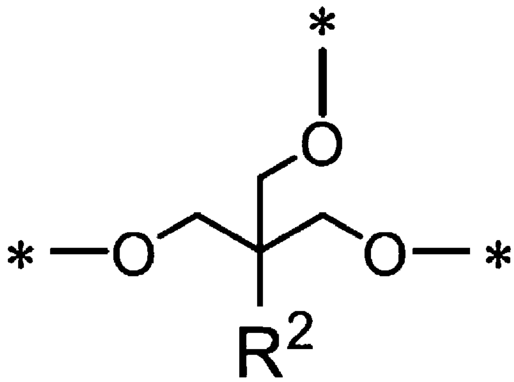

(I)

[In Formula (I), $R^2$ represents a hydrogen atom, an alkyl group, or a hydroxyalkyl group, and * represents a bonding site.]

A composition according to a first aspect is a composition in which the content of a structure (C) derived from an oxetane compound represented by the following Formula (C) is 2.80 to 28 mol% relative to the total amount of the structural unit (I) derived from the polyhydric alcohol and the structure (C) derived from the oxetane compound.

[Chem. 18]

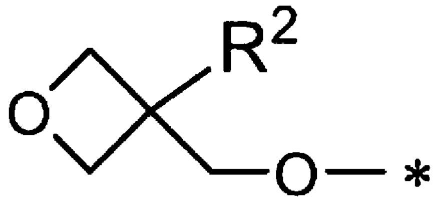

(C)

[In Formula (C), $R^2$ has the same meaning as above, and * represents a bonding site.]

A composition according to a second aspect of the present disclosure is a composition in which the content of a structure (C) derived from an oxetane compound is 0.90 to 10.7 mol% relative to the total amount of the structure (C) derived from the oxetane compound, a structure (D) derived from a diol represented by the following Formula (D), and a structure (E) derived from a polyhydric alcohol represented by the following Formula (E).

[Chem. 19]

$$*-\underset{R^3}{\overset{R^3}{\underset{|}{\overset{|}{C}}}}-CH_2-OH \quad (D)$$

[In Formula (D), $R^3$ represents a hydrogen atom or an alkyl group, and * represents a bonding site, and $R^3$'s may be the same or different from each other.]

[Chem. 20]

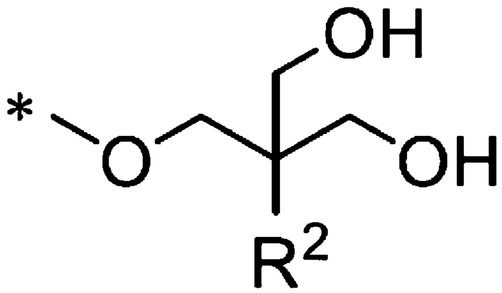

(E)

[In Formula (E), $R^2$ has the same meaning as above, and * represents a bonding site.]

<Compound (A-1)>

A compound (A-1) may include a compound that includes the repeating unit (A), the structural unit (I) derived from the polyhydric alcohol, the structure (C) derived from the oxetane compound, and a terminal hydroxy group. A compound (A-1) may include a compound that includes the repeating unit (A), the structure (C) derived from the oxetane compound, the structure (D) derived from the diol, and the structure (E) derived from the polyhydric alcohol.

The alkanediyl group represented by $R^1$ may be linear or branched. When two or more alkanediyl groups represented by $R^1$ are present, all of them may be linear alkanediyl groups or branched alkanediyl groups, or some may be linear alkanediyl groups and the others may be branched alkanediyl groups.

The number of carbon atoms in the alkanediyl group represented by $R^1$ may be, for example, 2 to 10. Specific examples of alkanediyl groups include ethanediyl group, 1,2-propanediyl group, 1,3-propanediyl group, 1,2-butanediyl group, 1,3-butanediyl group, 1,4-butanediyl group, 1,5-pentanediyl group, 2,2-dimethyl-1,3-propanediyl group, 1,6-hexanediyl group, 3-methyl-1,5-pentanediyl group, 1,8-octanediyl group, 2-ethyl-1,6-hexanediyl group, 1,9-nonanediyl group, 2-methyloctane-1,8-diyl group, and 2-butyl-2-ethyl-1,3-propanediyl group. Among these, 1,4-butanediyl group, 1,5-pentanediyl group, 1,6-hexanediyl group, 3-methyl-1,5-pentanediyl group, 2-ethyl-1,6-hexanediyl group, 1,9-nonanediyl group, and 2-methyloctane-1,8-diyl group are preferable.

The alkanediyl groups represented by $R^a$, $R^b$, and $R^c$ may be the same as the alkanediyl groups described above. The number of carbon atoms in the alkanediyl groups represented by $R^a$, $R^b$, and $R^c$ may be, for example, 2 to 10. When two or more alkanediyl groups represented by $R^a$ are present, all of them may be linear alkanediyl groups or branched alkanediyl groups, or some may be linear alkanediyl groups and the others may be branched alkanediyl groups. When two or more alkanediyl groups represented by $R^b$ are present, all of them may be linear alkanediyl groups or branched alkanediyl groups, or some may be linear alkanediyl groups and the others may be branched alkanediyl groups. When two or more alkanediyl groups represented by $R^c$ are present, all of them may be linear alkanediyl groups or branched alkanediyl groups, or some may be linear alkanediyl groups and the others may be branched alkanediyl groups.

When a polycarbonate polyol includes two or more alkanediyl groups as $R^1$, $R^a$, $R^b$, or $R^c$, all of them may be linear alkanediyl groups or branched alkanediyl groups, or some may be linear alkanediyl groups and the others may be branched alkanediyl groups.

The alkyl group and the hydroxyalkyl group represented by $R^2$ may be linear or branched. The number of carbon atoms in the alkyl group and the hydroxyalkyl group may be, for example, 1 to 6, and may be 2 to 5 or 3 to 4. Specific examples of alkyl groups and hydroxyalkyl groups include methyl group, ethyl group, propyl group, isopropyl group, butyl group, pentyl group, hexyl group, hydroxymethyl group, hydroxyethyl group, hydroxypropyl group, and hydroxybutyl group. $R^2$ is preferably an alkyl group or hydroxyalkyl group, and more preferably an alkyl group or hydroxyalkyl group having 1 to 2 carbon atoms.

The number average molecular weight of the compound (A-1) may be, for example, 200 to 6,000 g/mol. Here, the number average molecular weight is a number average molecular weight in terms of bifunctional polyoxypropylene polyol measured by gel permeation chromatography (GPC).

The hydroxyl value of the compound (A-1) may be, for example, 30 to 800 mg KOH/g. Here, the hydroxyl value is the number of milligrams (mg) of potassium hydroxide equivalent to hydroxy groups in 1 g of the compound (A-1), and is measured according to JIS K1557-1.

Hereinafter, the compound (A-1) will be described in more detail separately with reference to a plurality of embodiments (first to fourth embodiments).

(First embodiment)

In the first embodiment, the compound (A-1) contains only linear alkanediyl groups as $R^1$. That is, all of $R^1$'s are linear alkanediyl groups. Since the compound (A-1) contains only a linear alkanediyl group as $R^1$, it is likely to be a solid at 25°C.

In the first embodiment, it is preferable that the compound (A-1) contain only one linear alkanediyl group as $R^1$. In this case, the compound (A-1) is highly likely to be a solid at 25°C.

The number of carbon atoms in the linear alkanediyl group is preferably 2 to 10, more preferably 2 to 9, and still more preferably 4 to 8. Preferable examples of linear alkanediyl groups include 1,4-butanediyl group, 1,5-pentanediyl group, 1,6-hexanediyl group, and 1,9-nonanediyl group.

The number average molecular weight of the compound (A-1) of the first embodiment is preferably 200 g/mol to 6,000 g/mol, and may be 300 g/mol to 5,000 g/mol or 500 g/mol to 4,000 g/mol.

The hydroxyl value of the compound (A-1) of the first embodiment is preferably 30 to 800 mg KOH/g, and may be 40 to 700 mg KOH/g or 50 to 600 mg KOH/g.

(Second embodiment)

In the second embodiment, the compound (A-1) contains two or more alkanediyl groups as $R^1$. Since the compound (A-1) contains two or more alkanediyl groups as $R^1$, it is likely to be a liquid at 25°C.

In the second embodiment, from the viewpoint that when used as a raw material for a urethane resin, a urethane resin having favorable tensile strength, elongation, and texture, and better durability is easily formed, it is preferable that the compound (A-1) contain only linear alkanediyl groups as $R^1$. Examples of preferable combinations of alkanediyl groups include a combination of two or more alkanediyl groups having 2 to 10 carbon atoms. More preferable combinations of alkanediyl groups include a combination of 1,6-hexanediyl with at least one selected from the group consisting of 1,4-butanediyl, 1,5-pentanediyl, and 1,9-nonanediyl.

In the second embodiment, from the viewpoint that when used as a raw material for a urethane resin, a urethane resin having favorable tensile strength, elongation, and texture, and better durability is easily formed, it is preferable that the ratio of the number of moles of 1,6-hexanediyl groups to the total number of moles of alkanediyl groups contained as $R^1$ in the compound (A-1) be 0.20 or more (for example, 0.20 to 0.95), more preferably 0.30 or more (for example, 0.30 to 0.90), and still more preferably 0.40 or more (for example, 0.40 to 0.70 or 0.50 to 0.60).

The number average molecular weight of the compound (A-1) of the second embodiment is preferably 200 g/mol to 6,000 g/mol, and may be 300 g/mol to 5,000 g/mol or 500 g/mol to 4,000 g/mol.

The hydroxyl value of the compound (A-1) of the second embodiment is preferably 30 to 800 mg KOH/g, and may be 40 to 700 mg KOH/g or 50 to 600 mg KOH/g.

(Third embodiment)

In the third embodiment, the compound (A-1) contains a branched alkanediyl group as $R^1$. Since the compound (A-1) of the third embodiment contains a branched alkanediyl group as $R^1$, it is likely to be a liquid at 25°C.

In the third embodiment, the compound (A-1) may contain two or more alkanediyl groups as $R^1$. All of the two or more alkanediyl groups may be branched alkanediyl groups, but from the viewpoint that when used as a raw material for a urethane resin, a urethane resin having better handling properties, favorable elongation and texture, and better durability is easily formed, it is preferable that some of the two or more alkanediyl groups be linear alkanediyl groups. In this case, the ratio of the number of moles of the branched alkanediyl group to the total number of moles of the alkanediyl group contained as $R^1$ in the compound (A-1) is preferably 0.10 to 1.00, more preferably 0.20 to 0.90, still more preferably 0.30 to 0.70, and particularly preferably 0.40 to 0.60.

The number of carbon atoms in the branched alkanediyl group is preferably 2 to 10, more preferably 3 to 9, and still more preferably 4 to 8. The number of carbon atoms of the main chain (a linear chain having the largest number of carbon atoms) in the branched alkanediyl group is preferably 2 to 9, more preferably 3 to 8, and still more preferably 4 to 7. Preferable examples of branched alkanediyl groups include 3-methylpentane-1,5-diyl group and 2-methyl-1,8-octanediyl group.

The number of carbon atoms in the linear alkanediyl group is preferably 2 to 10, more preferably 3 to 9, and still more preferably 4 to 8. Preferable examples of linear alkanediyl groups include 1,4-butanediyl group, 1,5-pentanediyl group, 1,6-hexanediyl group, and 1,9-nonanediyl group.

In the third embodiment, from the viewpoint that when used as a raw material for a urethane resin, a urethane resin having better handling properties, favorable elongation and texture, and better durability is easily formed, the ratio of the number of moles of 1,6-hexanediyl groups to the total number of moles of alkanediyl groups contained as $R^1$ in the compound (A-1) is preferably 0.05 or more (for example, 0.05 to 1.00), more preferably 0.10 or more (for example, 0.10 to

0.90), still more preferably 0.20 or more (for example, 0.20 to 0.80), and particularly preferably 0.30 or more (for example, 0.30 to 0.70 or 0.40 to 0.60).

The number average molecular weight of the compound (A-1) of the third embodiment is preferably 200 g/mol to 6,000 g/mol, and may be 300 g/mol to 5,000 g/mol or 500 g/mol to 4,000 g/mol.

The hydroxyl value of the compound (A-1) of the third embodiment is preferably 30 to 800 mg KOH/g, and may be 40 to 700 mg KOH/g or 50 to 600 mg KOH/g.

(Fourth embodiment)

In the fourth embodiment, the compound (A-1) contains *1-O-$R^a$-*2, and an alkanediyl group and/or *1-$R^b$-C(=O)-O-$R^c$-*2 as $R^1$. Since the compound (A-1) of the fourth embodiment contains *1-O-$R^a$-*2, and an alkanediyl group and/or *1-$R^b$-C(=O)-O-$R^c$-*2 as $R^1$, it is likely to be a liquid at 25°C.

In the fourth embodiment, the property of the compound (A-1) is not particularly limited, and may be a solid at 25°C or a liquid at 25°C. The property of the compound (A-1) can be changed depending on the type (the number of carbon atoms, the presence or absence of branching, and the like) of the alkanediyl group contained as $R^1$, $R^a$, $R^b$, or $R^c$ in the compound (A-1), the hydroxyl value of the compound (A-1), and the like. For example, when the total number of moles of branched alkanediyl groups in the compound (A-1) to the total number of moles of alkanediyl groups contained as $R^1$, $R^a$, $R^b$, or $R^c$ in the compound (A-1) is 0.2 to 1.0, and when the hydroxyl value of the compound (A-1) is high, the compound (A-1) is likely to be a liquid at 25°C.

In the fourth embodiment, from the viewpoint that when used as a raw material for a urethane resin, a urethane resin having better durability such as heat resistance or moist heat resistance/hot water resistance is easily formed, it is more preferable that $R^1$ contained in the compound (A-1) be an alkanediyl group and *1-O-$R^a$-*2.

In addition, in the fourth embodiment, from the viewpoint that when used as a raw material for a urethane resin, a urethane resin having better 100% modulus and heat resistance is easily formed, it is preferable that the ratio of the number of moles of *1-O-$R^a$-*2 contained as $R^1$ to the total number of moles of alkanediyl groups, *1-O-$R^a$-*2, and *1-$R^b$-C(=O)-O-$R^c$-*2 contained as $R^1$ in the compound (A-1) be 0.10 or more (for example, 0.10 to 0.90), more preferably 0.20 or more (for example, 0.20 to 0.80), still more preferably 0.30 or more (for example, 0.30 to 0.70), and particularly preferably 0.40 or more (for example, 0.40 to 0.60).

The number average molecular weight of the compound (A-1) of the fourth embodiment is preferably 200 g/mol to 6,000 g/mol, and may be 300 g/mol to 5,000 g/mol or 500 g/mol to 4,000 g/mol.

The hydroxyl value of the compound (A-1) of the fourth embodiment is preferably 30 to 800 mg KOH/g, and may be 40 to 700 mg KOH/g or 50 to 600 mg KOH/g.

<Raw materials>

The polycarbonate polyol (compound (A-1)) described in the first to third embodiments may be, for example, a reaction product of a polyhydric alcohol represented by the following Formula (b) (hereinafter also referred to as "polyhydric alcohol (B1)"), a diol represented by the following Formula (d) (hereinafter also referred to as "diol (D1)"), and a carbonate ester, or may be a reaction product of a polyhydric alcohol (B1), a diol (D1), a carbonate ester, and an oxetane compound represented by the following Formula (f) (hereinafter also referred to as "oxetane compound (F1)").

[Chem. 21]

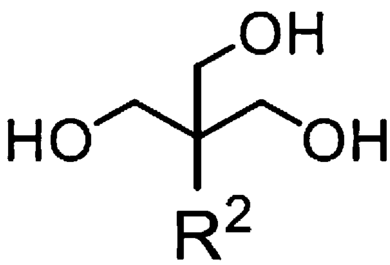

(b)

[In Formula (b), $R^2$ represents a hydrogen atom, an alkyl group, or a hydroxyalkyl group.]

[Chem. 22] **HO-$R^a$-OH (d)**

[In Formula (d), $R^a$ has the same meaning as above.]

[Chem. 23]

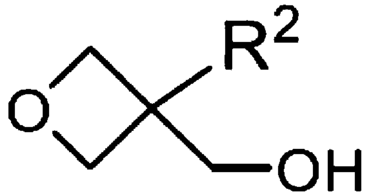

(f)

[In Formula (f), $R^2$ has the same meaning as above.]

Specific examples of polyhydric alcohols (B1) include trimethylolpropane, trimethylolethane, glycerin, and pentaerythritol. These may be used alone or two or more thereof may be used in combination.

Specific examples of diols (D1) include ethylene glycol, 1,2-propanediol, 1,3-propanediol, 1,2-butanediol, 1,3-butanediol, 1,4-butanediol, 1,5-pentanediol, 2,2-dimethyl-1,3-propanediol, 1,6-hexanediol, 3-methyl-1,5-pentanediol, 1,8-octanediol, 2-ethyl-1,6-hexanediol, 1,9-nonanediol, 2-methyloctane-1,8-diol, and 2-butyl-2-ethyl-1,3-propanediol. These may be used alone or two or more thereof may be used in combination.

Examples of carbonate esters include dimethyl carbonate, diethyl carbonate, methyl ethyl carbonate, dipropyl carbonate, dibutyl carbonate, diphenyl carbonate, ethylene carbonate, trimethylene carbonate, and 1,2-propylene carbonate. These may be used alone or two or more thereof may be used in combination. In consideration of ease of availability, ease of setting conditions for the polymerization reaction, and the like, it is preferable to use at least one selected from the group consisting of dimethyl carbonate, diethyl carbonate, diphenyl carbonate, dibutyl carbonate, and ethylene carbonate.

Examples of oxetane compounds (F1) include 3-ethyl-3-hydroxymethyl oxetane, 3-methyl-3-hydroxymethyl oxetane, and 3,3-dihydroxymethyl oxetane. These may be used alone or two or more thereof may be used in combination.

The compound (A-1) described in the fourth embodiment may be, for example, a reaction product of a polycarbonate polyol (B2) and a polyester polyol (C2). In addition, the compound (A-1) may also be a reaction product of a polycarbonate polyol (B2), a polyester polyol (C2), and an oxetane compound (F2). Furthermore, the compound (A-1) may be a reaction product of a polycarbonate polyol (B2), a polyester polyol (C2), and a diol (D2) and/or a polyhydric alcohol (E2). In addition, the compound (A-1) may be a reaction product of a polycarbonate polyol (B2), a polyester polyol (C2), an oxetane compound (F2), and a diol (D2) and/or a polyhydric alcohol (E2).

The polycarbonate polyol (B2) is a polycarbonate polyol having a hydroxyl functionality of 2 or more, a polycarbonate polyol (B2-1) having a hydroxyl functionality of 2 (that is, a polycarbonate diol), a polycarbonate polyol (B2-2) having a hydroxyl functionality of more than 2, or a combination of two or more selected from a polycarbonate polyol (B2-1) and a polycarbonate polyol (B2-2).

Examples of polycarbonate polyols (B2-1) include those obtained by a reaction of a carbonate ester with a diol.

Examples of the carbonate ester and diol that can be used in the reaction to obtain the polycarbonate polyol (B2-1) include the same carbonate ester and diol (D1) as exemplified in the description for the compound (A-1) of the first to third embodiments.

Examples of polycarbonate polyols (B2-2) include those obtained by a reaction of a carbonate ester, a diol, and a polyhydric alcohol having a hydroxyl functionality of 3 or more.

Examples of the carbonate ester, diol, and polyhydric alcohol having a hydroxyl functionality of 3 or more that can be used in the reaction to obtain the polycarbonate polyol (B2-2) include the same carbonate ester, diol (D1), and polyhydric alcohol (B1) as exemplified in the description for the compound (A-1) of the first to third embodiments.

The polyester polyol (C2) may be a polyester polyol having a hydroxyl functionality of 2 or more, a polyester polyol (C2-1) having a hydroxyl functionality of 2 (that is, a polyester diol), a polyester polyol (C2-2) having a hydroxyl functionality of more than 2, or a combination of two or more selected from a polyester polyol (C2-1) and a polyester polyol (C2-2).

Examples of the polyester polyol (C2-1) include the following polyester polyols ($\alpha$) and ($\beta$), and any combination of two or more thereof.

($\alpha$) A polyester polyol obtained from a diol (C2-1-1) and a dicarboxylic acid and/or an anhydride thereof (C2-1-2) (polyester polyol ($\alpha$))

($\beta$) A polyester polyol obtained by ring-opening addition polymerization of a cyclic ester compound (C2-1-4) such as lactones using a diol (C2-1-1) as an initiator (polyester polyol ($\beta$))

The polyester polyol ($\beta$) can be said to be a ring-opening addition polymer of a cyclic ester compound using a diol as an initiator.

Examples of the diol (C2-1-1) include the same diol (D1) as exemplified in the description for the compound (A-1) of the first to third embodiments. Among these, 1,4-butanediol, 1,5-pentanediol, 1,6-hexanediol, 1,9-nonanediol, 3-methyl-1,5-pentanediol, or 2-methyl-1,8-octanediol is preferable.

Examples of the dicarboxylic acid and/or an anhydride thereof (C2-1-2) include phthalic acid, isophthalic acid, terephthalic acid, tetrahydrophthalic acid, hexahydrophthalic acid, cyclohexanedicarboxylic acid, maleic acid, fumaric acid, oxalic acid, malonic acid, succinic acid, glutaric acid, adipic acid, pimelic acid, suberic acid, sebacic acid, dodecanedioic acid, hydrogenated dimer fatty acid and the like, tartaric acid, and anhydrides thereof, and any combination of two or more thereof.

Examples of the cyclic ester compound (C2-1-4) include β-propiolactone, β-butyrolactone, γ-butyrolactone, β-valerolactone, γ-valerolactone, δ-valerolactone, α-caprolactone, β-caprolactone, γ-caprolactone, δ-caprolactone, ε-caprolactone, α-methyl-ε-caprolactone, β-methyl-ε-caprolactone, 4-methylcaprolactone, γ-caprylolactone, ε-caprylolactone, and ε-palmitolactone, and any combination of two or more thereof. Among these, a ring-opening addition polymer of ε-caprolactone using trimethylolpropane as an initiator is preferable from the viewpoint of stability during polymerization and economic efficiency.

Examples of the polyester polyol (C2-2) include the following polyester polyols (α') and (β'), and any combination of two or more thereof.

(α') A polyester polyol obtained from a diol (C2-2-1), a dicarboxylic acid and/or an anhydride thereof (C2-2-2), and a polyhydric alcohol (C2-2-3) having a hydroxyl functionality of 3 or more (polyester polyol (α'))

(β') A polyester polyol obtained by ring-opening addition polymerization of a cyclic ester compound (C2-2-4) such as lactones using a polyhydric alcohol (C2-2-3) having a hydroxyl functionality of 3 or more as an initiator (polyester polyol (β'))

The polyester polyol (β') can be said to be a ring-opening addition polymer of a cyclic ester compound using a polyhydric alcohol having a hydroxyl functionality of 3 or more as an initiator.

Examples of the diol (C2-2-1) and the polyhydric alcohol (C2-2-3) having a hydroxyl functionality of 3 or more include the same diol (D1) and polyhydric alcohol (B1) as exemplified in the description for the compound (A-1) of the first to third embodiments.

Examples of the dicarboxylic acid and/or an anhydride thereof (C2-2-2) and the cyclic ester compound (C2-2-4) include the same as those exemplified in the description for the dicarboxylic acid and/or an anhydride thereof (C2-1-2) and the cyclic ester compound (C2-1-4).

In the fourth embodiment, from the viewpoint that when used as a raw material for a urethane resin, a urethane resin having better durability such as heat resistance or moist heat resistance is easily formed, it is more preferable that the polyester polyol (C2) include polyester polyol (β) and/or polyester polyol (β').

Examples of the diol (D2) include the same diol (D1) as exemplified in the description for the compound (A-1) of the first to third embodiments.

Examples of the polyhydric alcohol (E2) include the same polyhydric alcohol (B1) as exemplified in the description for the compound (A-1) of the first to third embodiments.

Examples of the oxetane compound (F2) include the same oxetane compound (F1) as exemplified in the description for the compound (A-1) of the first to third embodiments.

<Diol (d)>

The composition may further contain a diol represented by the following Formula (d) (hereinafter also referred to as "diol (d)").

[Chem. 24] **$HO\text{-}R^a\text{-}OH$ (d)**

[In Formula (d), $R^a$ has the same meaning as above.]

The diol (d) has the same meaning as described above, and the alkanediyl group contained as $R^a$ in the diol (d) may be the same as the alkanediyl group contained as $R^a$ in the compound (A-1).

The alkanediyl group contained as $R^a$ in the diol (d) may be the same as the alkanediyl group contained as $R^a$ in the compound (A-1). When the composition contains two or more compounds (A-1) having different alkanediyl groups represented by $R^a$, the composition may contain two or more diols (d) having different alkanediyl groups represented by $R^a$. In this case, the combination of groups contained as $R^a$ in the plurality of compounds corresponding to the diol (d) may be the same as the combination of groups contained as $R^a$ in the plurality of compounds corresponding to the compound

(A-1).

Examples of the diol (d) include the same diol (D1) as exemplified in the description for the compound (A-1) of the first to third embodiments.

<Polyhydric alcohol (e)>

The composition may further contain a polyhydric alcohol represented by the following Formula (e) (hereinafter also referred to as "polyhydric alcohol (e)").

[Chem. 25]

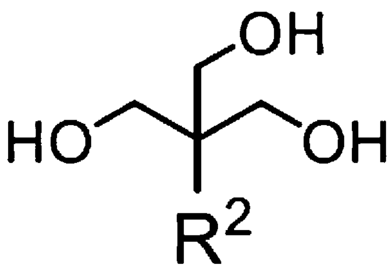

(e)

[In Formula (e), $R^2$ has the same meaning as above.]

The polyhydric alcohol (e) has the same meaning as described above, and the alkyl group and/or hydroxyalkyl group contained as $R^2$ in the polyhydric alcohol (e) may be the same as the atom or group contained as $R^2$ in the compound (A-1).

The atom or group contained as $R^2$ in the polyhydric alcohol (e) may be the same as the atom or group contained as $R^2$ in the compound (A-1). When the composition contains two or more compounds (A-1) having different alkanediyl groups represented by $R^2$, the composition may contain two or more polyhydric alcohols (e) having different alkanediyl groups represented by $R^2$. In this case, the combination of groups contained as $R^2$ in the plurality of compounds corresponding to the polyhydric alcohol (e) may be the same as the combination of groups contained as $R^2$ in the plurality of compounds corresponding to the compound (A-1).

Examples of the polyhydric alcohol (e) include the same polyhydric alcohol (B1) as exemplified in the description for the compound (A-1) of the first to third embodiments.

<Oxetane compound (F)>

The composition may further contain an oxetane compound represented by the following Formula (f) (hereinafter also referred to as "oxetane compound (F)").

[Chem. 26]

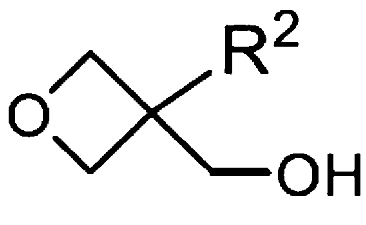

(f)

[In Formula (f), $R^2$ has the same meaning as above.]

The oxetane compound (F) has the same meaning as described above, and the alkyl group and hydroxyalkyl group contained as $R^2$ in the oxetane compound (F) may be the same as the atom or group contained as $R^2$ in the compound (A-1).

The atom or group contained as $R^2$ in the oxetane compound (F) may be the same as the atom or group contained as $R^2$ in the compound (A-1). When the composition contains two or more compounds (A-1) having different alkanediyl groups represented by $R^2$, the composition may contain two or more oxetane compounds (F) having different alkanediyl

groups represented by $R^2$. In this case, the combination of groups contained as $R^2$ in the plurality of compounds corresponding to the oxetane compound (F) may be the same as the combination of groups contained as $R^2$ in the plurality of compounds corresponding to the compound (A-1).

Examples of the oxetane compound (F) include the same oxetane compound (F1) as exemplified in the description for the compound (A-1) of the first to third embodiments.

<Compound (A-2)>

The composition may further contain a polycarbonate compound represented by the following Formula (A-2) (hereinafter referred to as "compound (A-2)").

[Chem. 27]

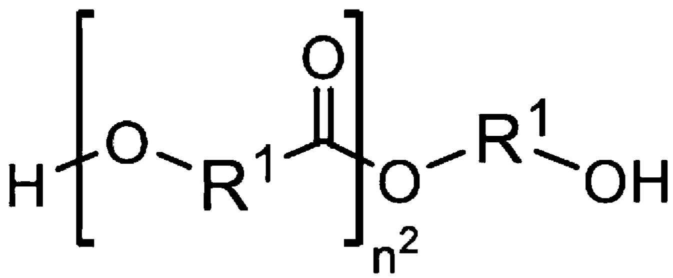

(A-2)

[In Formula (A-2), $R^1$ has the same meaning as above, and $n^2$ represents an integer of 1 or more, and a plurality of $R^1$'s may be the same or different from each other.]

<Compound (A-3)>

The composition may further contain a polycarbonate compound represented by the following Formula (A-3) (hereinafter referred to as "compound (A-3)").

[Chem. 28]

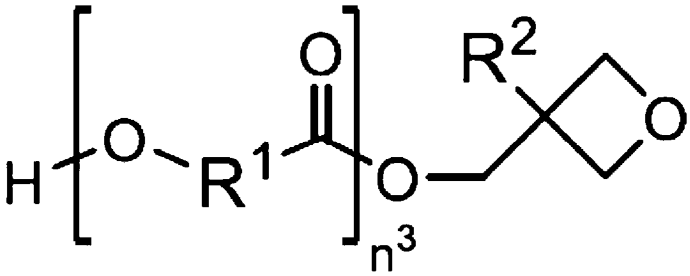

(A-3)

[In Formula (A-3), $R^1$ and $R^2$ have the same meaning as above, and $n^3$ represents an integer of 1 or more, and when a plurality of $R^1$'s are present, they may be the same or different from each other.]

<Compound (A-4)>

The composition may further contain a polycarbonate compound represented by the following Formula (A-4) (hereinafter referred to as "compound (A-4)").

[Chem. 29]

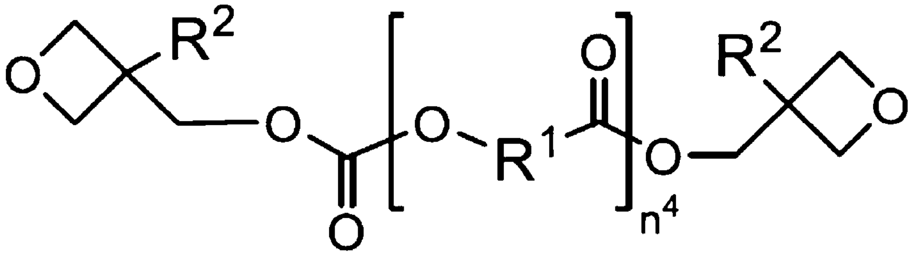

(A-4)

[In Formula (A-4), $R^1$ and $R^2$ have the same meaning as above, and $n^4$ represents an integer of 1 or more, a plurality of $R^2$'s may be the same or different from each other, and when a plurality of $R^1$'s are present, they may be the same or different from each other.]

The group contained as $R^1$ in the compounds (A-2) to (A-4) may be the same as the group contained as $R^1$ in the compound (A-1). When the compound (A-1) contains two or more groups as $R^1$, the compounds (A-2) to (A-4) may also contain two or more groups as $R^1$. In this case, the combination of two or more groups contained as $R^1$ in the compounds (A-2) to (A-4) may be the same as the combination of two or more groups contained as $R^1$ in the compound (A-1).

The group contained as $R^2$ in the compounds (A-2) to (A-4) may be the same as the group contained as $R^2$ in the compound (A-1). When the compound (A-1) contains two or more groups as $R^2$, the compounds (A-2) to (A-4) may also contain two or more groups as $R^2$. In this case, the combination of two or more groups contained as $R^2$ in the compounds (A-2) to (A-4) may be the same as the combination of two or more groups contained as $R^2$ in the compound (A-1).

$n^2$, $n^3$, and $n^4$ may each be 1 to 65, 2 to 60, or 3 to 50.

The number average molecular weight of the compounds (A-2) to (A-4) is preferably 200 g/mol to 6,000 g/mol, and may be 300 g/mol to 5,000 g/mol or 500 g/mol to 4,000 g/mol.

The hydroxyl value of the compounds (A-2) to (A-4) is preferably 30 to 800 mg KOH/g, and may be 40 to 700 mg KOH/g or 50 to 600 mg KOH/g.

The lower limit of the apparent average hydroxyl functionality of the composition may be, for example, 2.0 or more, 2.1 or more, 2.2 or more, 2.3 or more, 2.4 or more, or 2.5 or more. The upper limit of the apparent average hydroxyl functionality of the composition may be, for example, 3.90 or less, 3.80 or less, 3.70 or less, 3.60 or less, 3.50 or less, or 3.40 or less. The apparent average hydroxyl functionality of the composition may be 2.0 to 3.90, for example, 2.1 to 3.80, 2.2 to 3.70, 2.3 to 3.50, or 2.5 to 3.40. When the apparent average hydroxyl functionality of the composition is 3.90 or less, handling properties and elongation at break in a tensile test are further improved. When the apparent average hydroxyl functionality of the composition is 2.0 or more, strength at break and softening temperature in a tensile test tend to be further improved.

In the following description, the sum of the total number of moles of the group represented by the following Formula (I) and the total number of moles of the group represented by the following Formula (C) contained in the composition is denoted as $C_T$, the total number of moles of the group represented by the following Formula (C) contained in the composition is denoted as $C_C$, the total number of moles of the group represented by the following Formula (D) contained in the composition is denoted as $C_D$, and the total number of moles of the group represented by the following Formula (E) contained in the composition is denoted as $C_E$. The content (unit: mol%) of the structure (C) derived from an oxetane compound relative to the total amount of the structural unit (I) derived from a polyhydric alcohol and the structure (C) derived from the oxetane compound is denoted as "molar ratio ($C_C$ / $C_T$ $\times$ 100)." The content (unit: mol%) of the structure (C) derived from an oxetane compound relative to the total amount of the structure (C) derived from the oxetane compound, the structure (D) derived from a diol, and the structure (E) derived from a polyhydric alcohol is denoted as "molar ratio ($C_C$ / ($C_C$ + $C_D$ + $C_E$) $\times$ 100)."

[Chem. 30]

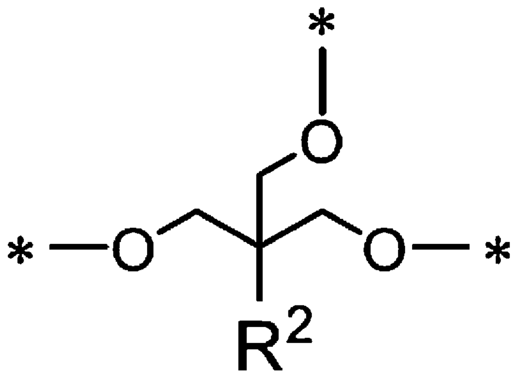

(I)

[In Formula (I), $R^2$ has the same meaning as above, and * represents a bonding site.]

[Chem. 31]

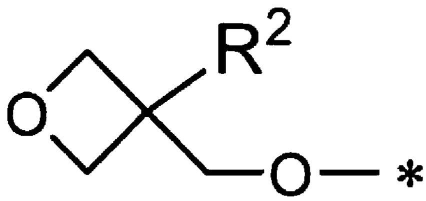

(C)

[In Formula (C), $R^2$ has the same meaning as above, and * represents a bonding site.]

[Chem. 32]

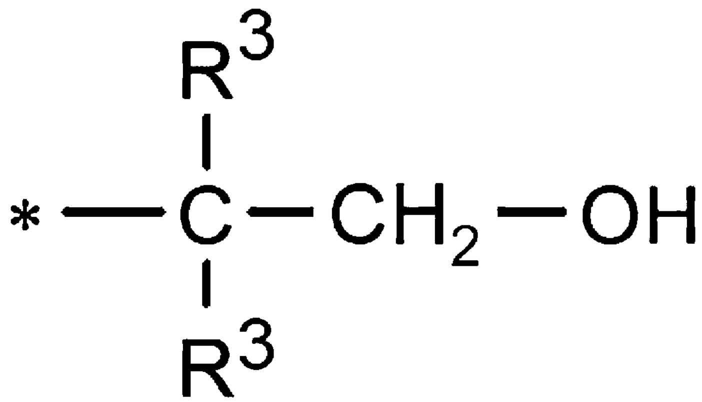

(D)

[In Formula (D), $R^3$ represents a hydrogen atom or an alkyl group, and * represents a bonding site, and $R^3$'s may be the same or different from each other.]

[Chem. 33]

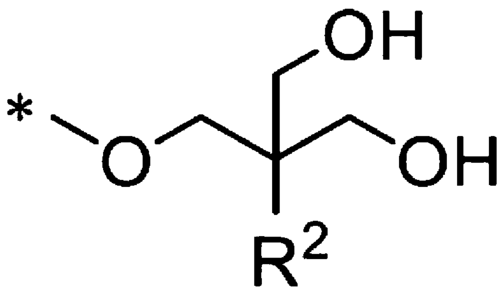

(E)

[In Formula (E), $R^2$ has the same meaning as above, and * represents a bonding site.]

The molar ratio ($C_C$ / $C_T$ × 100) may be 2.80 to 28.0. The molar ratio ($C_C$ / ($C_C$ + $C_D$ + $C_E$) × 100) may be 0.90 to 10.7. When the molar ratio ($C_C$ / $C_T$ × 100) and the molar ratio ($C_C$ / ($C_C$ + $C_D$ + $C_E$) × 100) are within the above-described ranges, when the composition is used as a raw material for a urethane resin, a urethane resin that achieves both favorable handling properties and high tensile strength tends to be easily formed.

The molar ratio ($C_C$ / $C_T$ × 100) and the molar ratio ($C_C$ / ($C_C$ + $C_D$ + $C_E$) × 100) can be obtained, for example, from integral values of signals of the $^1$H-NMR spectrum obtained by $^1$H-NMR measurement of the composition using deuterated chloroform as a solvent and tetramethylsilane as a reference substance. Specifically, for example, the molar ratio ($C_C$ / $C_T$ × 100) can be calculated from the ratio of the integral value $\Delta_{SI}$ (3 mol of hydrogen atoms) of the signal (SI) of a terminal methyl of $R^2$ (alkyl group) in Formulae (I) and (C), and the integral value $\Delta_{SC}$ (4 mol of hydrogen atoms) of the signal (SC) of a methylene located next to an oxygen atom of an oxetane group in Formula (C). The molar ratio ($C_C$ / ($C_C$ + $C_D$ + $C_E$) × 100) can be calculated from the ratio of the integral value $\Delta_{SC}$ (4 mol of hydrogen atoms) of the above-described signal (SC), the integral value $\Delta_{SD}$ (2 mol of hydrogen atoms) of the signal (SD) of a methylene located next to a hydroxy group in the group represented by Formula (D), and the integral value $\Delta_{SE}$ (4 mol of hydrogen atoms) of the signal (SE) of a methylene located next to a hydroxy group in the group represented by Formula (E). In this case, the molar ratio ($C_C$ / $C_T$ × 100) can be rephrased as 0.75 times the ratio of the integral value $\Delta_{SI}$ of the signal (SI) and the integral value $\Delta_{Sf}$ of the signal (Sf) (0.75 × $\Delta_{Sf}$/ $\Delta_{SI}$ × 100). The molar ratio ($C_C$ / ($C_C$ + $C_D$ + $C_E$) × 100) can be rephrased as ($\Delta_{SC}$ / ($\Delta_{SC}$ + 2 × $\Delta_{SD}$ + $\Delta_{SE}$) × 100) which is the ratio of the integral value $\Delta_{SC}$ of the signal (SC) to the sum of the integral value $\Delta_{SD}$ of the signal (SD) and the integral value $\Delta_{SE}$ of the signal (SE), and the integral value $\Delta_{SC}$ of the signal (SC).

Hereinafter, the above-described composition will be described in more detail separately with reference to a plurality of embodiments (first to fourth embodiments).

In the first and second embodiments, when $^1$H-NMR measurement of the composition is performed using deuterated chloroform as a solvent and tetramethylsilane as a reference substance, for example, the above-described signal (SC) is observed in a range of 4.390 ppm to 4.500 ppm in the $^1$H-NMR spectrum, the above-described signal (SD) is observed in a range of 3.618 ppm to 3.720 ppm in the $^1$H-NMR spectrum, and the above-described signal (SE) is observed in a range of 3.590 ppm to 3.618 ppm in the $^1$H-NMR spectrum. In addition, when $R^2$ in Formulae (I) and (C) is an ethyl group, the above-described signal (SI) is observed in a range of 0.700 ppm to 1.000 ppm, and when $R^2$ in Formulae (I) and (C) is a methyl group, the above-described signal (SI) is observed in a range of 0.700 ppm to 1.130 ppm. Therefore, in the first and second embodiments, the molar ratio ($C_C$ / $C_T$ × 100) and the molar ratio ($C_C$ / ($C_C$ + $C_D$ + $C_E$) × 100) can be determined from the ratio between the integral values of these signals.

In the third embodiment, when $^1$H-NMR measurement of the composition is performed using deuterated chloroform as a solvent and tetramethylsilane as a reference substance, for example, the above-described signal (SC) is observed in a range of 4.390 ppm to 4.500 ppm in the $^1$H-NMR spectrum, the above-described signal (SD) is observed in a range of 3.618 ppm to 3.720 ppm in the $^1$H-NMR spectrum, and the above-described signal (SE) is observed in a range of 3.590 ppm to 3.618 ppm in the $^1$H-NMR spectrum. Therefore, in the third embodiment, the molar ratio ($C_C$ / ($C_C$ + $C_D$ + $C_E$) × 100) can be determined from the ratio between the integral values of these signals.

In the fourth embodiment, when $^1$H-NMR measurement of the composition is performed using deuterated chloroform as a solvent and tetramethylsilane as a reference substance, for example, the above-described signal (SC) is observed in a range of 4.390 ppm to 4.500 ppm in the $^1$H-NMR spectrum, the above-described signal (SD) is observed in a range of 3.618 ppm to 3.720 ppm in the $^1$H-NMR spectrum, and the above-described signal (SE) is observed in a range of 3.550 ppm to 3.618 ppm in the $^1$H-NMR spectrum. In addition, when $R^2$ in Formulae (I) and (C) is an ethyl group, the above-described signal (SI) is observed in a range of 0.700 ppm to 1.000 ppm, and when $R^2$ in Formulae (I) and (C) is a methyl group, the above-described signal (SI) is observed in a range of 0.700 ppm to 1.130 ppm. Therefore, in the fourth embodiment, the molar ratio ($C_C$ / $C_T$ × 100) and the molar ratio ($C_C$ / ($C_C$ + $C_D$ + $C_E$) × 100) can be determined from the

ratio between the integral values of these signals.

The molar ratio ($C_C$ / $C_T$ × 100) in the compositions of the first, second and fourth embodiments may be 2.80 or more, 3.00 or more, 3.20 or more, 3.40 or more, 3.60 or more, 3.80 or more, 5.00 or more, 6.00 or more, 7.00 or more, 8.00 or more, 9.00 or more, or 10.0 or more. When the molar ratio ($C_C$ / $C_T$ × 100) is 2.80 or more, a polyurethane resin having better handling properties tends to be formed. The molar ratio ($C_C$ / $C_T$ × 100) may be 28.0 or less, 26.0 or less, 22.0 or less, 20.0 or less, 18.0 or less, 16.0 or less, 15.0 or less, 14.0 or less, 13.0 or less, or 12.0 or less. When the molar ratio ($C_C$ / $C_T$ × 100) is 28.0 or less, a polyurethane resin having particularly better tensile strength tends to be formed. The molar ratio ($C_C$ / $C_T$ × 100) may be 2.0 to 30.0, 3.0 to 28.0, 3.2 to 26.0, 3.4 to 22.0, 3.8 to 20.0, 5.0 to 18.0, 6.0 to 16.0, 7.0 to 15.0, 8.0 to 14.0, 9.0 to 13.0, or 10.0 to 12.0. When the molar ratio ($C_C$ / $C_T$ × 100) is within the above-described range, when the composition is used as a raw material for a urethane resin, a polyurethane resin having both favorable handling properties and tensile strength tends to be formed.

The molar ratio ($C_C$ / ($C_C$ + $C_D$ + $C_E$) × 100) in the compositions of the first to fourth embodiments may be 0.90 or more, 0.95 or more, 1.00 or more, 1.05 or more, 1.10 or more, 1.15 or more, 1.20 or more, 1.50 or more, 1.80 or more, 2.10 or more, 2.40 or more, 3.00 or more, or 4.00 or more. When the molar ratio ($C_C$ / ($C_C$ + $C_D$ + $C_E$) × 100) is 0.90 or more, a polyurethane resin having better handling properties tends to be formed. The molar ratio ($C_C$ / ($C_C$ + $C_D$ + $C_E$) × 100) may be 16.0 or less, 10.7 or less, 10.5 or less, 10.0 or less, 9.5 or less, 9.0 or less, 8.5 or less, 8.0 or less, 7.5 or less, 7.0 or less, 6.5 or less, or 6.0 or less. When the molar ratio ($C_C$ / ($C_C$ + $C_D$ + $C_E$) × 100) is 16.0 or less, a polyurethane resin having particularly better tensile strength tends to be formed. The molar ratio ($C_C$ / ($C_C$ + $C_D$ + $C_E$) × 100) may be 1.00 to 10.7, 1.05 to 10.5, 1.10 to 10.0, 1.15 to 9.5, 1.20 to 9.0, 1.30 to 8.0, 1.50 to 7.0, or 1.80 to 6.0. When the molar ratio ($C_C$ / ($C_C$ + $C_D$ + $C_E$) × 100) is within the above-described range, when the composition is used as a raw material for a urethane resin, a polyurethane resin having both favorable handling properties and tensile strength tends to be formed.

<Catalyst>

The compositions of the first to third embodiments may be a reaction mixture of a polyhydric alcohol (B1), a diol (D1), a carbonate ester, and an oxetane compound (F1) that is added as necessary. Lithium acetylacetonate is preferably used as a transesterification catalyst. The content of the transesterification catalyst may be 0.0001 to 0.100 mass% based on the total mass of the composition.

The composition of the fourth embodiment may be a reaction mixture of a polycarbonate polyol (B2), a polyester polyol (C2), and a diol (d), a polyhydric alcohol (e), and/or an oxetane compound (F2) that are added as necessary. Since the above-described reaction is generally performed in the presence of a transesterification catalyst, the composition may further contain a transesterification catalyst. Lithium acetylacetonate is preferably used as the transesterification catalyst. The content of the transesterification catalyst may be 0.0001 to 0.100 mass% based on the total mass of the composition.

The property of the composition is not particularly limited, and may be a solid at 25°C or a liquid at 25°C. The property of the composition can be changed depending on the type and content ratio of the components contained (for example, compounds (A-1) to (A-4), diol (d), polyhydric alcohol (e), and oxetane compound (F)).

The number average molecular weight of the composition may be, for example, 200 to 6,000 g/mol. The lower limit of the number average molecular weight of the composition may be, for example, 200 g/mol or more, 400 g/mol or more, 600 g/mol or more, 800 g/mol or more, 1,000 g/mol or more, 1,200 g/mol or more, 1,400 g/mol or more, 1,600 g/mol or more, or 1,800 g/mol or more. The upper limit of the number average molecular weight of the composition may be, for example, 6,000 g/mol or less, 5,000 g/mol or less, 4,000 g/mol or less, 3,000 g/mol or less, 2,500 g/mol or less, 2,000 g/mol or less, 1,800 g/mol or less, 1,600 g/mol or less, 1,400 g/mol or less, 1,200 g/mol or less, 1,000 g/mol or less, or 800 g/mol or less.

The number average molecular weight of the composition is a number average molecular weight in terms of bifunctional polyoxypropylene polyol measured by Gel Permeation Chromatography (GPC) with the entire composition as a measurement target.

The hydroxyl value of the composition may be, for example, 30 to 800 mg KOH/g. The lower limit of the hydroxyl value of the composition may be, for example, 30 mg KOH/g or more, 40 mg KOH/g or more, 50 mg KOH/g or more, 60 mg KOH/g or more, 70 mg KOH/g or more, 80 mg KOH/g or more, 90 mg KOH/g or more, 100 mg KOH/g or more, 120 mg KOH/g or more, 140 mg KOH/g or more, 160 mg KOH/g or more, or 180 mg KOH/g or more. The upper limit of the hydroxyl value of the composition may be, for example, 800 mg KOH/g or less, 700 mg KOH/g or less, 600 mg KOH/g or less, 500 mg KOH/g or less, 400 mg KOH/g or less, 300 mg KOH/g or less, 250 mg KOH/g or less, 200 mg KOH/g or less, 180 mg KOH/g or less, 160 mg KOH/g or less, 140 mg KOH/g or less, 120 mg KOH/g or less, 100 mg KOH/g or less, or 80 mg KOH/g or less.

According to the present embodiment, it is possible to provide a composition that contributes to the formation of a urethane resin having high tensile strength and has favorable handling properties.

<Production method>

Methods for producing the compounds (A-1) of the first to third embodiments may include heating a mixed solution containing a polyhydric alcohol (B1), a diol (D1), a carbonate ester, and a transesterification catalyst to perform a reflux reaction (transesterification reaction) while removing an alcohol derived from the carbonate ester from the reaction system, thereby obtaining the compound (A-1), or heating a mixed solution containing a polyhydric alcohol (B1), a diol (D1), a carbonate ester, an oxetane compound (F1), and a transesterification catalyst to perform a reflux reaction (transesterification reaction) while removing an alcohol derived from the carbonate ester from the reaction system, thereby obtaining the compound (A-1).

In the above-described methods, the compositions of the above-described embodiments can also be obtained as reaction mixtures containing the compound (A-1)s. Therefore, the above-described methods can be rephrased as methods for producing the compositions of the above-described embodiments.

The details of the polyhydric alcohol (B1), diol (D1), carbonate ester, and oxetane compound (F1) are as described above, and their suitable examples (preferred examples of $R^1$ and $R^2$ and preferred examples of combinations) are also the same as the preferred examples of $R^1$ and $R^2$ contained in the compounds (A-1) and preferred examples of combinations thereof. From the viewpoint of easily obtaining the desired compounds (A-1), it is preferable to use lithium acetylacetonate as a transesterification catalyst.

When two or more diols (D1) are used, from the viewpoint that when used as a raw material for a urethane resin, a urethane resin having favorable tensile strength, elongation, and texture, and better durability is easily formed, it is preferable that the ratio of the number of moles of 1,6-hexanediol to the total number of moles of the diol (D1) be 0.20 or more (for example, 0.20 to 1.00), more preferably 0.30 or more (for example, 0.30 to 0.90), and still more preferably 0.40 or more (for example, 0.40 to 0.80 or 0.50 to 0.70).

The mixing ratio of the polyhydric alcohol (B1) to the diol (D1) (the content of the diol (D1) in the mixed solution/the content of the polyhydric alcohol (B1) in the mixed solution) is, in terms of molar ratio, preferably 1/100 to 5/1, more preferably 1/80 to 3/1, still more preferably 1/50 to 2/1, and particularly preferably 1/20 to 1/1. By setting the mixing ratio of the diol and the polyhydric alcohol within the above-described ranges, compositions containing the compounds (A-1) can be efficiently obtained. The mixing ratio may be, in terms of molar ratio, 1/5 to 60/1 or 1/1 to 40/1.

The mixing ratio of the carbonate ester to the polyhydric alcohol (B1) and diol (D1) (the content of the carbonate ester in the mixed solution/the total content of the polyhydric alcohol (B1) and the diol (D1) in the mixed solution) is, in terms of molar ratio, preferably 1/3 to 3/1, more preferably 1/2.5 to 2.5/1, still more preferably 1/2 to 2/1, and particularly preferably 1/1.5 to 1.5/1. By setting the mixing ratio of the carbonate ester to the polyhydric alcohol (B1) and diol (D1) within the above ranges, compositions containing the compounds (A-1) can be efficiently obtained.

The content of the transesterification catalyst in the mixed solution of the first to third embodiments may be 0.0001 to 0.1 parts by mass or 0.0005 to 0.01 parts by mass relative to 100 parts by mass of the total amount of the polyhydric alcohol, the diol, and the carbonate ester in the mixed solution, from the viewpoint of easily appropriately controlling the reaction temperature and suppressing an increase in the number of colors of the reaction product. From the viewpoint of facilitating control of the reactivity of the urethanization reaction, the content of the transesterification catalyst is preferably as small as possible. If the content of the transesterification catalyst increases, the reactivity of the urethanization reaction is likely to increase. From the viewpoint of facilitating control of the urethanization reaction, the content of the transesterification catalyst in the mixed solution is preferably 0.001 parts by mass or more, more preferably 0.002 parts by mass or more, and still more preferably 0.003 parts by mass or more, relative to 100 parts by mass of the total amount of the polyhydric alcohol, the diol, and the carbonate ester in the mixed solution. From the viewpoint of suppressing an increase in the number of colors of the reaction product, the content of the transesterification catalyst in the mixed solution is preferably 0.050 parts by mass or less, more preferably 0.040 parts by mass or less, and still more preferably 0.030 parts by mass or less, relative to 100 parts by mass of the total amount of the polyhydric alcohol, the diol, and the carbonate ester in the mixed solution. From these viewpoints, the content of the transesterification catalyst in the mixed solution is preferably 0.001 to 0.050 parts by mass, more preferably 0.002 to 0.040 parts by mass, and still more preferably 0.003 to 0.030 parts by mass, relative to 100 parts by mass of the total amount of the polyhydric alcohol, the diol, and the carbonate ester in the mixed solution.

The heating temperature (reaction temperature) of the mixed solutions of the first to third embodiments may be, for example, 80°C to 250°C, or 100°C to 220°C. When the reaction temperature is 80°C or higher, the transesterification reaction proceeds easily, and the desired compounds (A-1) are easily obtained. When the reaction temperature is 250°C or lower, the number of colors of the obtained compounds (A-1) and the composition polyol can be suppressed. In addition, the transesterification reaction may be performed while keeping the temperature constant or may be performed while increasing the temperature stepwise or continuously depending on the degree of reaction progress. From the viewpoint of easily obtaining the desired compounds (A-1), it is preferable to perform heating at a temperature T1 that satisfies the relationship of the following Formula ($\alpha$), followed by heating at a temperature T2 that satisfies the relationship of the following Formula ($\beta$). The temperatures T1 and T2 preferably satisfy the relationship of the following Formula ($\gamma$). In

addition, the average temperature $T1_m$ of the first heating temperature and the average temperature $T2_m$ of the second heating temperature preferably satisfy the relationship of the following Formula (δ). Here, the degree of reaction progress can be estimated from the amount of distillate distilled off.βαδ

$$120°C \leq T1 \leq 155°C \quad \cdots (\alpha)$$

$$140°C \leq T2 \leq 155°C \quad \cdots (\beta)$$

$$T1 < T2 \quad \cdots (\gamma)$$

$$T1_m < T2_m \quad \cdots (\delta)$$

The heating of the mixed solutions of the first to third embodiments can be performed under atmospheric pressure, but in the latter half of the reaction, can also be performed under reduced pressure (for example, under a pressure of 101 to 0.1 kPa). This makes it possible to increase the distillation rate of the generated distillate and accelerate the progress of the reaction. In the present specification, atmospheric pressure means a pressure of 101.325 kPa ± 20.000 kPa. From the viewpoint of easily obtaining the desired compounds (A-1), preferably, heating of the mixed solutions includes heating under a pressure of 101.325 kPa ± 20.000 kPa (first heating), followed by heating under a reduced pressure of 10.000 kPa or less (second heating), more preferably, the first heating temperature is the temperature T1 that satisfies the relationship of the above-described Formula (α), and the second heating temperature is the temperature T2 that satisfies the relationship of the above-described Formula (β), and still more preferably, the first heating temperature (temperature T1) and the second heating temperature (temperature T2) satisfy the relationship of the above-described Formula (γ). From the viewpoint of more easily obtaining the compounds (A-1), it is preferable to distill off the alcohol derived from the carbonate ester at 120°C or lower and remove it from the reaction system.

The reaction time of the mixed solutions of the first to third embodiments may be 2 to 80 hours, 3 to 60 hours, 4 to 50 hours, 5 to 40 hours, or 6 to 30 hours. The structure (C) derived from an oxetane compound represented by the above-described Formula (C) is generated by an intramolecular dehydration reaction of a polyhydric alcohol and/or an intramolecular decarboxylation reaction of a cyclic carbonate, which is a reaction product of a polyhydric alcohol and a carbonate ester. The above-described intramolecular dehydration reaction and intramolecular decarboxylation reaction are irreversible reactions, and the generated amount of the structure (C) derived from the oxetane compound increases with reaction time. When the reaction time is 2 hours or longer, it is possible to promote the generation of the structure (C) derived from the oxetane compound, and compositions satisfying the above-described numerical ranges of the molar ratio ($C_C$ / $C_T$ × 100) and/or the molar ratio ($C_C$ / ($C_C$ + $C_D$ + $C_E$) × 100) can be easily obtained. In addition, when the reaction time is less than 80 hours, it is possible to suppress the generation of the structure (C) derived from the oxetane compound, and compositions containing the desired compounds (A-1) can be easily obtained.

The compound (A-1) of the fourth embodiment can be obtained, for example, by a method including a reaction step of obtaining the compound (A-1) by reacting (transesterification reaction) a polycarbonate polyol (B2) and a polyester polyol (C2) in a mixed solution containing the polycarbonate polyol (B2), the polyester polyol (C2), and a transesterification catalyst. In this method, at least one of the polycarbonate polyol (B2) and the polyester polyol (C2) may include a group represented by the above-described Formula (I), or the mixed solution may further contain a polyhydric alcohol represented by the above-described Formula (e). The mixed solution may further contain an oxetane compound (F2). That is, the compound (A-1) of the fourth embodiment can also be obtained by a method including a reaction step of obtaining the compound (A-1) by reacting (transesterification reaction) a polycarbonate polyol and a polyester polyol in a mixed solution containing the polycarbonate polyol (B2), the polyester polyol (C2), a transesterification catalyst, and an oxetane compound (F2).

In the above-described methods, the composition of the above-described embodiment can also be obtained as a reaction mixture containing the compound (A-1). Therefore, the above-described methods can also be rephrased as methods for producing the composition of the above-described embodiment.

The mixed solution of the fourth embodiment may contain, as optional components, a diol (D2) and/or an oxetane compound (F2). Even when the above-described methods are methods in which at least one of the polycarbonate polyol (B2) and the polyester polyol (C2) includes a group represented by the above-described Formula (I), the mixed solution may contain, as an optional component, a polyhydric alcohol (E2). The details of the polycarbonate polyol (B2), polyester polyol (C2), diol (D2), polyhydric alcohol (E2), and oxetane compound (F2) are as described above, and their suitable examples (preferred examples of $R^1$ and $R^2$ and preferred examples of combinations) are also the same as the preferred examples of $R^1$ and $R^2$ contained in the compound (A-1) and preferred examples of combinations thereof. From the

viewpoint of easily obtaining the desired compound (A-1), it is preferable to use lithium acetylacetonate as a transesterification catalyst.

The mixing ratio of the polycarbonate polyol (B2) to the polyester polyol (C2) (the content of the polycarbonate polyol (B2) in the mixed solution/the content of the polyester polyol (C2) in the mixed solution) is, in terms of weight ratio, preferably 95/5 to 5/95, more preferably 90/10 to 10/90, still more preferably 80/20 to 20/80, and particularly preferably 70/30 to 30/70. By setting the mixing ratio of the polycarbonate polyol (B2) to the polyester polyol (C2) within the above-described ranges, a composition containing the compound (A-1) can be efficiently obtained.

The mixing ratio of the polycarbonate polyol (B2) to the polyester polyol (β) and/or the polyester polyol (β') (the content of the polycarbonate polyol (B2) in the mixed solution/the content of the polyester polyol (β) and/or the polyester polyol (β') in the mixed solution) is, in terms of weight ratio, preferably 95/5 to 5/95, more preferably 90/10 to 10/90, still more preferably 80/20 to 20/80, and particularly preferably 70/30 to 30/70. By setting the mixing ratio of the polycarbonate polyol (B2) to the polyester polyol (β) and/or the polyester polyol (β') within the above-described ranges, a composition containing the compound (A-1) can be efficiently obtained.

The content of the transesterification catalyst in the mixed solution of the fourth embodiment may be 0.0001 to 0.1 parts by mass, 0.001 to 0.050 parts by mass, or 0.005 to 0.01 parts by mass relative to 100 parts by mass of the total amount of the polyol components in the mixed solution, from the viewpoint of easily appropriately controlling the reaction temperature and suppressing an increase in the number of colors of the reaction product. From the viewpoint of facilitating control of the reactivity of the urethanization reaction, the content of the transesterification catalyst is preferably as small as possible. If the content of the transesterification catalyst increases, the reactivity of the urethanization reaction is likely to increase. From the viewpoint of facilitating control of the reactivity of the urethanization reaction, the content of the transesterification catalyst in the mixed solution is preferably 0.001 parts by mass or more, more preferably 0.002 parts by mass or more, and still more preferably 0.003 parts by mass or more, relative to 100 parts by mass of the total amount of the polyol components in the mixed solution. From the viewpoint of suppressing an increase in the number of colors of the reaction product, the content of the transesterification catalyst in the mixed solution is preferably 0.050 parts by mass or less, more preferably 0.040 parts by mass or less, and still more preferably 0.030 parts by mass or less, relative to 100 parts by mass of the total amount of the polyol components in the mixed solution. From these viewpoints, the content of the transesterification catalyst in the mixed solution is preferably 0.001 to 0.050 parts by mass, more preferably 0.002 to 0.040 parts by mass, and still more preferably 0.003 to 0.030 parts by mass, relative to 100 parts by mass of the total amount of the polyol components in the mixed solution. The total amount of the polyol components refers to the total amount of compounds having two or more hydroxy groups contained in the mixed solution (for example, a polycarbonate polyol (B2), a polyester polyol (C2), a polyhydric alcohol (E2), and a diol (D2) which is an optionally added component) and an oxetane compound (F2).

In the reaction step of the fourth embodiment, the mixed solution may be heated to proceed with the reaction, or the reaction may proceed without heating. The reaction temperature of the mixed solution may be, for example, 0°C to 250°C, or 100°C to 220°C. When the reaction temperature is 0°C or higher, the transesterification reaction proceeds easily, and the desired compound (A-1) is easily obtained. Furthermore, when the reaction temperature is 0°C or higher, it is possible to promote the generation of the structure (C) derived from an oxetane derived from a polyhydric alcohol having a functionality of 3 or more, which is a byproduct of the decarboxylation reaction of a carbonate group or the dehydration reaction between terminal hydroxy groups. When the reaction temperature is 250°C or lower, the number of colors of the obtained compound (A-1) and the composition (polyol-containing composition) can be suppressed. Furthermore, when the reaction temperature is 250°C or lower, it is possible to suppress the generation of the structure (C) derived from an oxetane derived from a polyhydric alcohol having a functionality of 3 or more, which is a byproduct of the decarboxylation reaction of a carbonate group or the dehydration reaction between terminal hydroxy groups. In addition, the transesterification reaction may be performed while keeping the temperature constant or may be performed while increasing the temperature stepwise or continuously depending on the degree of reaction progress. From the viewpoint of easily obtaining the desired compounds (A-1), it is preferable to perform heating at a temperature T1 that satisfies the relationship of the following Formula (α'), followed by heating at a temperature T2 that satisfies the relationship of the following Formula (β'). The temperatures T1 and T2 preferably satisfy the relationship of the following Formula (γ'). In addition, the average temperature $T1_m$ of the first heating temperature and the average temperature $T2_m$ of the second heating temperature preferably satisfy the relationship of the following Formula (δ'). Here, the degree of reaction progress can be estimated from the consumption amount of raw materials obtained from a GPC chart.αβγδ

$$180°C \leq T1 \leq 200°C \quad \cdots (\alpha')$$

$$190°C \leq T2 \leq 200°C \quad \cdots (\beta')$$

$$T1 < T2 \quad \cdots (\gamma')$$

$$T1_m < T2_m \quad \cdots (\delta')$$

Heating of the mixed solution of the fourth embodiment can be performed under atmospheric pressure, but can also be performed under reduced pressure (for example, under a pressure of 101 to 1 kPa). This makes it possible to remove residual moisture in the mixed solution, accelerate the progress of the reaction, and suppress coloration of the composition. In the present specification, atmospheric pressure means a pressure of 101.325 kPa $\pm$ 20.000 kPa. From the viewpoint of easily obtaining the desired compounds (A-1), preferably, heating of the mixed solutions includes heating under a pressure of 101.325 kPa $\pm$ 20.000 kPa (first heating), followed by heating under a reduced pressure of 20.000 kPa or less (second heating), more preferably, the first heating temperature is the temperature T1 that satisfies the relationship of the above-described Formula ($\alpha$'), and the second heating temperature is the temperature T2 that satisfies the relationship of the above-described Formula ($\beta$'), and still more preferably, the first heating temperature (temperature T1) and the second heating temperature (temperature T2) satisfy the relationship of the above-described Formula ($\gamma$').

The reaction time of the mixed solution of the fourth embodiment may be 1 to 40 hours, 2 to 30 hours, 3 to 20 hours, 4 to 15 hours, or 5 to 12 hours. The structure (C) derived from an oxetane compound represented by the above-described Formula (C) is generated by an intramolecular dehydration reaction of a polyhydric alcohol and/or an intramolecular decarboxylation reaction of a cyclic carbonate, which is a reaction product of a polyhydric alcohol and a carbonate ester. The above-described intramolecular dehydration reaction and intramolecular decarboxylation reaction are irreversible reactions, and the generated amount of the structure (C) derived from the oxetane compound increases with reaction time. When the reaction time is 2 hours or longer, it is possible to promote the generation of the structure (C) derived from the oxetane compound, and compositions satisfying the above-described numerical ranges of the molar ratio ($C_C$ / $C_T$ $\times$ 100) and/or the molar ratio ($C_C$ / ($C_C$ + $C_D$ + $C_E$) $\times$ 100) can be easily obtained. In addition, when the reaction time is less than 80 hours, it is possible to suppress the generation of the structure (C) derived from the oxetane compound, and a composition containing the desired compound (A-1) can be easily obtained.

The heating of the mixed solution of the fourth embodiment can also be performed while introducing nitrogen. This makes it possible to remove moisture from the mixed solution and accelerate the progress of the reaction. Furthermore, purging with nitrogen makes it possible to suppress coloration of the composition. From the viewpoint of easily obtaining the desired compound (A-1), the nitrogen flow rate in the mixed solution is preferably 2 to 1,000 mL/min/scale (kg), and more preferably 5 to 200 mL/min/scale (kg).

In the production methods of the first to fourth embodiments, post-treatment such as distillation or drying may be performed on the obtained reaction mixtures. In addition, in the above-described production methods, after obtaining the compounds (A-1) or compositions containing the same, components such as the compounds (A-2) to (A-4), diol (d), polyhydric alcohol (e), and oxetane compound (F) may be added for preparation.

<Urethane resin and method for producing same>

The urethane resin is a polycondensate of a polyol component and a polyisocyanate component or a crosslinked product thereof. Here, the crosslinked product is a product in which polycondensates are crosslinked with each other by a chain extender or the like.

(Polyol component)

The polyol component contains the compound (A-1). The polyol component may further contain a polyol other than the compound (A-1) (a compound having two or more terminal hydroxy groups) or a monool (a compound having one terminal hydroxy group). The polyol component may further contain, for example, polyols (the compounds (A-2) to (A-4), the diol (d), the polyhydric alcohol (e), the oxetane compound (F), and the like) that can be contained in the above-described compositions. The content ratio of these polyols may be the same as the content ratio of polyols in the above-described compositions (for example, the molar ratio ($C_C$ / $C_T$ $\times$ 100), the molar ratio ($C_C$ / ($C_C$ + $C_D$ + $C_E$) $\times$ 100). In other words, the polyol component may contain a polyol mixture obtained by excluding compounds other than the polyols from the above-described compositions.

The polyol component may further contain a polyol having an acid group. In this case, the urethane resin contains an acid group. A urethane resin having an acid group is suitably used for an aqueous urethane resin dispersion. The aqueous urethane resin dispersion will be described below.

The acid group is, for example, a functional group (hydrophilic group) that can impart hydrophilicity to an isocyanate group-terminated prepolymer obtained by reaction with isocyanate. Examples of polyols having such an acid group include dimethylolalkanoic acids such as dimethylolpropionic acid (DMPA), dimethylolbutanoic acid (DMBA),

dimethylolpentanoic acid, and dimethylolnonanoic acid.

(Polyisocyanate)

Examples of polyisocyanates include aromatic polyisocyanates, araliphatic polyisocyanates, aliphatic polyisocyanates and alicyclic polyisocyanates. In addition, modified polyisocyanates which are modified products thereof can also be used. Examples of modified polyisocyanates include isocyanurate-modified polyisocyanates (isocyanate trimers), allophanate-modified polyisocyanates, uretdione-modified polyisocyanates, urethane-modified polyisocyanates, biuret-modified polyisocyanates, uretonimine-modified polyisocyanates, and acylurea-modified polyisocyanates. These may be used alone or two or more thereof may be used in combination.

Examples of aromatic isocyanates include 2,4-tolylene diisocyanate, 2,6-tolylene diisocyanate, 2,4-tolylene diisocyanate/2,6-tolylene diisocyanate mixture, 4,4'-diphenylmethane diisocyanate, 2,4'-diphenylmethane diisocyanate, 2,4'-diphenylmethane diisocyanate/4,4'-diphenylmethane diisocyanate mixture, m-xylylene diisocyanate, p-xylylene diisocyanate, 4,4'-diphenyl ether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, and 3,3'-dimethoxydiphenyl-4,4'-diisocyanate.

Examples of araliphatic isocyanates include 1,3-xylylene diisocyanate, 1,4-xylylene diisocyanate, and mixtures thereof;

1,3-bis(1-isocyanato-1-methylethyl)benzene,
1,4-bis(1-isocyanato-1-methylethyl)benzene, and mixtures thereof; and ω,ω'-diisocyanato-1,4-diethylbenzene.

Examples of aliphatic isocyanates include hexamethylene diisocyanate, pentamethylene diisocyanate, tetramethylene diisocyanate, 2-methylpentane-1,5-diisocyanate, 3-methylpentane-1,5-diisocyanate, lysine diisocyanate, trioxyethylene diisocyanate, ethylene diisocyanate, trimethylene diisocyanate, octamethylene diisocyanate, nonamethylene diisocyanate, 2,2'-dimethylpentane diisocyanate, 2,2,4-trimethylhexane diisocyanate, decamethylene diisocyanate, butene diisocyanate, 1,3-butadiene-1,4-diisocyanate, 2,4,4-trimethylhexamethylene diisocyanate, 1,6,11-undecane triisocyanate, 1,3,6-hexamethylene triisocyanate, 1,8-diisocyanato-4-(isocyanatomethyl)octane, 2,5,7-trimethyl-1,8-diisocyanato-5-(isocyanatomethyl)octane,
bis(isocyanatoethyl) carbonate, bis(isocyanatoethyl) ether, 1,4-butylene glycol dipropyl ether-α,α'-diisocyanate, lysine diisocyanatomethyl ester, 2-isocyanatoethyl-2,6-diisocyanatohexanoate, and 2-isocyanatopropyl-2,6-diisocyanatohexanoate.

Examples of alicyclic isocyanates include isophorone diisocyanate, cyclohexyl diisocyanate, bis(isocyanatomethyl)cyclohexane, dicyclohexylmethane diisocyanate, methylcyclohexyl diisocyanate, dicyclohexyldimethylmethane diisocyanate, 2,2'-dimethyldicyclohexylmethane diisocyanate, bis(4-isocyanato-n-butylidene)pentaerythritol, hydrogenated dimer acid diisocyanate,

2-isocyanatomethyl-3-(3-isocyanatopropyl)-5-(isocyanatomethyl)bicyc lo[2.2.1]heptane,
2-(isocyanatomethyl)-3-(3-isocyanatopropyl)-6-(isocyanatomethyl)bicy clo[2.2.1]heptane,
2-(isocyanatomethyl)-2-(3-isocyanatopropyl)-5-(isocyanatomethyl)bicy clo[2.2.1]heptane,
2-(isocyanatomethyl)-2-(3-isocyanatopropyl)-6-(isocyanatomethyl)bicy clo[2.2.1]heptane,
2-(isocyanatomethyl)-3-(3-isocyanatopropyl)-5-(2-isocyanatoethyl)bic yclo[2.2.1]heptane,
2-(isocyanatomethyl)-3-(3-isocyanatopropyl)-6-(2-isocyanatoethyl)bic yclo[2.2.1]heptane,
2-(isocyanatomethyl)-2-(3-isocyanatopropyl)-5-(2-isocyanatoethyl)bic yclo[2.2.1]heptane,
2-(isocyanatomethyl)-2-(3-isocyanatopropyl)-6-(2-isocyanatoethyl)bic yclo[2.2.1]heptane, 2,5-bis(isocyanatomethyl)bicyclo[2.2.1]heptane, hydrogenated diphenylmethane diisocyanate, norbornane diisocyanate, hydrogenated tolylene diisocyanate, hydrogenated xylylene diisocyanate, and hydrogenated tetramethylxylylene diisocyanate.

(Blending ratio of polyol component/polyisocyanate component)

For the blending ratio of the polyol component to the polyisocyanate component, the molar ratio of active hydrogen in the polyol component and the isocyanate group in the polyisocyanate component is preferably 9:1 to 1:9, and more preferably 6:4 to 4:6. If the blending ratio is within the above-described ranges, the urethane resin tends to have superior performance.

(Chain extender)

The chain extender can be appropriately selected according to the purpose, application, and the like. As the chain extenders, water; low-molecular-weight polyols such as ethylene glycol, 1,3-propanediol, 1,4-butanediol, 1,5-pentanediol, 1,6-hexanediol, neopentyl glycol, 1,10-decanediol, 1,1-cyclohexanedimethanol, 1,4-cyclohexanedimethanol, tricyclodecandimethanol, xylylene glycol, bis(p-hydroxy)diphenyl, bis(p-hydroxyphenyl)propane, 2,2-bis[4-(2-hydroxyethoxy)phenyl]propane, bis[4-(2-hydroxyethoxy)phenyl]sulfone, and 1,1-bis[4-(2-hydroxyethoxy)phenyl]cyclohexane; high-molecular-weight polyols such as polyester polyol, polyester amide polyol, polyether polyol, polyether ester polyol, polycarbonate polyol, and polyolefin polyol; polyamines such as ethylenediamine, isophorone diamine, 2-methyl-1,5-pentanediamine, aminoethylethanolamine, diethylenetriamine, triethylenetetramine, tetraethylenepentamine, and pentaethylenehexamine, and the like can be used. The amount of the chain extender added (the proportion of the structure derived from the chain extender contained in the urethane resin) relative to 100 parts by mass of the total amount of the polyol component and the polyisocyanate component may be 0.1 to 50 parts by mass. Here, when the chain extender is a polyol, the content of the polyol is calculated as the content of the polyols contained in both the chain extender and the polyol component.

The above-described urethane resin can be obtained by reacting (urethanization reaction) a polyol component and a polyisocyanate component, and in some cases, a chain extender. The urethanization reaction may be performed at room temperature (for example, 25°C), or performed under heating (for example, 40 to 200°C).

During the urethanization reaction, a catalyst (urethanization catalyst) can be added in order to shorten the reaction time, improve the reaction rate, and the like. Examples of catalysts include tertiary amine catalysts such as triethylamine, triethylenediamine, tetramethylethylenediamine, tetramethylpropylenediamine, and tetramethylhexamethylenediamine, and metal catalysts represented by tin-based catalysts such as stannous octoate, stannous oleate, and dibutyltin dilaurate. These may be used alone or two or more thereof may be used in combination. Among these, dibutyltin dilaurate is preferably used. The amount of the catalyst used relative to 100 parts by mass of the total amount of the polyol component and the polyisocyanate component may be 0.001 to 100 parts by mass.

When a catalyst is used during the urethanization reaction, it is preferable to use a phosphorus compound for treating the catalyst. The phosphorus compound is not particularly limited, and examples thereof include phosphate triesters such as trimethyl phosphate, triethyl phosphate, tributyl phosphate, di-2-ethylhexyl phosphate, triphenylphosphate, tricresylphosphate, and cresyldiphenylphosphate; acidic phosphate esters such as methyl acid phosphate, ethyl acid phosphate, propyl acid phosphate, isopropyl acid phosphate, butyl acid phosphate, lauryl acid phosphate, stearyl acid phosphate, 2-ethylhexyl acid phosphate, isodecyl acid phosphate, butoxyethyl acid phosphate, oleyl acid phosphate, tetracosyl acid phosphate, ethylene glycol acid phosphate, 2-hydroxyethyl methacrylate acid phosphate, dibutyl phosphate, monobutyl phosphate, monoisodecyl phosphate, and bis(2-ethylhexyl) phosphate; phosphite esters such as triphenylphosphite, trisnonylphenylphosphite, tricresylphosphite, triethylphosphite, tris(2-ethylhexyl)phosphite, tridecylphosphite, trilaurylphosphite, tris(tridecyl)phosphite, trioleylphosphite, diphenyl mono(2-ethylhexyl)phosphite, diphenyl monodecylphosphite, diphenyl (monodecyl)phosphite, trilaurylphosphite, diethyl hydrogen phosphite, bis(2-ethylhexyl) hydrogen phosphite, dilauryl hydrogen phosphite, dioleyl hydrogen phosphite, diphenyl hydrogen phosphite, tetraphenyl dipropylene glycol diphosphite, bis(decyl) pentaerythritol diphosphite, tristearylphosphite, distearyl pentaerythritol diphosphite, and tris(2,4-di-tert-butylphenyl)phosphite; phosphoric acid, phosphorous acid, and hypophosphorous acid. These may be used alone or two or more thereof may be used in combination. Among these, acidic phosphate esters are preferable, and 2-ethylhexyl acid phosphate is more preferable. The amount of a phosphorus compound used may be 10 to 2,000 parts by mass relative to 100 parts by mass of the catalyst.

The urethanization reaction can be performed in the presence of a solvent. As the solvent, esters such as ethyl acetate, butyl acetate, propyl acetate, γ-butyrolactone, δ-valerolactone, and ε-caprolactone; amides such as dimethylformamide, diethylformamide, and dimethylacetamide; sulfoxides such as dimethyl sulfoxide; ethers such as tetrahydrofuran, dioxane, and 2-ethoxyethanol; ketones such as methyl ethyl ketone, methyl isobutyl ketone, and cyclohexanone; aromatic hydrocarbons such as benzene and toluene, and the like can be used.

The urethane resin described above has a favorable elongation rate and texture and better durability, and also in some cases, has a favorable tensile strength. Therefore, the above-described urethane resin can be suitably used for synthetic leather, artificial leather, coating agents, and the like.

<Coating agent>

The coating agent of the present embodiment contains the above-described urethane resin. Specific aspects of the urethane resin may be as described above.

As an example of its use as a coating agent, an in-mold coating method to which reaction injection molding (RIM) is applied may be mentioned. The in-mold coating method to which RIM is applied is specifically a method of molding a plastic substrate in an injection mold and further forming a urethane coating film on the surface of the molded article within

the mold. In this method, the mold cavity volume is constant, which not only stabilizes the density, thickness, and hardness of the urethane coating film, but also allows faithful reproduction of the mold surface irregularities, enabling an aesthetically pleasing appearance.

<Aqueous urethane resin dispersion>

The aqueous urethane resin dispersion contains an aqueous medium and a urethane resin dispersed in the aqueous medium or a neutralized product thereof. The urethane resin is one having an acid group (the polyol component includes a polyol having an acid group) among the above-described urethane resins.

As the aqueous medium, in addition to water, a solution containing an emulsifier, a dispersant, or the like can be used. The aqueous medium preferably contains water, and more preferably consists only of water.

When the aqueous urethane resin dispersion contains a neutralized product of the urethane resin, the acid group of the urethane resin may be neutralized with a neutralizer. Examples of neutralizers include organic amines such as ammonia, ethylamine, trimethylamine, triethylamine, triisopropylamine, tributylamine, triethanolamine, N-methyldiethanolamine, N-phenyldiethanolamine, monoethanolamine, dimethylethanolamine, diethylethanolamine, morpholine, N-methylmorpholine, 2-amino-2-ethyl-1-propanol, and higher alkyl-modified morpholine; alkali metals such as lithium, potassium, and sodium, and inorganic alkalis such as sodium hydroxide and potassium hydroxide. From the viewpoint of improving the durability and smoothness of the coating film and the like, a highly volatile neutralizer that easily dissociates upon heating, such as ammonia, trimethylamine, or triethylamine, is preferably used. These neutralizers may be used alone or two or more thereof may be used in combination.

When an aqueous urethane resin dispersion is produced, an anionic polar group-containing compound can also be used. Examples of anionic polar group-containing compounds include a compound composed of an organic acid having one or more active hydrogen atoms and a neutralizer. Examples of organic acids include carboxylates, sulfonates, phosphates, phosphonates, phosphinates, and thiosulfonates. These anionic polar groups contained in the organic acid may be introduced alone or may be associated with metal ions, such as in a chelate.

When an aqueous urethane resin dispersion is produced, a cationic polar group-containing compound can also be used. Regarding the cationic polar group-containing compound, for example, one selected from the group consisting of tertiary amines having one or more active hydrogen atoms, inorganic acid neutralizers, organic acid neutralizers, and quaternizing agents. In addition, regarding the cationic polar group-containing compound, cationic compounds such as primary amine salts, secondary amine salts, tertiary amine salts, and pyridinium salts can also be used.

Examples of tertiary amines having one or more active hydrogen atoms include N,N-dimethylethanolamine, N,N-diethylethanolamine, N,N-dipropylethanolamine, N,N-diphenylethanolamine, N-methyl-N-ethylethanolamine, N-methyl-N-phenylethanolamine, N,N-dimethylpropanolamine, N-methyl-N-ethylpropanolamine, N-methyldiethanolamine, N-ethyldiethanolamine, N-methyldipropanolamine, N-phenyldiethanolamine, N-phenyldipropanolamine, N-hydroxyethyl-N-hydroxypropyl-methylamine, N,N'-dihydroxyethylpiperazine, triethanolamine, trisisopropanolamine, N-methyl-bis-(3-aminopropyl)-amine, and N-methyl-bis-(2-aminopropyl)-amine. In addition, those obtained by adding an alkylene oxide to primary amines such as ammonia and methylamine or secondary amines such as dimethylamine can also be used.

Examples of inorganic acids and organic acids include hydrochloric acid, acetic acid, lactic acid, cyanoacetic acid, phosphoric acid and sulfuric acid.

Examples of quaternary agents include dimethyl sulfate, benzyl chloride, bromoacetamide, and chloroacetamide. In addition, alkyl halides such as ethyl bromide, propyl bromide, and butyl bromide can also be used.

The aqueous urethane resin dispersion can be produced, for example, by sequentially performing: a step of reacting a polyol component containing a polyol having an acid group with a polyisocyanate component in the presence or absence of a solvent to form a urethane prepolymer; a step of neutralizing the acid group in the prepolymer with a neutralizer; a step of dispersing the neutralized prepolymer in an aqueous medium; and a step of reacting the prepolymer dispersed in the aqueous medium with a chain extender. In each step, a catalyst can be used as necessary to promote the reaction and control the amount of byproducts.

A film formed by the aqueous urethane resin dispersion described above (for example, a film formed by applying the aqueous urethane resin dispersion onto a substrate) has better adhesion, flexibility, tactile sensation, and the like. Therefore, the above-described aqueous urethane resin dispersion can be suitably used for artificial leather, synthetic leather, exterior coatings, interior coatings, and coating agents.

<Two-pack composition set>

The polyol component and the polyisocyanate component for forming the urethane resin may be stored, transported, and the like in separate container as a two-pack composition set. The two-pack composition set contains a first liquid containing at least the above-described polyol component and a second liquid containing at least the above-described polyisocyanate component. When a chain extender, a catalyst, a solvent, and the like are used, these may be

included in the first liquid and/or the second liquid, and may be added separately from the first liquid and the second liquid. The two-pack composition set can be suitably used, for example, as a coating agent, and can also be suitably used in the production of artificial leather, synthetic leather, exterior coatings, interior coatings, and the like. When the above-described two-pack composition set is used as a coating agent, for example, a coating film (for example, a cured film including a urethane resin) can be formed by mixing the first liquid with second liquid, applying the obtained mixed solution onto a substrate, and optionally heating.

As one example of using the two-pack composition set as a coating agent, it can also be suitably used in the production of artificial leather, synthetic leather, and the like as a resin composition in which no organic solvent is used, and a polyurethane resin having better adhesion, flexibility, tactile sensation, and the like is formed.

The urethane resin-forming composition including the above-described polyol component and the above-described polyisocyanate component, as well as the polyurethane resin composition including the above-described urethane resin, are preferably used as an aqueous polyurethane resin emulsion, a polyurethane resin synthesized under solvent-free conditions, or a precursor thereof. By curing this aqueous polyurethane resin emulsion or the polyurethane resin synthesized under solvent-free conditions, a tough molded body such as a film or a coating film having a high softening temperature and a reduced 100% modulus (favorable texture) can be obtained, and the emulsion can be suitably used as a surface treatment agent for leather or for leather applications such as artificial leather and synthetic leather. The 100% modulus is one index used to quantitatively determine the moist, resilient, and luxurious feel when touching synthetic leather. When the numerical value falls within a certain range, the above-described characteristics of the urethane resin are considered favorable.

<Applications>

The composition, urethane resin, aqueous urethane resin dispersion, and coating agent of the present embodiment described above can be used in coating compositions suitably applied as clear coatings for automotive exteriors and coatings for automotive interiors. In addition, the composition, urethane resin, aqueous urethane resin dispersion, and coating agent of the present embodiment can also be preferably used for surface treatment of home appliances, office automation (OA) products, leather, synthetic leather, and the like. Examples

Hereinafter, examples of the present invention will be described. However, the present invention is not limited by these examples.

[Synthesis Example 1: Synthesis 1 of polycarbonate diol]

In a 2 L two-neck glass reactor equipped with a stirrer, a thermometer, a heating device, a rectification column packed with regular packing, and a condenser, 826 g of 1,6-hexanediol, 787 g of diethyl carbonate, and 0.05 g of tetrabutyl titanate were mixed. The mixture was reacted at 100°C to 190°C for 8 hours under atmospheric pressure while removing low-boiling-point components. Then, the reaction temperature was set to 190°C, the pressure inside the flask was reduced to 1 kPa, and the reaction was further carried out for 8 hours to obtain a polycarbonate polyol (PCD-1).

[Table 1]

| | | Synthetic Example 1 PCD-1 |
|---|---|---|
| Formulation | 1,6-Hexanediol | 826 |
| | Diethyl carbonate | 787 |
| | Tetrabutyl titanate | 0.05 |
| | Total | 1613 |
| Composition | Number average molecular weight (g/mol) | 2540 |
| | Hydroxyl value (OHv) (mgKOH/g) | 37.4 |

The details of the raw materials used are as follows.

- · 1,6-Hexanediol: Manufactured by BASF JAPAN
- · Trimethylolpropane: Manufactured by Sigma-Aldrich
- · Diethyl carbonate: Manufactured by Sigma-Aldrich
- · Tetrabutyl titanate: Manufactured by Tokyo Chemical Industry Co., Ltd.

<Examples>

<First example>

(Example 1A)

In a 1 L two-neck glass reactor (reactor A) equipped with a stirrer, a thermometer, a heating device, a rectification column packed with regular packing, and a condenser, 16.5 g of trimethylolpropane, 187.1 g of 1,6-hexanediol, 196.4 g of diethyl carbonate, 0.71 g of 3-ethyl-3-hydroxymethyl oxetane, and 0.030 g of lithium acetylacetonate were mixed. The obtained mixed solution was heated at 130°C to 150°C (130°C at the beginning and 150°C at the end) under atmospheric pressure and reacted for 1.5 hours while removing low-boiling-point components (such as alcohols derived from a carbonate ester). The temperature of the distillate was 77°C or higher and less than 79°C. Then, the internal pressure of the flask was gradually reduced to 0.5 kPa over 0.5 hours at a reaction temperature of 150°C, followed by further reaction at 0.5 kPa for 1.0 hour to obtain a composition (PCP-1A) containing a compound (A-1).

(Example 2A)

A composition (PCP-2A) containing a compound (A-1) was obtained in the same manner as in Example 1A, except that 1.43 g of 3-ethyl-3-hydroxymethyl oxetane was added.

(Example 3A)

A composition (PCP-3A) containing a compound (A-1) was obtained in the same manner as in Example 1A, except that 2.14 g of 3-ethyl-3-hydroxymethyl oxetane was added.

(Example 4A)

A composition (PCP-4A) containing a compound (A-1) was obtained in the same manner as in Example 1A, except that 2.85 g of 3-ethyl-3-hydroxymethyl oxetane was added.

(Example 5A)

A composition (PCP-5A) containing a compound (A-1) was obtained in the same manner as in Example 1A, except that 5.70 g of 3-ethyl-3-hydroxymethyl oxetane was added.

(Example 6A)

In a reactor A, 16.5 g of trimethylolpropane, 187.1 g of 1,6-hexanediol, 196.4 g of diethyl carbonate, and 0.030 g of lithium acetylacetonate were mixed. The obtained mixed solution was heated at 130°C to 150°C (130°C at the beginning and 150°C at the end) under atmospheric pressure and reacted for 1.5 hours while removing low-boiling-point components (such as alcohols derived from a carbonate ester). The temperature of the distillate was 77°C or higher and less than 79°C. Then, the internal pressure of the flask was gradually reduced to 0.5 kPa over 0.5 hours at a reaction temperature of 150°C, followed by further reaction at 0.5 kPa for 35 hours to obtain a composition (PCP-6A) containing a compound (A-1).

(Comparative Example 1A)

A composition (PCP-7A) containing a compound (A-1) was obtained in the same manner as in Example 1A, except that the amount of 3-ethyl-3-hydroxymethyl oxetane was 0 g.

(Comparative Example 2A)

A composition (PCP-8A) containing a compound (A-1) was obtained in the same manner as in Example 1A, except that 0.07 g of 3-ethyl-3-hydroxymethyl oxetane was added.

(Comparative Example 3A)

A composition (PCP-9A) containing a compound (A-1) was obtained in the same manner as in Example 1A, except that 0.14 g of 3-ethyl-3-hydroxymethyl oxetane was added.

(Comparative Example 4A)

A composition (PCP-10A) containing a compound (A-1) was obtained in the same manner as in Example 1A, except that 0.43 g of 3-ethyl-3-hydroxymethyl oxetane was added.

(Comparative Example 5A)

A composition (PCP-11A) containing a compound (A-1) was obtained in the same manner as in Example 1A, except that 7.13 g of 3-ethyl-3-hydroxymethyl oxetane was added.

(Comparative Example 6A)

In a reactor A, 16.5 g of trimethylolpropane, 187.1 g of 1,6-hexanediol, 196.4 g of diethyl carbonate, and 0.020 g of lithium acetylacetonate were mixed. The obtained mixed solution was heated at 130°C to 150°C (130°C at the beginning and 150°C at the end) under atmospheric pressure and reacted for 8 hours while removing low-boiling-point components (such as alcohols derived from a carbonate ester). The temperature of the distillate was 77°C or higher and less than 79°C Then, the internal pressure of the flask was reduced to 1 kPa at a reaction temperature of 150°C, followed by further reaction at 1 kPa for 8 hours to obtain a composition (PCP-12A) containing a compound (A-1).

(Analysis and evaluation)

[Measurement of number average molecular weight]

GPC analysis of the polycarbonate polyols obtained above and the compositions obtained above was performed under the following conditions to measure the number average molecular weight of the polycarbonate polyols and the number average molecular weight of the compositions. The results are shown in Tables 1 and 2.

-Conditions-

(1) Measuring device: HLC-8420 (manufactured by Tosoh Corporation)
(2) Column: TSKgel (manufactured by Tosoh Corporation)

· G3000H-XL

· G3000H-XL

· G2000H-XL

· G2000H-XL

(3) Mobile phase: THF (tetrahydrofuran)
(4) Detector: Refractive index (RI) detector (HLC-8420 accessory)
(5) Temperature: 40°C
(6) Flow rate: 1.000 mL/min
(7) Calibration curve: A calibration curve was obtained using the following products (all are bifunctional polyoxypropylene polyols manufactured by Sanyo Chemical Industries, Ltd.).

· "Sannix PP-200" (number average molecular weight = 200, average functional group number: 2)
· "Sannix PP-400" (number average molecular weight = 400, average functional group number: 2)
· "Sannix PP-1000" (number average molecular weight = 1000, average functional group number: 2)
· "Sannix PP-2000" (number average molecular weight = 2000, average functional group number: 2)
· "Sannix PP-3000" (number average molecular weight = 3200, average functional group number: 2)
· "Sannix PP-4000" (number average molecular weight = 4160, average functional group number: 2)

(8) Approximate equation for calibration curve: Cubic equation
(9) Concentration of sample solution: 0.5 mass% THF solution

[Measurement of hydroxyl value]

The hydroxyl value of the polycarbonate polyols obtained above and the hydroxyl value of the compositions obtained above were measured by a method using an acetylation reagent in accordance with JIS K1557-1. The results are shown in Tables 1 and 2.

[Property evaluation]

The compositions obtained above were used as samples, and the samples were heated at 80°C for 1 hour and then left at 25°C for 3 days. The state of each sample after standing was visually observed. If it had even a slight fluidity at the above-described temperature, it was regarded as a liquid. If it had no fluidity, it was regarded as a solid. The results are shown in Table 2.

<Method for calculating each composition>

(Apparent average hydroxyl functionality)

The apparent average hydroxyl functionality of the compositions was calculated from the number average molecular weight and the hydroxyl value obtained by gel permeation chromatography (GPC) measurement. Originally, the average hydroxyl functionality would be calculated from the true number average molecular weight and the average hydroxyl value, but since it is difficult to calculate the true number average molecular weight of the compositions, the number average molecular weight converted from the PPG calibration curve by GPC measurement is used and defined as the apparent average hydroxyl functionality. The apparent average hydroxyl functionality is defined by the following equation.

Apparent average hydroxyl functionality = (average hydroxyl value of composition (mg KOH/g) $\times$ number average molecular weight of composition calculated from PPG calibration curve by GPC measurement (g/mol)) / (56.11 (KOHg/mol) $\times$ 1000)

[Composition analysis]

The composition analysis of the compositions was performed according to the following procedure.

First, each composition (sample) obtained above was dissolved in deuterated chloroform (manufactured by FUJIFILM Wako Pure Chemical Corporation) to obtain a solution. Tetramethylsilane (TMS) was added to the solution as a chemical shift reference to obtain a test solution. The $^1$H-NMR of the obtained test solution was measured using JNM-ECX400 manufactured by JEOL Ltd., and a $^1$H-NMR spectrum was obtained with a TMS signal set at 0 ppm. The measurement was performed under the following conditions.

-Conditions-

· Resonance frequency: 400 MHz
· Pulse width: 45 degrees
· Waiting time: 5 seconds
· Number of integrations: 64
Sample solution concentration (TMS-containing deuterated chloroform): 3 mass/vol%

Next, from the $^1$H-NMR spectrum obtained above, the integral value $\Delta_{SC}$ of the signal (SC) of a methylene located next to an oxygen atom of an oxetane group in the group represented by the above-described Formula (C), the integral value $\Delta_{SD}$ of the signal (SD) of a methylene located next to a hydroxy group of in the group represented by Formula (D), and the integral value $\Delta_{SE}$ of the signal (SE) of a methylene located next to a hydroxy group in the group represented by Formula (E) were determined. In addition, when $R^2$ in the groups represented by Formulae (I) and (C) is a methyl group or an ethyl group, the integral values of the signals of their terminal methyl groups were determined, and these were designated as the integral value $\Delta_{SI}$ of the signal (SI).

Specifically, the signal from 4.390 ppm to 4.500 ppm was designated as the signal (SC), the signal from 3.618 ppm to 3.720 ppm was designated as the signal (SD), the signal from 3.590 ppm to 3.618 ppm was designated as the signal (SE), the signal from 0.700 ppm to 1.130 ppm was designated as the signal (SI) when $R^2$ in the groups represented by

Formulae (I) and (C) is a methyl group (when the polyhydric alcohol (e) is trimethylolethane), and the signal from 0.700 ppm to 1.000 ppm was designated as the signal (SI) when $R^2$ in the groups represented by Formulae (I) and (C) is an ethyl group (when the polyhydric alcohol (e) is trimethylolpropane).

The baseline for the integral value measurement was a straight line drawn horizontally based on the lowest spectral intensity by comparing the spectral intensities within the specified spectral range. The signal (SE) typically exhibits a single peak, but it may split due to the influence of a trace amount of moisture. When detected as a split peak, it deviates from the above-described integration ranges, making it impossible to obtain an accurate $C_E$. Therefore, the integral value obtained from the signal (SE) adopts the case where a single peak is exhibited.

From the obtained integral values, the molar ratio ($C_C / C_T \times 100$) and the molar ratio ($C_C / (C_C + C_D + C_E) \times 100$) were calculated. The results are shown in Table 2.

[Table 2]

| | | | Example 1A | Example 2A | Example 3A | Example 4A | Example 5A | Example 6A | Comparative Example 1A | Comparative Example 2A | Comparative Example 3A | Comparative Example 4A | Comparative Example 5A | Comparative Example 6A |
|---|---|---|---|---|---|---|---|---|---|---|---|---|---|---|
| | | | PCP 1A | PCP 2A | PCP 3A | PCP 4A | PCP 5A | PCP 6A | PCP 7A | PCP 8A | PCP 9A | PCP 10A | PCP 11A | PCP 12A |
| Fonnulation | Diol (D1) | 1,6-Hexanediol | 187.1 | 187.1 | 187.1 | 187.1 | 187.1 | 187.1 | 187.1 | 187.1 | 187.1 | 187.1 | 187.1 | 187.1 |
| | Polyhydric alcohol (B1) | Trimethylolpropane | 16.5 | 16.5 | 16.5 | 16.5 | 16.5 | 16.5 | 16.5 | 16.5 | 16.5 | 16.5 | 16.5 | 16.5 |
| | Carbonate ester | Diethyl carbonate | 196.4 | 196.4 | 196.4 | 196.4 | 196.4 | 196.4 | 196.4 | 196.4 | 196.4 | 196.4 | 196.4 | 196.4 |
| | Oxetane compound (F 1) | 3-Ethyl-3-hydroxymethyl oxetane | 0.71 | 1.43 | 2.14 | 2.85 | 5.70 | 0.0 | 0 | 0.07 | 0.14 | 0.43 | 7.13 | 0.0 |
| | Catalyst | Lithium acetylacetonate | 0.030 | 0.030 | 0.030 | 0.030 | 0.030 | 0.030 | 0.030 | 0.030 | 0.030 | 0.030 | 0.030 | 0.030 |
| Composition | Property (25°C) | | Solid | Solid | Solid | Solid | Solid | Solid | Solid | Solid | Solid | Solid | Solid | Solid |
| | Number average molecular weight (g/mol) | | 1219 | 1251 | 1218 | 1290 | 1146 | 1504 | 1327 | 1399 | 1268 | 1305 | 1007 | 1009 |
| | Hydroxyl value (OHv) (mgKOH/g) | | 120.5 | 116.9 | 120.0 | 118.2 | 140.4 | 94.7 | 122.6 | 103.2 | 120.2 | 114.1 | 156.0 | 145.9 |
| | Apparent average hydroxyl functionality | | 2.62 | 2.61 | 2.60 | 2.72 | 2.87 | 2.54 | 2.90 | 2.57 | 2.72 | 2.65 | 2.80 | 2.62 |
| | Composition analysis $^1$H-NMR | $C_C / C_T \times 100$ | 4.000 | 7.250 | 10.25 | 13.50 | 24.25 | 8.500 | 0.917 | 1.180 | 2.104 | 2.750 | 31.75 | 2.75 |
| | | $C_C / (C_C + C_D + C_E) \times 100$ | 1.228 | 2.688 | 3.405 | 4.779 | 8.227 | 3.208 | 0.291 | 0.411 | 0.631 | 0.896 | 10.85 | 0.872 |

In Table 2, the "composition" (unit: g) for Examples 1A to 6A and Comparative Examples 1A to 6A indicates the reaction raw materials.

(Physical property evaluation)

Cured urethane film films were prepared by the following method, and the obtained films were used as samples to evaluate physical properties (tensile properties, heat resistance, and low-temperature properties).

[Preparation of cured urethane films]

First, each of the compositions obtained above, a polyisocyanate component (C-2612), a urethanization catalyst, a phosphorus compound (JP508), and a diluent solvent were mixed in a 200 mL glass bottle according to the formulation (unit: g) shown in Table 3. Immediately after mixing, the mixed solution was poured onto release paper, and cast with a bar coater to form films with a thickness of 200 μm. The cast films were then cured by heating under conditions at 25°C for 30 minutes, 50°C for 30 minutes, 80°C for 30 minutes, 120°C for 1 hour, and 50°C for 18 hours to obtain cured urethane films.

[Evaluation of tensile properties and 100% modulus]

The tensile properties and 100% modulus properties of the obtained films were measured in accordance with JIS K6251 under the following conditions (100% modulus, strength at break, elongation at break).

-Conditions-

· Test device: Tensilon UTA-500 (manufactured by A&D Company, Limited)
· Measurement conditions: 25°C × 50 %RH
· Head speed: 200 mm/min
· Dumbbell No. 4

[Softening temperature]

After obtaining test pieces from the obtained films using the dumbbell, 2 cm marked lines were marked on the test pieces, and the thicknesses of the marked lines at center portions were measured. A weight of a predetermined weight was attached to one grip portion of each test piece, the other grip portion was clamped with a double clip, the clip was hung in a dryer with the clip facing up. Thereafter, the temperature in the dryer was raised, the distance between the marked lines was observed, and the temperature when the distance between the marked lines reached 4 cm was read as a softening temperature.

· Processing apparatus: Blow constant-temperature dryer DRK633DA (manufactured by Advantech Co., Ltd.)
· Weight of weight: Thickness of marked line at center portion (μm) × 0.05 g
· Dumbbell No. 2 (according to JIS K6251)
· Temperature increase rate: 5°C/min

[Glass transition temperature]

After obtaining test pieces (width: 0.4 cm, length: 2.5 cm) from the obtained films using the dumbbell, the thicknesses (approximately 100 to 200 μm) of the marked lines at center portions were measured. The glass transition temperature was determined as the temperature at the peak top of the loss modulus (E") / storage modulus (E') = tan δ.

-Conditions-

Processing apparatus: Rheovibron DDV-01IGP Dynamic Viscoelastometer (manufactured by Orientec Co., Ltd.)
· Range: -50°C to 40°C
· Heating rate: 3°C/min
· Frequency: 35 Hz

· Amplitude: 16 μm
· Static tension: 5.00 gf

[Evaluation criteria]

The physical property values of 100% modulus, strength at break, elongation at break, softening temperature, and glass transition temperature were evaluated as A, B, C, or D (A: very good, B: good, C: fair, D: poor).

<100% modulus>

A: 1.5 MPa to 2.0 MPa
B: Less than 1.5 MPa
C: More than 2.0 MPa

<Strength at break>

A: More than 19 MPa
B: 15 MPa to 19 MPa
D: Less than 15 MPa

<Elongation at break>

A: More than 350%
B: 350% or less

<Softening temperature>

A: Higher than 240°C
B: 230°C to 240°C
C: Lower than 230°C

<Glass transition temperature>

A: 1.5°C or lower
B: Higher than 1.5°C

[Table 3]

| | | | Example 1A-1 | Example 2A-1 | Example 3A-1 | Example 4A-1 | Example 5A-1 | Example 6A-1 | Comparative Example 1A-1 | Comparative Example 2A-1 | Comparative Example 3A-1 | Comparative Example 4A-1 | Comparative Example 5A-1 | Comparative Example 6A-1 |
|---|---|---|---|---|---|---|---|---|---|---|---|---|---|---|
| Formulation | Type of composition | | PCP 1A | PCP 2A | PCP 3A | PCP 4A | PCP 5A | PCP 6A | PCP 7A | PCP 8A | PCP 9A | PCP 10A | PCP 11A | PCP 12A |
| | Composition | | 25.8 | 26.1 | 25.8 | 26.0 | 24.4 | 27.9 | 25.6 | 27.2 | 25.8 | 26.3 | 23.4 | 24.0 |
| | Polyisocyanate component | C-2612 | 14.2 | 13.9 | 14.2 | 14.0 | 15.6 | 12.1 | 14.4 | 12.8 | 14.2 | 13.7 | 16.6 | 16.0 |
| | Urethanization catalyst | DOTDL | 0.01 | 0.01 | 0.01 | 0.01 | 0.01 | 0.01 | 0.01 | 0.01 | 0.01 | 0.01 | 0.01 | 0.01 |
| | Phosphorus compound | JP-508 | 0.01 | 0.01 | 0.01 | 0.01 | 0.01 | 0.01 | 0.01 | 0.01 | 0.01 | 0.01 | 0.01 | 0.01 |
| | Diluent solvent | Methyl ethyl ketone | 42 | 42 | 42 | 42 | 42 | 42 | 42 | 42 | 42 | 42 | 42 | 42 |
| | | Toluene | 18 | 18 | 18 | 18 | 18 | 18 | 18 | 18 | 18 | 18 | 18 | 18 |
| | Leveling agent | BYK-331 | 0.4 | 0.4 | 0.4 | 0.4 | 0.4 | 0.4 | 0.4 | 0.4 | 0.4 | 0.4 | 0.4 | 0.4 |
| | Molar ratio (isocyanate group/hydroxy group) | | 1.05/1. 0 | 1.05/1. 0 | 1.05/1. 0 | 1.05/1. 0 | 1.05/1. 0 | 1.05/1. 0 | 1.05/1.0 | 1.05/1.0 | 1.05/1.0 | 1.05/1.0 | 1.05/1.0 | 1.05/1.0 |
| Physical properties | 100% Modulus (MPa) | | 2.1 | 2.0 | 2.0 | 1.9 | 1.5 | 2.1 | 2.0 | 2.0 | 2.2 | 2.2 | 1.3 | 2.5 |
| | | | C | A | A | A | A | C | A | A | C | C | B | C |
| | Strength at break (MPa) | | 21.9 | 19.0 | 27.0 | 30.4 | 18.3 | 26.5 | 29.0 | 33.3 | 28.6 | 21.8 | 13.9 | 29.4 |
| | | | A | B | A | A | B | A | A | A | A | A | D | A |
| | Elongation at break (%) | | 350 | 360 | 390 | 383 | 433 | 385 | 398 | 395 | 367 | 363 | 435 | 520 |
| | | | B | A | A | A | A | A | A | A | A | A | A | A |
| | Softening temperature (°C) | | 263 | 257 | 248 | 244 | 235 | 256 | 258 | 256 | 268 | 257 | 220 | 242 |
| | | | A | A | A | A | B | A | A | A | A | A | C | A |
| | Glass transition temperature (°C) | | 1.8 | -2.8 | 1.2 | -2.3 | -0.3 | -4.3 | -5.3 | -2.3 | -0.3 | -2.3 | 4.2 | 2.7 |
| | | | B | A | A | A | A | A | A | A | A | A | B | B |

(Handling property evaluation)

An isocyanate group-terminated urethane prepolymer was prepared by the following method, and the obtained isocyanate group-terminated urethane prepolymer was used as a sample to evaluate handling properties (prepolymer viscosity).

[Preparation of isocyanate group-terminated urethane prepolymer]

In a 1 L reactor equipped with a stirrer, a thermometer, a nitrogen seal tube, and a condenser, each of the compositions obtained above, N-980N (manufactured by Tosoh Corporation: number average molecular weight 2000; hydroxyl value 56.11 mg KOH/g; 1,6-hexanediol-based polycarbonate diol), 1,6-hexanediol, 2,2-dimethylolpropionic acid (hydrophilic agent), isophorone diisocyanate (polyisocyanate), and methyl ethyl ketone (organic solvent) were charged according to the formulation (unit: g) shown in Table 4, heated to 78°C, stirred at the same temperature for 30 minutes, then 0.010 g of DOTDL (catalyst) was added, and the mixture was reacted for 2 hours. Subsequently, 0.015 g of DOTDL was added and reacted for 2 hours, then 0.010 g of DOTDL was further added and reacted for 2 hours. After confirming that the hydroxyl groups of the polyol and hydrophilic agent were completely consumed from the NCO content of the product, the reaction was stopped to obtain an isocyanate group-terminated urethane prepolymer.

[Viscosity of isocyanate group-terminated urethane prepolymer]

Approximately 2 g of the obtained isocyanate group-terminated urethane prepolymer was collected, sealed in a sample tube together with a 4.7 mm aluminum spherical probe, and the viscosity in a steady state at 50°C was measured using an electromagnetically spinning (EMS) viscometer (EMS-1000, manufactured by Kyoto Electronics Manufacturing Co., Ltd.). The results are shown in Table 4.

Measurement conditions

- Temperature: 50°C
- Spherical probe: φ 4.7 mm
- Motor rotation speed: 1000 rpm
- Measurement interval: 30 seconds
- Measurement time: 5 minutes

[Evaluation criteria]

The viscosity of the isocyanate group-terminated urethane prepolymers was evaluated as A, B, C, or D (A: very good, B: good, C: fair, D: poor).

<Viscosity>

A: Less than 1700 mPa ·s

B: 1700 mPa ·s to 1800 mPa ·s

D: More than 1800 mPa ·s

[Table 4]

| | | | Example 1A-2 | Example 2A-2 | Example 3A-2 | Example 4A-2 | Example SA-2 | Example 6A-2 | Comparative Example 1A-2 | Comparative Example 2A-2 | Comparative Example 3A-2 | Comparative Example 4A-2 | Comparative Example 5A-2 | Comparative Example 6A-2 |
|---|---|---|---|---|---|---|---|---|---|---|---|---|---|---|
| Formulation | Type of composition | | PCP 1A | PCP 2A | PCP 3A | PCP 4A | PCP 5A | PCP 6A | PCP 7A | PCP 8A | PCP 9A | PCP 10A | PCP 11A | PCP 12A |
| | Polyol | Composition | 33.3 | 33.3 | 33.3 | 33.3 | 33.3 | 33.3 | 33.3 | 33.3 | 33.3 | 33.3 | 33.3 | 33.3 |
| | | N-980N | 32.4 | 32.3 | 32.4 | 32.3 | 33.2 | 31.4 | 32.5 | 31.9 | 32.4 | 32.2 | 33.1 | 33.3 |
| | | 1,6-Hexanediol | 0.94 | 1.07 | 0.96 | 1.02 | 0.20 | 1.90 | 0.86 | 1.42 | 0.95 | 1.18 | 0.00 | 0.00 |
| | Hydrophilic agent | 2,2-Dimethy-lolpro pionic acid | 3.33 | 3.33 | 3.33 | 3.33 | 3.33 | 3.33 | 3.33 | 3.33 | 3.33 | 3.33 | 3.33 | 3.33 |
| | Polyisocyanate com-ponent | Isophorone diisocyanate | 20.8 | 20.8 | 20.8 | 20.8 | 20.8 | 20.8 | 20.8 | 20.8 | 20.8 | 20.8 | 21.4 | 20.8 |
| | Urethanization catalyst | DOTDL | 0.035 | 0.035 | 0.035 | 0.035 | 0.035 | 0.035 | 0.035 | 0.035 | 0.035 | 0.035 | 0.035 | 0.035 |
| | Diluent solvent | Methyl ethyl ketone | 59.1 | 59.1 | 59.1 | 59.1 | 59.1 | 59.1 | 59.1 | 59.1 | 59.1 | 59.1 | 59.1 | 59.1 |
| Physical properties | Prepolymer viscosity | mPa·s | 1790 | 1640 | 1430 | 1310 | 1100 | 1540 | 2060 | 2000 | 1910 | 1840 | 950 | 1890 |
| | | | B | A | A | A | A | A | D | D | D | D | A | D |

The compositions were comprehensively evaluated as A, B, C, or D (A: very good, B: good, C: fair, D: poor). The results are shown in Table 5.

<Comprehensive evaluation>

A: All evaluations of physical properties and handling properties are rated as A only
B: Evaluations of physical properties and handling properties do not include D, and include one B or C
C: Evaluations of physical properties and handling properties do not include D, and include two or more B or C
D: Evaluations of physical properties and handling properties include D

[Table 5]

| | Example 1A-3 | Example 2A-3 | Example 3A-3 | Example 4A-3 | Example 5A-3 | Example 6A-3 | Comparative Example 1A-3 | Comparative Example 2A-3 | Comparative Example 3A-3 | Comparative Example 4A-3 | Comparative Example 5A-3 | Comparative Example 6A-3 |
|---|---|---|---|---|---|---|---|---|---|---|---|---|
| Type of composition | PCP 1A | PCP 2A | PCP 3A | PCP 4A | PCP 5A | PCP 6A | PCP 7A | PCP 8A | PCP 9A | PCP 10A | PCP 11A | PCP 12A |
| Comprehensive evaluation | C | A | A | A | C | B | D | D | D | D | D | D |

The details of the materials used in the first example are as follows.

- · 1,6-Hexanediol: Manufactured by BASF JAPAN
- · Trimethylolpropane: Manufactured by Sigma-Aldrich
- · Diethyl carbonate: Manufactured by Sigma-Aldrich
- · 3-Ethyl-3-hydroxymethyl oxetane: Manufactured by Tokyo Chemical Industry Co., Ltd.
- · Lithium acetylacetonate: Manufactured by Sigma-Aldrich
- · C-2612: Coronate 2612 (trade name), hexamethylene diisocyanate adduct-modified polyisocyanate, isocyanate content = 17.2%, manufactured by Tosoh Corporation
- · JP-508: Trade name, 2-ethylhexyl acid phosphate, manufactured by Johoku Chemical Co., Ltd.
- · DOTDL: Dioctyltin dilaurate, manufactured by Kishida Chemical Co., Ltd.
- · Methyl ethyl ketone: Manufactured by Maruzen Petrochemical Co., Ltd.
- · Toluene: Manufactured by FUJIFILM Wako Pure Chemical Corporation
- · BYK-331: Silicone-based surface conditioner, manufactured by BYK
- · 2,2-Dimethylolpropionic acid: Manufactured by Tokyo Chemical Industry Co., Ltd.
- · Isophorone diisocyanate: Manufactured by Evonik Industries

<Second example>

(Example 1B)

In a reactor A, 15.8 g of trimethylolpropane, 99.5 g of 1,6-hexanediol, 75.9 g of 1,4-butanediol, 208.9 g of diethyl carbonate, 0.68 g of 3-ethyl-3-hydroxymethyl oxetane, and 0.030 g of lithium acetylacetonate were mixed. The obtained mixed solution was heated at 130°C to 150°C (130°C at the beginning and 150°C at the end) under atmospheric pressure and reacted for 1.5 hours while removing low-boiling-point components (such as alcohols derived from a carbonate ester). The temperature of the distillate was 77°C or higher and less than 79°C. Then, the internal pressure of the flask was reduced to 0.5 kPa over 0.5 hours at a reaction temperature of 150°C, followed by further reaction at 0.5 kPa for 1.0 hour to obtain a composition (PCP-1B) containing a compound (A-1).

(Example 2B)

A composition (PCP-2B) containing a compound (A-1) was obtained in the same manner as in Example 1B, except that 1.36 g of 3-ethyl-3-hydroxymethyl oxetane was added.

(Example 3B)

A composition (PCP-3B) containing a compound (A-1) was obtained in the same manner as in Example 1B, except that 2.73 g of 3-ethyl-3-hydroxymethyl oxetane was added.

(Comparative Example 1B)

A composition (PCP-4B) containing a compound (A-1) was obtained in the same manner as in Example 1B, except that 0 g of 3-ethyl-3-hydroxymethyl oxetane was added.

(Comparative Example 2B)

A composition (PCP-5B) containing a compound (A-1) was obtained in the same manner as in Example 1B, except that 6.82 g of 3-ethyl-3-hydroxymethyl oxetane was added.

(Example 4B)

A composition (PCP-6B) containing a compound (A-1) was obtained in the same manner as in Example 1B, except that 0.60 g of 3-ethyl-3-hydroxymethyl oxetane was added.

(Example 5B)

A composition (PCP-7B) containing a compound (A-1) was obtained in the same manner as in Example 1B, except that 2.73 g of 3-ethyl-3-hydroxymethyl oxetane was added.

(Example 6B)

A composition (PCP-8B) containing a compound (A-1) was obtained in the same manner as in Example 1B, except that 4.80 g of 3-ethyl-3-hydroxymethyl oxetane was added.

(Comparative Example 3B)

A composition (PCP-9B) containing a compound (A-1) was obtained in the same manner as in Example 1B, except that 0.34 g of 3-ethyl-3-hydroxymethyl oxetane was added.

(Comparative Example 4B)

A composition (PCP-10B) containing a compound (A-1) was obtained in the same manner as in Example 1B, except that 0.50 g of 3-ethyl-3-hydroxymethyl oxetane was added.

(Comparative Example 5B)

A composition (PCP-11B) containing a compound (A-1) was obtained in the same manner as in Example 1B, except that 8.20 g of 3-ethyl-3-hydroxymethyl oxetane was added.

(Comparative Example 6B)

In a reactor A, 15.8 g of trimethylolpropane, 99.5 g of 1,6-hexanediol, 75.9 g of 1,4-butanediol, 208.9 g of diethyl carbonate, and 0.030 g of lithium acetylacetonate were mixed. The obtained mixed solution was heated at 130°C to 150°C (130°C at the beginning and 150°C at the end) under atmospheric pressure and reacted for 8 hours while removing low-boiling-point components (such as alcohols derived from a carbonate ester). The temperature of the distillate was 77°C or higher and less than 79°C. Then, the internal pressure of the flask was reduced to 1 kPa at a reaction temperature of 150°C, followed by further reaction at 1 kPa for 8 hours to obtain a composition (PCP-13B) containing a compound (A-1).

(Analysis and evaluation)

In the same manner as in the first example, the number average molecular weight and hydroxyl value of the compositions obtained above were measured, and property evaluation, calculation of the apparent average hydroxyl functionality, and composition analysis were performed. In the composition analysis, the signal from 4.390 ppm to 4.500 ppm was designated as the signal (SC), the signal from 3.618 ppm to 3.720 ppm was designated as the signal (SD), the signal from 3.590 ppm to 3.618 ppm was designated as the signal (SE), the signal from 0.700 ppm to 1.130 ppm was designated as the signal (SI) when $R^2$ in the groups represented by Formulae (I) and (C) is a methyl group (when the polyhydric alcohol (e) is trimethylolethane), and the signal from 0.700 ppm to 1.000 ppm was designated as the signal (SI) when $R^2$ in the groups represented by Formulae (I) and (C) is an ethyl group (when the polyhydric alcohol (e) is trimethylolpropane). The results are shown in Table 6. FIG. 1 shows the $^1$H-NMR spectrum of the composition obtained in Example 1B.

[Table 6]

| | | | Example 1B | Example 2B | Example 3B | Example 4B | Example 5B | Example 6B | Comparative Example 1B | Comparative Example 2B | Comparative Example 3B | Comparative Example 4B | Comparative Example 5B | Comparative Example 6B |
|---|---|---|---|---|---|---|---|---|---|---|---|---|---|---|
| | | | PCP 1B | PCP 2B | PCP 3B | PCP 6B | PCP 7B | PCP 8B | PCP 4B | PCP 5B | PCP 9B | PCP 10B | PCP 11B | PCP 12B |
| Formulation | Diol (D1) | 1,6-Hexanediol | 99.5 | 99.5 | 99.5 | 99.5 | 99.5 | 99.5 | 99.5 | 99.5 | 99.5 | 99.5 | 99.5 | 99.5 |
| | | 1,4-Butanediol | 75.9 | 75.9 | 75.9 | 75.9 | 75.9 | 75.9 | 75.9 | 75.9 | 75.9 | 75.9 | 75.9 | 75.9 |
| | Polyhydric alcohol (B1) | Trimethylolpropane | 15.8 | 15.8 | 15.8 | 15.8 | 15.8 | 15.8 | 15.8 | 15.8 | 15.8 | 15.8 | 15.8 | 15.8 |
| | Carbonate ester | Diethyl carbonate | 208.9 | 208.9 | 208.9 | 208.9 | 208.9 | 208.9 | 208.9 | 208.9 | 208.9 | 208.9 | 208.9 | 208.9 |
| | Oxetane compound (F1) | 3-Ethyl-3-hydroxy methyl oxetane | 0.68 | 1.36 | 2.73 | 0.60 | 0.80 | 4.80 | 0 | 6.82 | 0.34 | 0.50 | 8.20 | 0.00 |
| | Catalyst | Lithium acetylacetonate | 0.030 | 0.030 | 0.030 | 0.030 | 0.030 | 0.030 | 0.030 | 0.030 | 0.030 | 0.030 | 0.030 | 0.030 |
| Composition | Property (25°C) | | Liquid state | Liquid state | Liquid state | Liquid state | Liquid state | Liquid state | Liquid state | Liquid state | Liquid state | Liquid state | Liquid state | Liquid state |
| | Number average molecular weight (g/mol) | | 1084 | 1098 | 1150 | 1099 | 1164 | 1176 | 1170 | 1014 | 1142 | 1241 | 1045 | 1382 |
| | Hydroxyl value (OHv) (mgKOH/g) | | 140.2 | 140.5 | 131.9 | 138.6 | 130.1 | 132.5 | 121.1 | 155.8 | 131.7 | 123.6 | 151.4 | 111.4 |
| | Apparent average hydroxyl functionality | | 2.71 | 2.75 | 2.70 | 2.71 | 2.70 | 2.78 | 2.53 | 2.82 | 2.68 | 2.73 | 2.82 | 2.74 |
| | Composition analysis $^1$H-NMR | $C_C / C_T \times 100$ | 5.000 | 7.750 | 13.25 | 4.000 | 5.750 | 21.75 | 0.073 | 29.750 | 1.416 | 2.750 | 34.75 | 0.862 |
| | | $C_C / (C_C + C_D + C_E) \times 100$ | 1.350 | 2.160 | 4.319 | 1.056 | 1.616 | 8.154 | 0.022 | 9.667 | 0.380 | 0.820 | 12.09 | 0.290 |

In Table 6, the "composition" (unit: g) for Examples 1B to 6B and Comparative Examples 1B to 6B indicates the reaction raw materials.

(Physical property evaluation)

Cured urethane films were obtained in the same manner as in the first example, except that the compositions obtained above, a polyisocyanate component (C-2612), a urethanization catalyst, a phosphate ester (JP508), and a diluent solvent were mixed according to the formulation (unit: g) shown in Table 7. Then, using the obtained films as samples, physical properties (tensile properties, texture properties, low-temperature properties) were evaluated in the same manner as in the first example. The results are shown in Table 7.

[Evaluation criteria]

The physical property values of 100% modulus, strength at break, elongation at break, softening temperature, and glass transition temperature were evaluated as A, B, C, or D (A: very good, B: good, C: fair, D: poor).

<100% modulus>

A: 1.0 MPa to 1.7 MPa
B: More than 1.7 MPa
C: Lower than 1.0

<Strength at break>

A: More than 19 MPa
B: 16 MPa to 19 MPa
D: Less than 16 MPa

<Elongation at break>

A: 410% or more
C: Less than 410%

<Softening temperature>

A: Higher than 240°C
B: 240°C or lower

<Glass transition temperature>

A: 4.5°C or lower
B: Higher than 4.5°C

[Table 7]

| | | | Exampl e 1B-1 | Exampl e 2B-1 | Exampl e 3B-1 | Exampl e 4B-1 | Exampl e 5B-1 | Exampl e 6B-1 | Comparative Example 1B-1 | Comparative Example 2B-1 | Comparative Example 3B-1 | Comparative Example 4B-1 | Comparative Example 5B-1 | Comparative Example 6B-1 |
|---|---|---|---|---|---|---|---|---|---|---|---|---|---|---|
| Fonnulation | Type of composition | | PCP 1B | PCP 2B | PCP 3B | PCP 6B | PCP 7B | PCP 8B | PCP 4B | PCP 5B | PCP 9B | PCP 10B | PCP 11B | PCP 12B |
| | Composition | | 24.4 | 24.4 | 25 | 24.5 | 25.1 | 24.9 | 25.8 | 23.4 | 25 | 25.6 | 23.6 | 26.5 |
| | Polyisocyanate component | C-2612 | 15.6 | 15.6 | 15 | 15.5 | 14.9 | 15.1 | 14.2 | 16.6 | 15 | 14.4 | 16.4 | 13.5 |
| | Urethanization catalyst | DOTDL | 0.01 | 0.01 | 0.01 | 0.01 | 0.01 | 0.01 | 0.01 | 0.01 | 0.01 | 0.01 | 0.01 | 0.01 |
| | Phosphorus compound | JP-508 | 0.01 | 0.01 | 0.01 | 0.01 | 0.01 | 0.01 | 0.01 | 0.01 | 0.01 | 0.01 | 0.01 | 0.01 |
| | Diluent solvent | Methyl ethyl ketone | 42 | 42 | 42 | 42 | 42 | 42 | 42 | 42 | 42 | 42 | 42 | 42 |
| | | Toluene | 18 | 18 | 18 | 18 | 18 | 18 | 18 | 18 | 18 | 18 | 18 | 18 |
| | Leveling agent | BYK-331 | 0.4 | 0.4 | 0.4 | 0.4 | 0.4 | 0.4 | 0.4 | 0.4 | 0.4 | 0.4 | 0.4 | 0.4 |
| | Molar ratio (isocyanate group/hydroxy group) | | 1.05/1. 0 | 1.05/1. 0 | 1.05/1. 0 | 1.05/1. 0 | 1.05/1. 0 | 1.05/1. 0 | 1.05/1.0 | 1.05/1.0 | 1.05/1.0 | 1.05/1.0 | 1.05/1.0 | 1.05/1.0 |
| Physical properties | 100% Modulus (MPa) | | 1.6 | 1.6 | 1.5 | 1.3 | 1.7 | 1.7 | 1.7 | 1.2 | 1.6 | 1.5 | 0.9 | 2 |
| | | | A | A | A | A | A | A | A | A | A | A | C | B |
| | Strength at break (MPa) | | 23 | 21.8 | 20.7 | 19.4 | 27.5 | 23.3 | 26.1 | 15.3 | 26.3 | 22.1 | 10.8 | 15.9 |
| | | | A | A | A | A | A | A | A | D | A | A | D | D |
| | Elongation at break (%) | | 437 | 423 | 417 | 486 | 448 | 465 | 440 | 418 | 473 | 446 | 535 | 399 |
| | | | A | A | A | A | A | A | A | B | A | A | A | B |
| | Softening temperature (°C) | | 238 | 244 | 241 | 260 | 258 | 253 | 240 | 242 | 252 | 267 | 258 | 260 |
| | | | B | A | A | A | A | A | B | A | A | A | A | A |
| | Glass transition temperature (°C) | | 4.1 | 3.6 | 2.2 | 4.8 | 4.3 | 3.2 | -0.8 | 3.2 | 4.7 | 2.2 | 3.7 | 2.8 |
| | | | A | A | A | B | A | A | A | A | B | A | A | A |

(Handling property evaluation)

Handling properties (viscosity of isocyanate group-terminated urethane prepolymer) were evaluated in the same manner as in the first example, except that the compositions obtained above, N-980N, 1,6-hexanediol, 2,2-dimethylolpropionic acid (hydrophilic agent), isophorone diisocyanate (polyisocyanate), and methyl ethyl ketone (organic solvent) were charged according to the formulation (unit: g) shown in Table 8. The results are shown in Table 8.

[Evaluation criteria]

The viscosity of the isocyanate group-terminated urethane prepolymers was evaluated as A, B, C, or D (A: very good, B: good, C: fair, D: poor).

<Viscosity>

A: 2500 mPa ·s or less

D: More than 2500 mPa ·s

[Table 8]

| | | | Example 1B-2 | Example 2B-2 | Example 3B-2 | Example 4B-2 | Example 5B-2 | Example 6B-2 | Comparative Example 1B-2 | Comparative Example 2B-2 | Comparative Example 3B-2 | Comparative Example 4B-2 | Comparative Example 5B-2 | Comparative Example 6B-2 |
|---|---|---|---|---|---|---|---|---|---|---|---|---|---|---|
| Formulation | Type of composition | | PCP 1B | PCP 2B | PCP 3B | PCP 6B | PCP 7B | PCP 8B | PCP 4B | PCP 5B | PCP 9B | PCP 10B | PCP 11B | PCP 12B |
| | Polyol | Composition | 33.3 | 33.3 | 33.3 | 33.3 | 33.3 | 33.3 | 33.3 | 33.1 | 33.3 | 33.3 | 33.2 | 33.3 |
| | | N-980N | 33.1 | 33.2 | 32.8 | 33.1 | 32.7 | 32.8 | 32.4 | 33.1 | 32.8 | 32.5 | 33.2 | 32 |
| | | 1,6-Hexanediol | 0.2 | 0.19 | 0.51 | 0.26 | 0.58 | 0.49 | 0.92 | 0 | 0.52 | 0.82 | 0 | 1.28 |
| | Hydrophilic agent | 2,2-Dimethylolpro pionic acid | 3.33 | 3.33 | 3.33 | 3.33 | 3.33 | 3.33 | 3.33 | 3.33 | 3.33 | 3.33 | 3.33 | 3.33 |
| | Polyisocyanate component | Isophorone diisocyanate | 20.8 | 20.8 | 20.8 | 20.8 | 20.8 | 20.8 | 20.8 | 21.3 | 20.8 | 20.8 | 20.8 | 20.8 |
| | Urethanization catalyst | DOTDL | 0.035 | 0.035 | 0.035 | 0.035 | 0.035 | 0.035 | 0.035 | 0.035 | 0.035 | 0.035 | 0.035 | 0.035 |
| | Diluent solvent | Methyl ethyl ketone | 59.1 | 59.1 | 59.1 | 59.1 | 59.1 | 59.1 | 59.1 | 59.1 | 59.1 | 59.1 | 59.1 | 59.1 |
| Physical properties | Prepolymer viscosity | mPa·s | 2100 | 1840 | 1740 | 2420 | 2330 | 1860 | 2720 | 1380 | 2860 | 2610 | 1110 | 2690 |
| | | | A | A | A | A | A | A | D | A | D | D | A | D |

The compositions were comprehensively evaluated as A, B, C, or D (A: very good, B: good, C: fair, D: poor). The results are shown in Table 9.

<Comprehensive evaluation>

A: All evaluations of physical properties and handling properties are rated as A only
B: Evaluations of physical properties and handling properties do not include D, and include one B or C
C: Evaluations of physical properties and handling properties do not include D, and include two or more B or C
D: Evaluations of physical properties and handling properties include D

[Table 9]

| | Example 1B-3 | Example 2B-3 | Example 3B-3 | Example 4B-3 | Example 5B-3 | Example 6B-3 | Comparative Example 1B-3 | Comparative Example 2B-3 | Comparative Example 3B-3 | Comparative Example 4B-3 | Comparative Example 5B-3 | Comparative Example 6B-3 |
|---|---|---|---|---|---|---|---|---|---|---|---|---|
| Type of composition | PCP 1B | PCP 2B | PCP 3B | PCP 6B | PCP 7B | PCP 8B | PCP 4B | PCP 5B | PCP 9B | PCP 10B | PCP 11B | PCP 12B |
| Comprehensive evaluation | B | A | A | B | A | A | D | D | D | D | D | D |

The details of the materials used in the second example are as follows.

- · 1,6-Hexanediol: Manufactured by BASF JAPAN
- · 1,4-Butanediol: Tokyo Chemical Industry Co., Ltd.
- · Trimethylolpropane: Manufactured by Sigma-Aldrich
- · Diethyl carbonate: Manufactured by Sigma-Aldrich
- · 3-Ethyl-3-hydroxymethyl oxetane: Manufactured by Tokyo Chemical Industry Co., Ltd.
- · Lithium acetylacetonate: Manufactured by Sigma-Aldrich
- · C-2612: Coronate 2612 (trade name), hexamethylene diisocyanate adduct-modified polyisocyanate, isocyanate content = 17.2%, manufactured by Tosoh Corporation
- · JP-508: Trade name, 2-ethylhexyl acid phosphate, manufactured by Johoku Chemical Co., Ltd.
- · DOTDL: Dioctyltin dilaurate, manufactured by Kishida Chemical Co., Ltd.
- · Methyl ethyl ketone: Manufactured by Maruzen Petrochemical Co., Ltd.
- · Toluene: Manufactured by FUJIFILM Wako Pure Chemical Corporation
- · BYK-331: Silicone-based surface conditioner, manufactured by BYK
- · 2,2-Dimethylolpropionic acid: Manufactured by Tokyo Chemical Industry Co., Ltd.
- · Isophorone diisocyanate: Manufactured by Evonik Industries

<Third example>

(Example 1C)

In a reactor A, 16.5 g of trimethylolpropane, 93.6 g of 1,6-hexanediol, 93.6 g of 3-methyl-1,5-pentanediol, 196.4 g of diethyl carbonate, 0.77 g of 3-ethyl-3-hydroxymethyl oxetane, and 0.030 g of lithium acetylacetonate were mixed. The obtained mixed solution was heated at 130°C to 150°C (130°C at the beginning and 150°C at the end) under atmospheric pressure and reacted for 1.5 hours while removing low-boiling-point components (such as alcohols derived from a carbonate ester). The temperature of the distillate was 77°C or higher and less than 79°C. Then, the internal pressure of the flask was reduced to 0.5 kPa over 0.5 hours at a reaction temperature of 150°C, followed by further reaction at 0.5 kPa for 1.0 hour to obtain a composition (PCP-1C) containing a compound (A-1).

(Example 2C)

A composition (PCP-2C) containing a compound (A-1) was obtained in the same manner as in Example 1C, except that 1.42 g of 3-ethyl-3-hydroxymethyl oxetane was added.

(Example 3C)

A composition (PCP-3C) containing a compound (A-1) was obtained in the same manner as in Example 1C, except that 3.00 g of 3-ethyl-3-hydroxymethyl oxetane was added.

(Comparative Example 1C)

A composition (PCP-4C) containing a compound (A-1) was obtained in the same manner as in Example 1C, except that 0 g of 3-ethyl-3-hydroxymethyl oxetane was added.

(Comparative Example 2C)

A composition (PCP-5C) containing a compound (A-1) was obtained in the same manner as in Example 1C, except that 0.17 g of 3-ethyl-3-hydroxymethyl oxetane was added.

(Comparative Example 3C)

A composition (PCP-6C) containing a compound (A-1) was obtained in the same manner as in Example 1C, except that 7.30 g of 3-ethyl-3-hydroxymethyl oxetane was added.

(Example 4C)

A composition (PCP-7C) containing a compound (A-1) was obtained in the same manner as in Example 1C,

except that 2.20 g of 3-ethyl-3-hydroxymethyl oxetane was added.

(Example 5C)

A composition (PCP-8C) containing a compound (A-1) was obtained in the same manner as in Example 1C, except that 3.85 g of 3-ethyl-3-hydroxymethyl oxetane was added.

(Example 6C)

A composition (PCP-9C) containing a compound (A-1) was obtained in the same manner as in Example 1C, except that 6.50 g of 3-ethyl-3-hydroxymethyl oxetane was added.

(Example 7C)

In a reactor A, 16.5 g of trimethylolpropane, 93.6 g of 1,6-hexanediol, 93.6 g of 3-methyl-1,5-pentanediol, 196.4 g of diethyl carbonate, and 0.030 g of lithium acetylacetonate were mixed. The obtained mixed solution was heated at 130°C to 150°C (130°C at the beginning and 150°C at the end) under atmospheric pressure and reacted for 1.5 hours while removing low-boiling-point components (such as alcohols derived from a carbonate ester). The temperature of the distillate was 77°C or higher and less than 79°C. Then, the internal pressure of the flask was gradually reduced to 0.5 kPa over 0.5 hours at a reaction temperature of 150°C, followed by further reaction at 0.5 kPa for 35 hours to obtain a composition (PCP-10C) containing a compound (A-1).

(Comparative Example 4C)

A composition (PCP-11C) containing a compound (A-1) was obtained in the same manner as in Example 1C, except that 0.55 g of 3-ethyl-3-hydroxymethyl oxetane was added.

(Analysis and evaluation)

In the same manner as in the first example, the number average molecular weight and hydroxyl value of the compositions obtained above were measured, and property evaluation, calculation of the apparent average hydroxyl functionality, and composition analysis were performed. In the composition analysis, the signal from 4.390 ppm to 4.500 ppm was designated as the signal (SC), the signal from 3.618 ppm to 3.720 ppm was designated as the signal (SD), and the signal from 3.590 ppm to 3.618 ppm was designated as the signal (SE).The results are shown in Table 10. FIG. 2 shows the $^{1}$H-NMR spectrum of the composition obtained in Example 1C.

[Table 10]

| | | | Example 1C | Example2C | Example 3C | Example 4C | Example 5C | Example 6C | Example 7C | Comparative Example 1C | Comparative Example 2C | Comparative Example 3C | Comparative Example 4C |
|---|---|---|---|---|---|---|---|---|---|---|---|---|---|
| | | | PCP 1C | PCP 2C | PCP 3C | PCP 7C | PCP 8C | PCP 9C | PCP 10C | PCP 4C | PCP 5C | PCP 6C | PCP 11C |
| Formulation | Diol (D1) | 1,6-Hexanediol | 93.6 | 93.6 | 93.6 | 93.6 | 93.6 | 93.6 | 93.6 | 93.6 | 93.6 | 93.6 | 93.6 |
| | | 3-Methyl-1,5-pentaned iol | 93.6 | 93.6 | 93.6 | 93.6 | 93.6 | 93.6 | 93.6 | 93.6 | 93.6 | 93.6 | 93.6 |
| | Polyhydric alcohol (B1) | Trimethylolpropane | 16.5 | 16.5 | 16.5 | 16.5 | 16.5 | 16.5 | 16.5 | 16.5 | 16.5 | 16.5 | 16.5 |
| | Carbonate ester | Diethyl carbonate | 196.4 | 196.4 | 196.4 | 196.4 | 196.4 | 196.4 | 196.4 | 196.4 | 196.4 | 196.4 | 196.4 |
| | Oxetane compound (F1) | 3-Ethyl-3-hydroxymet hyl oxetane | 0.77 | 1.42 | 3.00 | 2.20 | 3.85 | 6.50 | 0.00 | 0.00 | 0.17 | 7.30 | 0.55 |
| | Catalyst | Lithium acetylacetonate | 0.030 | 0.030 | 0.030 | 0.030 | 0.030 | 0.030 | 0.030 | 0.030 | 0.030 | 0.030 | 0.030 |
| Composition | Property (25°C) | | Liquid state | Liquid state | Liquid state | Liquid state | Liquid state | Liquid state | Liquid state | Liquid state | Liquid state | Liquid state | Liquid state |
| | Number average molecular weight (g/mol) | | 1092 | 1078 | 1083 | 1163 | 1068 | 997 | 1269 | 1024 | 1104 | 1016 | 1244 |
| | Hydroxyl value (OHv) (mgKOH/g) | | 131.1 | 136.5 | 139.5 | 126.7 | 139.8 | 154.2 | 115.3 | 137.1 | 129.3 | 150.6 | 114.6 |
| | Apparent average hydroxyl functionality | | 2.55 | 2.62 | 2.69 | 2.63 | 2.66 | 2.74 | 2.61 | 2.50 | 2.54 | 2.73 | 2.54 |
| | Composition analysis $^{1}H$-NMR | $C_C / C_T \times 100$ | - | - | - | - | - | - | - | - | - | - | - |
| | | $C_C / (C_C + C_D + C_E) \times 100$ | 1.471 | 2.206 | 4.908 | 3.526 | 6.415 | 9.1549 | 2.4378 | 0.436 | 0.654 | 10.92 | 0.837 |

In Table 10, the "composition" (unit: g) for Examples 1C to 7C and Comparative Examples 1C to 4C indicates the reaction raw materials.

(Physical property evaluation)

Cured urethane films were obtained in the same manner as in the first example, except that the compositions obtained above, a polyisocyanate component (C-2612), a urethanization catalyst, a phosphate ester (JP508), and a diluent solvent were mixed according to the formulation (unit: g) shown in Tables 8 and 9. Then, using the obtained films as samples, physical properties (tensile properties, texture properties, low-temperature properties) were evaluated in the same manner as in the first example. The results are shown in Table 11.

[Evaluation criteria]

The physical property values of 100% modulus, strength at break, elongation at break, softening temperature, and glass transition temperature were evaluated as A, B, C, or D (A: very good, B: good, C: fair, D: poor).

<100% modulus>

A: 2.0 MPa or less
B: More than 2.0 MPa

<Strength at break>

A: More than 14.5 MPa
B: 13 MPa to 14.5 MPa
D: Less than 13 MPa

<Elongation at break>

A: 400% or more
B: Less than 400%

<Softening temperature>

A: 230°C or higher
B: Lower than 230°C

<Glass transition temperature>

A: 4.0°C or lower
B: Higher than 4.0°C

[Table 11]

| | | | Example 1C-1 | Example 2C-1 | Example 3C-1 | Example 4C-1 | Example 5C-1 | Example 6C-1 | Example 7C-1 | Comparative Example 1C-1 | Comparative Example 2C-1 | Comparative Example 3C-1 | Comparative Example 4C-1 |
|---|---|---|---|---|---|---|---|---|---|---|---|---|---|
| Formulation | Type of composition | | PCP 1C | PCP 2C | PCP 3C | PCP 7C | PCP 8C | PCP 9C | PCP 10C | PCP 4C | PCP 5C | PCP 6C | PCP 11C |
| | Composition | | 25.1 | 25 | 24.6 | 25.3 | 24.4 | 23.5 | 26.2 | 24.6 | 24.4 | 23.7 | 26.3 |
| | Polyisocyanate component | C-2612 | 14.9 | 15 | 15.4 | 14.7 | 15.6 | 16.5 | 13.8 | 15.4 | 15.6 | 16.3 | 13.7 |
| | Urethanization catalyst | DOTDL | 0.01 | 0.01 | 0.01 | 0.01 | 0.01 | 0.01 | 0.01 | 0.01 | 0.01 | 0.01 | 0.01 |
| | Phosphorus compound | JP-508 | 0.01 | 0.01 | 0.01 | 0.01 | 0.01 | 0.01 | 0.01 | 0.01 | 0.01 | 0.01 | 0.01 |
| | Diluent solvent | Methyl ethyl ketone | 42 | 42 | 42 | 42 | 42 | 42 | 42 | 42 | 42 | 42 | 42 |
| | | Toluene | 18 | 18 | 18 | 18 | 18 | 18 | 18 | 18 | 18 | 18 | 18 |
| | Leveling agent | BYK-331 | 0.4 | 0.4 | 0.4 | 0.4 | 0.4 | 0.4 | 0.4 | 0.4 | 0.4 | 0.4 | 0.4 |
| | Molar ratio (isocyanate group/hydroxy group) | | 1.05/1.0 | 1.05/1.0 | 1.05/1.0 | 1.05/1.0 | 1.05/1.0 | 1.05/1.0 | 1.05/1.0 | 1.05/1.0 | 1.05/1.0 | 1.05/1.0 | 1.05/1.0 |
| Physical properties | 100% Modulus (MPa) | | 1.5 | 1.6 | 1.7 | 1.7 | 1.6 | 1.6 | 1.8 | 1.4 | 1.6 | 1.2 | 2 |
| | | | A | A | A | A | A | A | A | A | A | A | A |
| | Strength at break (MPa) | | 20 | 16.8 | 14.9 | 15.3 | 13.5 | 15.2 | 14.8 | 18.7 | 12.7 | 11.6 | 11.8 |
| | | | A | A | A | A | B | A | A | A | D | D | D |
| | Elongation at break (%) | | 457 | 412 | 408 | 420 | 412 | 400 | 430 | 455 | 415 | 425 | 363 |
| | | | A | A | A | A | A | B | A | A | A | A | B |
| | Softening temperature (°C) | | 228 | 224 | 227 | 248 | 257 | 231 | 233 | 226 | 238 | 238 | 249 |
| | | | B | B | B | A | A | A | A | B | A | A | A |
| | Glass transition temperature (°C) | | 1.2 | 3.8 | 2.7 | 3 | 3.8 | 4.7 | 1.8 | 2.7 | 5.1 | 5.8 | 2.2 |
| | | | A | A | A | A | A | B | A | A | B | B | A |

(Handling property evaluation)

Handling properties (viscosity of isocyanate group-terminated urethane prepolymer) were evaluated in the same manner as in the first example, except that the compositions obtained above, N-980N, 1,6-hexanediol, 2,2-dimethylolpropionic acid (hydrophilic agent), isophorone diisocyanate (polyisocyanate), and methyl ethyl ketone (organic solvent) were charged according to the formulation (unit: g) shown in Table 12. The results are shown in Table 12.

[Evaluation criteria]

The viscosity of the isocyanate group-terminated urethane prepolymers was evaluated as A, B, C, or D (A: very good, B: good, C: fair, D: poor).

<Viscosity>

A: 1400 mPa ·s or less

D: More than 1400 mPa ·s

[Table 12]

| | | | Examp le 1C-2 | Examp le 2C-2 | Examp le 3C-1 | Examp le 4C-1 | Examp le 5C-1 | Examp le 6C-1 | Examp le 7C-1 | Comparati ve Example 1C-1 | Comparati ve Example 2C-1 | Comparati ve Example 3C-1 | Comparati ve Example 4C-1 |
|---|---|---|---|---|---|---|---|---|---|---|---|---|---|
| Formulati on | Type of composition | | PCP 1C | PCP 2C | PCP 3C | PCP 7C | PCP 8C | PCP 9C | PCP 10C | PCP 4C | PCP 5C | PCP 6C | PCP 11C |
| | Polyol | Composition | 33.3 | 33.3 | 33.3 | 33.3 | 33.3 | 33.1 | 33.3 | 33.3 | 33.3 | 33.2 | 33.3 |
| | | N-980N | 32.7 | 32.8 | 33 | 32.6 | 33.1 | 33.1 | 32.2 | 33 | 33.1 | 33.2 | 32.2 |
| | | 1,6-Hexanediol | 0.61 | 0.54 | 0.34 | 0.71 | 0.22 | 0 | 1.13 | 0.32 | 0.23 | 0 | 1.16 |
| | Hydrophilic agent | 2,2-Dimethylolpropi onic acid | 3.33 | 3.33 | 3.33 | 3.33 | 3.33 | 3.33 | 3.33 | 3.33 | 3.33 | 3.33 | 3.33 |
| | Polyisocyan ate compo-nent | Isophorone dii-socyanate | 20.8 | 20.8 | 20.8 | 20.8 | 20.8 | 21.2 | 20.8 | 20.8 | 20.8 | 21.1 | 20.8 |
| | Urethanizati on catalyst | DOTDL | 0.035 | 0.035 | 0.035 | 0.035 | 0.035 | 0.035 | 0.035 | 0.035 | 0.035 | 0.035 | 0.035 |
| | Diluent sol-vent | Methyl ethyl ke-tone | 59.1 | 59.1 | 59.1 | 59.1 | 59.1 | 59.1 | 59.1 | 59.1 | 59.1 | 59.1 | 59.1 |
| Physical properties | Prepolymer viscosity | mPa·s | 1380 | 1240 | 1210 | 1210 | 1240 | 580 | 1270 | 1430 | 1210 | 1060 | 1500 |
| | | | A | A | A | A | A | A | A | D | A | A | D |

The compositions were comprehensively evaluated as A, B, C, or D (A: very good, B: good, C: fair, D: poor). The results are shown in Table 13.

<Comprehensive evaluation>

A: All evaluations of physical properties and handling properties are rated as A only

B: Evaluations of physical properties and handling properties do not include D, and include one B or C

C: Evaluations of physical properties and handling properties do not include D, and include two or more B or C

D: Evaluations of physical properties and handling properties include D

[Table 13]

| | Example 1C-3 | Example 2C-3 | Example 3C-1 | Example 4C-1 | Example 5C-1 | Example 6C-1 | Example 7C-1 | Comparative Example 1C-1 | Comparative Example 2C-1 | Comparative Example 3C-1 | Comparative Example 4C-1 |
|---|---|---|---|---|---|---|---|---|---|---|---|
| Type of composition | PCP 1C | PCP 2C | PCP 4C | PCP 3C | PCP 5C | PCP 6C | PCP 7C | PCP 8C | PCP 9C | PCP 6C | PCP 10C |
| Comprehensive evaluation | B | A | B | A | B | C | A | D | D | D | D |

The details of the materials used in the third example are as follows.

- · 1,6-Hexanediol: Manufactured by BASF JAPAN
- · 3-Methyl-1,5-pentanediol: Manufactured by FUJIFILM Wako Chemical Corporation
- · Trimethylolpropane: Manufactured by Sigma-Aldrich
- · Diethyl carbonate: Manufactured by Sigma-Aldrich
- · 3-Ethyl-3-hydroxymethyl oxetane: Manufactured by Tokyo Chemical Industry Co., Ltd.
- · Lithium acetylacetonate: Manufactured by Sigma-Aldrich
- · C-2612: Coronate 2612 (trade name), hexamethylene diisocyanate adduct-modified polyisocyanate, isocyanate content = 17.2%, manufactured by Tosoh Corporation
- · JP-508: Trade name, 2-ethylhexyl acid phosphate, manufactured by Johoku Chemical Co., Ltd.
- · DOTDL: Dioctyltin dilaurate, manufactured by Kishida Chemical Co., Ltd.
- · Methyl ethyl ketone: Manufactured by Maruzen Petrochemical Co., Ltd.
- · Toluene: Manufactured by FUJIFILM Wako Pure Chemical Corporation
- · BYK-331: Silicone-based surface conditioner, manufactured by BYK
- · 2,2-Dimethylolpropionic acid: Manufactured by Tokyo Chemical Industry Co., Ltd.
- · Isophorone diisocyanate: Manufactured by Evonik Industries

(Fourth embodiment)

(Example 1D)

In a 0.5 L four-neck glass reactor (reactor B) equipped with a stirrer, a thermometer, a heating device, and a condenser, 371.6 g of PCD-1, 128.2 g of Placcel 305, 1.35 g of 3-ethyl-3-hydroxymethyl oxetane, and 0.08 g of lithium acetylacetonate were mixed. The mixture was heated at 190°C under atmospheric pressure and reacted for 6 hours. A composition (PCP-1D) containing a compound (A-1) was obtained.

(Example 2D)

A composition (PCP-2D) containing a compound (A-1) was obtained in the same manner as in Example 1D, except that 2.91 g of 3-ethyl-3-hydroxymethyl oxetane was added.

(Example 3D)

A composition (PCP-3D) containing a compound (A-1) was obtained in the same manner as in Example 1D, except that 5.42 g of 3-ethyl-3-hydroxymethyl oxetane was added.

(Example 4D)

In a reactor B, 371.6 g of PCD-1, 128.2 g of Placcel 305, and 0.08 g of lithium acetylacetonate were mixed. The mixture was heated at 190°C under atmospheric pressure and reacted for 35 hours to obtain a composition (PCP-4D) containing a compound (A-1).

(Comparative Example 1D)

A composition (PCP-5D) containing a compound (A-1) was obtained in the same manner as in Example 1D, except that 0 g of 3-ethyl-3-hydroxymethyl oxetane was added.

(Comparative Example 2D)

A composition (PCP-6D) containing a compound (A-1) was obtained in the same manner as in Example 1D, except that 0.39 g of 3-ethyl-3-hydroxymethyl oxetane was added.

(Comparative Example 3D)

A composition (PCP-7D) containing a compound (A-1) was obtained in the same manner as in Example 1D, except that 0.93 g of 3-ethyl-3-hydroxymethyl oxetane was added.

(Comparative Example 4D)

A composition (PCP-8D) containing a compound (A-1) was obtained in the same manner as in Example 1D, except that 13.5 g of 3-ethyl-3-hydroxymethyl oxetane was added.

(Comparative Example 5D)

In a reactor B, 371.6 g of PCD-1, 128.2 g of Placcel 305, and 0.05 g of potassium hydrogen carbonate were mixed. The mixture was heated at 190°C under atmospheric pressure and reacted for 5 hours. A composition (PCP-9D) containing a compound (A-1) was obtained.

(Example 5D)

A composition (PCP-10D) containing a compound (A-1) was obtained in the same manner as in Example 1D, except that 0.97 g of 3-ethyl-3-hydroxymethyl oxetane was added.

(Example 6D)

A composition (PCP-11D) containing a compound (A-1) was obtained in the same manner as in Example 1D, except that 1.05 g of 3-ethyl-3-hydroxymethyl oxetane was added.

(Example 7D)

A composition (PCP-12D) containing a compound (A-1) was obtained in the same manner as in Example 1D, except that 1.20 g of 3-ethyl-3-hydroxymethyl oxetane was added.

(Example 8D)

A composition (PCP-13D) containing a compound (A-1) was obtained in the same manner as in Example 1D, except that 8.00 g of 3-ethyl-3-hydroxymethyl oxetane was added.

(Example 9D)

A composition (PCP-14D) containing a compound (A-1) was obtained in the same manner as in Example 1D, except that 10.00 g of 3-ethyl-3-hydroxymethyl oxetane was added.

(Comparative Example 2D)

A composition (PCP-15D) containing a compound (A-1) was obtained in the same manner as in Example 1D, except that 0.19 g of 3-ethyl-3-hydroxymethyl oxetane was added.

(Analysis and evaluation)

In the same manner as in the first example, the number average molecular weight and hydroxyl value of the compositions obtained above were measured, and property evaluation, calculation of the apparent average hydroxyl functionality, and composition analysis were performed. In the composition analysis, the signal from 4.390 ppm to 4.500 ppm was designated as the signal (SC), the signal from 3.618 ppm to 3.720 ppm was designated as the signal (SD), the signal from 3.550 ppm to 3.618 ppm was designated as the signal (SE), the signal from 0.700 ppm to 1.130 ppm was designated as the signal (SI) when $R^2$ in the groups represented by Formulae (I) and (C) is a methyl group (when the polyhydric alcohol (e) is trimethylolethane), and the signal from 0.700 ppm to 1.000 ppm was designated as the signal (SI) when $R^2$ in the groups represented by Formulae (I) and (C) is an ethyl group (when the polyhydric alcohol (e) is trimethylolpropane).
The results are shown in Table 14.

[Table 14]

| | | | Example 1D | Example 2D | Example 3D | Example 4D | Example 5D | Example 6D | Example 7D | Example 8D | Example 9D | Comparative Example 1D | Comparative Example 2D | Comparative Example 3D | Comparative Example 4D | Comparative Example 5D | Comparative Example 6D |
|---|---|---|---|---|---|---|---|---|---|---|---|---|---|---|---|---|---|
| | | | PCP 1D | PCP 2D | PCP 3D | PCP 4D | PCP 10D | PCP 11D | PCP 12D | PCP 13D | PCP 14D | PCP 5D | PCP 6D | PCP 7D | PCP 8D | PCP 9D | PCP 15D |
| Formulation | Polycarbonate polyol (B2) | PCD-1 | 371.6 | 371.6 | 371.6 | 371.6 | 371.6 | 371.6 | 371.6 | 371.6 | 371.6 | 371.6 | 371.6 | 371.6 | 371.6 | 371.6 | 371.6 |
| | Polyester polyol (C2) | Placcel 305 | 128.2 | 128.2 | 128.2 | 128.2 | 128.2 | 128.2 | 128.2 | 128.2 | 128.2 | 128.2 | 128.2 | 128.2 | 128.2 | 128.2 | 128.2 |
| | Oxetane compound (F2) | 3-Ethyl-3-hydroxy methyl oxetane | 1.35 | 2.91 | 5.42 | 0.00 | 0.97 | 1.05 | 1.20 | 8.00 | 10.00 | 0.00 | 0.39 | 0.93 | 13.5 | 0.00 | 0.19 |
| | Catalyst | Lithium acetylacetonate | 0.08 | 0.08 | 0.08 | 0.08 | 0.08 | 0.08 | 0.08 | 0.08 | 0.08 | 0.08 | 0.08 | 0.08 | 0.08 | | 0.08 |
| | | Potassium hydrogen carbonate | | | | | | | | | | | | | | 0.05 | |
| Composition | Property (25°C) | | Liquid state | Liquid state | Liquid state | Liquid state | Liquid state | Liquid state | Liquid state | Liquid state | Liquid state | Liquid state | Liquid state | Liquid state | Liquid state | Liquid state | Liquid state |
| | Number average molecular weight (g/mol) | | 1375 | 1304 | 1192 | 1320 | 1371 | 1324 | 1330 | 1189 | 1150 | 1345 | 1352 | 1352 | 1088 | 1389 | 1322 |
| | Hydroxyl value (OHv) (mgKOH/g) | | 112.1 | 117.4 | 123.3 | 116.1 | 108.0 | 112.6 | 113.5 | 128.5 | 134.6 | 107.7 | 108.5 | 108.5 | 140.9 | 107.3 | 110.1 |
| | Apparent average hydroxyl functionality | | 2.75 | 2.73 | 2.62 | 2.73 | 2.64 | 2.66 | 2.69 | 2.72 | 2.76 | 2.58 | 2.61 | 2.61 | 2.73 | 2.66 | 2.59 |
| | Composition analysis $^1$H-NMR | $C_C / C_T \times 100$ | 6.500 | 10.00 | 16.25 | 10.75 | 3.000 | 4.250 | 5.00 | 20.25 | 28.00 | 0.137 | 1.966 | 2.750 | 32.25 | 0.444 | 1.120 |
| | | $C_C / (C_C + C_D + C_E) \times 100$ | 2.046 | 3.228 | 5.345 | 3.359 | 1.100 | 1.309 | 1.591 | 7.345 | 9.211 | 0.042 | 0.611 | 0.862 | 11.58 | 0.143 | 0.528 |

In Table 14, the "composition" (unit: g) for Examples 1D to 9D and Comparative Examples 1D to 6D indicates the reaction raw materials.

(Physical property evaluation)

Cured urethane films were obtained in the same manner as in the first example, except that the compositions obtained above, a polyisocyanate component (C-2612), a urethanization catalyst, a phosphate ester (JP508), and a diluent solvent were mixed according to the formulation (unit: g) shown in Table 15. Then, using the obtained films as samples, physical properties (tensile properties, texture properties, low-temperature properties) were evaluated in the same manner as in the first example. The results are shown in Table 15.

[Evaluation criteria]

The physical property values of 100% modulus, strength at break, elongation at break, softening temperature, and glass transition temperature were evaluated as A, B, C, or D (A: very good, B: good, C: fair, D: poor).

<100% modulus>

A: 2.0 MPa or less
B: More than 2.0 MPa

<Strength at break>

A: More than 16 MPa
B: 15 MPa to 16 MPa
D: Less than 15 MPa

<Elongation at break>

A: 400% or more
B: Less than 400%

<Softening temperature>

A: 250°C or higher
B: Lower than 250°C

<Glass transition temperature>

A: − 2°C or lower
B: − higher than 2°C

[Table 15]

| | | | Example 1D-1 | Example 2D-1 | Example 3D-1 | Example 4D-1 | Example 5D-1 | Example 6D-1 | Example 7D-1 | Example 8D-1 | Example 9D-1 | Comparative Example 1D-1 | Comparative Example 2D-1 | Comparative Example 3D-1 | Comparative Example 4D-1 | Comparative Example 5D-1 | Comparative Example 6D-1 |
|---|---|---|---|---|---|---|---|---|---|---|---|---|---|---|---|---|---|
| Formulation | Type of composition | | PCP 1D | PCP 2D | PCP 3D | PCP 4D | PCP 10D | PCP 11D | PCP 12D | PCP 13D | PCP 14D | PCP 5D | PCP 6D | PCP 7D | PCP 8D | PCP 9D | PCP 15D |
| | Composition | | 26.5 | 26 | 25.6 | 26.1 | 26.8 | 26.4 | 26.3 | 25.2 | 24.8 | 26.8 | 26.7 | 26.7 | 24.3 | 26.8 | 26.6 |
| | Polyisocyanate component | C-2612 | 13.5 | 14 | 14.4 | 13.9 | 13.2 | 13.6 | 13.7 | 14.8 | 15.2 | 13.2 | 13.3 | 13.3 | 15.7 | 13.2 | 13.4 |
| | Urethanization catalvst | DOTD L | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 |
| | Phosphorus compound | JP-508 | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 |
| | Diluent solvent | Methyl ethyl ketone | 42 | 42 | 42 | 42 | 42 | 42 | 42 | 42 | 42 | 42 | 42 | 42 | 42 | 42 | 42 |
| | | Toluene | 18 | 18 | 18 | 18 | 18 | 18 | 18 | 18 | 18 | 18 | 18 | 18 | 18 | 18 | 18 |
| | Leveling agent | BYK-331 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 |
| | Molar ratio (isocyanate group/hydroxy group) | | 1.05/1. 0 | 1.05/1. 0 | 1.05/1. 0 | 1.05/1. 0 | 1.05/1. 0 | 1.05/1. 0 | 1.05/1. 0 | 1.05/1. 0 | 1.05/1. 0 | 1.05/1.0 | 1.05/1.0 | 1.05/1.0 | 1.05/1.0 | 1.05/1.0 | 1.05/1.0 |
| Physical properties | 100% Modulus (MPa) | | 1.6 | 1.6 | 1.6 | 1.7 | 1.6 | 1.6 | 1.6 | 1.3 | 1.4 | 1.8 | 1.7 | 2.1 | 1.2 | 1.9 | 1.5 |
| | | | A | A | A | A | A | A | A | A | A | A | A | B | A | A | A |
| | Strength at break (MPa) | | 18.2 | 16.4 | 15.9 | 26.9 | 20.6 | 18.8 | 20.8 | 16.6 | 17.5 | 21.5 | 17.1 | 18.9 | 14.2 | 17.2 | 17.8 |
| | | | A | A | B | A | A | A | A | A | A | A | A | A | D | A | A |
| | Elongation at break (%) | | 425 | 418 | 408 | 410 | 408 | 408 | 410 | 416 | 425 | 412 | 415 | 370 | 442 | 375 | 408 |
| | | | A | A | A | A | A | A | A | A | A | A | A | B | A | B | A |
| | Softening temperature (°C) | | 242 | 241 | 239 | 258 | 265 | 270 | 268 | 245 | 256 | 247 | 257 | 269 | 242 | 268 | 257 |
| | | | B | B | B | A | A | A | A | B | A | B | A | A | B | A | A |
| | Glass transition temperature (°C) | | -6.3 | -8.3 | -4.7 | -1.2 | -5.9 | -4.7 | -4.7 | -2.8 | -1.3 | -8.3 | -6.3 | -6.4 | -1.8 | -5.7 | -3.9 |
| | | | A | A | A | B | A | A | A | A | B | A | A | A | B | A | A |

(Handling property evaluation)

Handling properties (viscosity of isocyanate group-terminated urethane prepolymer) were evaluated in the same manner as in the first example, except that the compositions obtained above, N-980N, 1,6-hexanediol, 2,2-dimethylolpropionic acid (hydrophilic agent), isophorone diisocyanate (polyisocyanate), and methyl ethyl ketone (organic solvent) were charged according to the formulation (unit: g) shown in Table 16. The results are shown in Table 16.

[Evaluation criteria]

The viscosity of the isocyanate group-terminated urethane prepolymers was evaluated as A, B, C, or D (A: very good, B: good, C: fair, D: poor).

<Viscosity>

A: 2600 mPa ·s or less

D: More than 2600 mPa ·s

[Table 16]

| | | | Example 1D-2 | Example 2D-2 | Example 3D-2 | Example 4D-2 | Example 5D-2 | Example 6D-2 | Example 7D-2 | Example 8D-2 | Example 9D-2 | Comparative Example 1D-2 | Comparative Example 2D-2 | Comparative Example 3D-2 | Comparative Example 4D-2 | Comparative Example 5D-2 | Comparative Example 6D-2 |
|---|---|---|---|---|---|---|---|---|---|---|---|---|---|---|---|---|---|
| Formulation | Type of composition | | PCP 1D | PCP 2D | PCP 3D | PCP 4D | PCP 10D | PCP 11D | PCP 12D | PCP 13D | PCP 14D | PCP 5D | PCP 6D | PCP 7D | PCP 8D | PCP 9D | PCP 15D |
| | Polyol | Composition | 33.3 | 33.3 | 33.3 | 33.3 | 33.3 | 33.3 | 33.3 | 33.3 | 33.3 | 33.3 | 33.3 | 33.3 | 33.3 | 33.3 | 33.3 |
| | | N-980N | 32.1 | 32.3 | 32.5 | 32.2 | 31.9 | 32.1 | 32.1 | 32.7 | 32.9 | 31.9 | 32 | 32 | 33.2 | 31.9 | 32 |
| | | 1,6-Hexanediol | 1.25 | 1.05 | 0.83 | 1.1 | 1.4 | 1.23 | 1.2 | 0.64 | 0.41 | 1.42 | 1.39 | 1.39 | 0.18 | 1.43 | 1.32 |
| | Hydrophilic agent | 2,2-Dimethylol propionic acid | 3.33 | 3.33 | 3.33 | 3.33 | 3.33 | 3.33 | 3.33 | 3.33 | 3.33 | 3.33 | 3.33 | 3.33 | 3.33 | 3.33 | 3.33 |
| | Polyisocyanate component | Isophorone diisocyanate | 20.8 | 20.8 | 20.8 | 20.8 | 20.8 | 20.8 | 20.8 | 20.8 | 20.8 | 20.8 | 20.8 | 20.8 | 20.8 | 20.8 | 20.8 |
| | Urethanization catalyst | DOTDL | 0.035 | 0.035 | 0.035 | 0.035 | 0.035 | 0.035 | 0.035 | 0.035 | 0.035 | 0.035 | 0.035 | 0.035 | 0.035 | 0.035 | 0.035 |
| | Diluent solvent | Methyl ethyl ketone | 59.1 | 59.1 | 59.1 | 59.1 | 59.1 | 59.1 | 59.1 | 59.1 | 59.1 | 59.1 | 59.1 | 59.1 | 59.1 | 59.1 | 59.1 |
| Physical properties | Prepolymer viscosity | mPa·s | 2460 | 2080 | 1950 | 1750 | 2510 | 2340 | 2170 | 2150 | 1190 | 3210 | 2770 | 3080 | 752 | 2870 | 2670 |
| | | | A | A | A | A | A | A | A | A | A | D | D | D | A | D | D |

The compositions were comprehensively evaluated as A, B, C, or D (A: very good, B: good, C: fair, D: poor). The results are shown in Table 17.

<Comprehensive evaluation>

A: All evaluations of physical properties and handling properties are rated as A only

B: Evaluations of physical properties and handling properties do not include D, and include one B or C

C: Evaluations of physical properties and handling properties do not include D, and include two or more B or C

D: Evaluations of physical properties and handling properties include D

[Table 17]

| | Example 1D-3 | Example 2D-3 | Example 3D-3 | Example 4D-3 | Example 5D-3 | Example 6D-3 | Example 7D-3 | Example 8D-3 | Example 9D-3 | Comparative Example 1D-3 | Comparative Example 20-3 | Comparative Example 3D-3 | Comparative Example 4D-3 | Comparative Example 5D-3 | Comparative Example 6D-3 |
|---|---|---|---|---|---|---|---|---|---|---|---|---|---|---|---|
| Type of composition | PCP 1D | PCP 2D | PCP 3D | PCP 4D | PCP 10D | PCP 11D | PCP 12DA | PCP 13D | PCP 14D | PCP 5D | PCP 6D | PCP 7D | PCP 8D | PCP 9D | PCP 15D |
| Comprehensive evaluation | B | B | C | B | A | A | A | B | B | D | D | D | D | D | D |

The details of the materials used in the fourth example are as follows.

- · Placcel 305: Polycaprolactone triol (number average molecular weight = 550, hydroxyl value = 305, functionality = 3), manufactured by Daicel Corporation
- · 3-Ethyl-3-hydroxymethyl oxetane: Manufactured by Tokyo Chemical Industry Co., Ltd.
- · Lithium acetylacetonate: Manufactured by Sigma-Aldrich
- · Potassium hydrogen carbonate: Manufactured by FUJIFILM Wako Pure Chemical Corporation
- · C-2612: Coronate 2612 (trade name), hexamethylene diisocyanate adduct-modified polyisocyanate, isocyanate content = 17.2%, manufactured by Tosoh Corporation
- · JP-508: Trade name, 2-ethylhexyl acid phosphate, manufactured by Johoku Chemical Co., Ltd.
- · DOTDL: Dioctyltin dilaurate, manufactured by Kishida Chemical Co., Ltd.
- · Methyl ethyl ketone: Manufactured by Maruzen Petrochemical Co., Ltd.
- · Toluene: Manufactured by FUJIFILM Wako Pure Chemical Corporation
- · BYK-331: Silicone-based surface conditioner, manufactured by BYK
- · 2,2-Dimethylolpropionic acid: Manufactured by Tokyo Chemical Industry Co., Ltd.
- · Isophorone diisocyanate: Manufactured by Evonik Industries

## Claims

1. A composition comprising: a compound (A-1) comprising a repeating unit (A) represented by the following Formula (A), a structural unit (I) derived from a polyhydric alcohol represented by the following Formula (I), a structure (C) derived from an oxetane compound represented by the following Formula (C), and a terminal hydroxy group, wherein the content of the structure (C) derived from the oxetane compound represented by the following Formula (C) in the composition is 0.90 to 10.7 mol% relative to the total amount of the structure (C) derived from the oxetane compound, a structure (D) derived from a diol represented by the following Formula (D), and a structure (E) derived from a polyhydric alcohol represented by the following Formula (E) in the composition,

[Chem. 1]

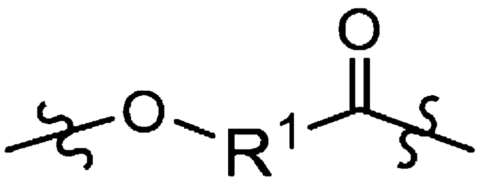

(A)

[in Formula (A), $R^1$ represents an alkanediyl group, *1-O-$R^a$-*2, or *1-$R^b$-C(=O)-O-$R^c$-*2, where $R^a$, $R^b$, and $R^c$ each independently represent an alkanediyl group, *1 represents a bonding site with a carbonyl group, and *2 represents a bonding site with an oxygen atom],

[Chem. 2]

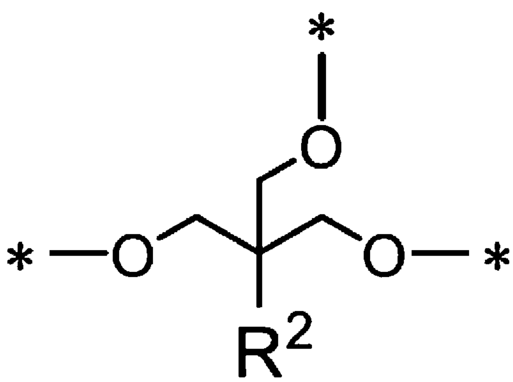

(I)

[in Formula (I), $R^2$ represents a hydrogen atom, an alkyl group, or a hydroxyalkyl group, and * represents a

bonding site],

[Chem. 3]

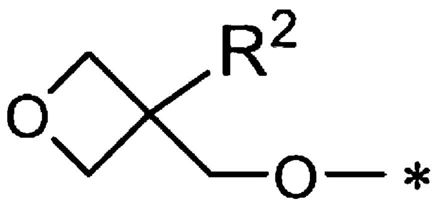

(C)

[in Formula (C), $R^2$ has the same meaning as above, and * represents a bonding site],

[Chem. 4]

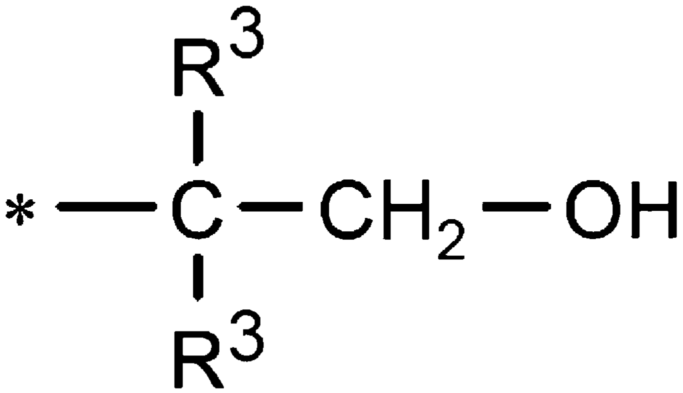

(D)

[in Formula (D), $R^3$ represents a hydrogen atom or an alkyl group, and * represents a bonding site, and $R^3$'s may be the same or different from each other], and

[Chem. 5]

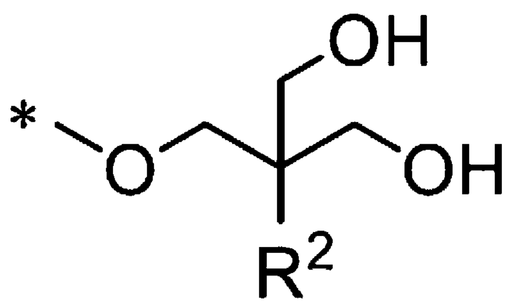

(E)

[in Formula (E), $R^2$ has the same meaning as above, and * represents a bonding site].

**2.** A composition comprising: a compound (A-1) including a repeating unit (A) represented by the following Formula (A) and a structural unit (I) derived from a polyhydric alcohol represented by the following Formula (I),
wherein the content of a structure (C) derived from an oxetane compound represented by the following Formula (C) is 2.80 to 28 mol% relative to the total amount of the structural unit (I) derived from the polyhydric alcohol represented by the following Formula (I) and the structure (C) derived from the oxetane compound,

[Chem. 6]

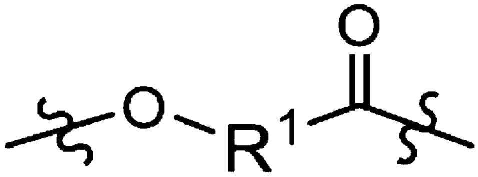

(A)

[in Formula (A), $R^1$ represents an alkanediyl group, *1-O-$R^a$-*2, or *1-$R^b$-C(=O)-O-$R^c$-*2, where $R^a$, $R^b$, and $R^c$ each independently represent an alkanediyl group, *1 represents a bonding site with a carbonyl group, and *2 represents a bonding site with an oxygen atom],

[Chem. 7]

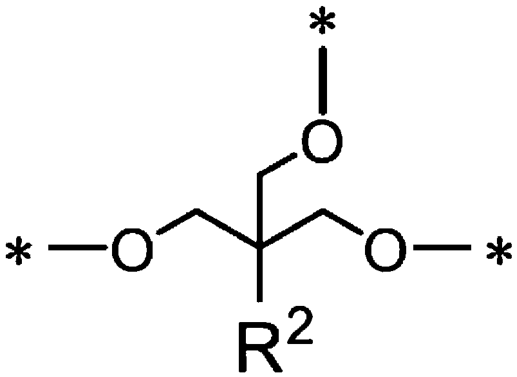

(I)

[in Formula (I), $R^2$ represents a hydrogen atom, an alkyl group, or a hydroxyalkyl group, and * represents a bonding site], and

[Chem. 8]

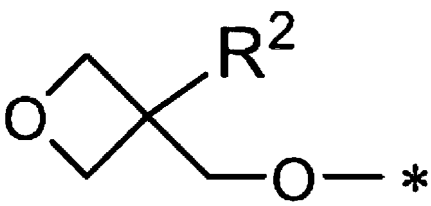

(C)

[in Formula (C), $R^2$ has the same meaning as above, and * represents a bonding site].

3. The composition according to claim 1, wherein the content of the structure (C) derived from the oxetane compound is 2.80 to 28 mol% relative to the total amount of the structural unit (I) derived from the polyhydric alcohol and the structure (C) derived from the oxetane compound.

4. The composition according to any one of claims 1 to 3, wherein $R^1$ is *1-O-$R^a$-*2, and all of $R^a$'s are linear alkanediyl groups.

5. The composition according to any one of claims 1 to 3, wherein $R^1$ is *1-O-$R^a$-*2, and at least one of $R^a$'s is a branched alkanediyl group.

6. The composition according to any one of claims 1 to 3, wherein $R^1$ is *1-O-$R^a$-*2, and two or more alkanediyl groups are contained as $R^a$.

**7.** The composition according to any one of claims 1 to 3, wherein $R^1$ comprises *1-O-$R^a$-*2, and an alkanediyl group and/or * l-$R^b$-C(=O)-O-$R^c$-*2.

**8.** The composition according to any one of claims 1 to 3, wherein $R^1$ comprises *1-O-$R^a$-*2 and an alkanediyl group.

**9.** The composition according to any one of claims 1 to 3, further comprising:

a diol (d) represented by the following Formula (d);
a polyhydric alcohol (e) represented by the following Formula (e); and
an oxetane compound (F) represented by the following Formula (f),
[Chem. 9]

HO-$R^a$-OH (d)

[in Formula (d), $R^a$ has the same meaning as above],

[Chem. 10]

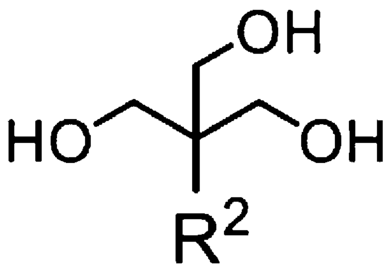

(e)

[in Formula (e), $R^2$ has the same meaning as above], and

[Chem. 11]

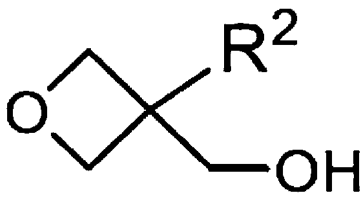

(f)

[in Formula (f), $R^2$ has the same meaning as above].

**10.** The composition according to any one of claims 1 to 3, further comprising:

a compound (A-2) represented by the following Formula (A-2);
a compound (A-3) represented by the following Formula (A-3); and
a compound (A-4) represented by the following Formula (A-4),

[Chem. 12]

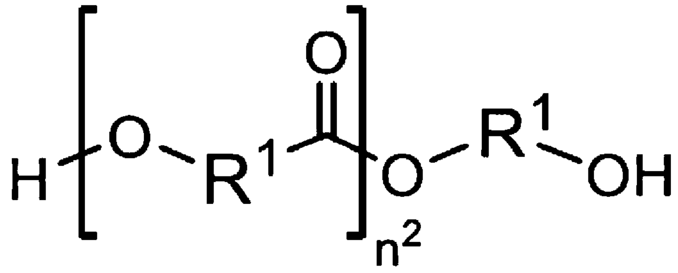

(A-2)

[in Formula (A-2), $R^1$ has the same meaning as above, and $n^2$ represents an integer of 1 or more, and a plurality of $R^1$'s may be the same or different from each other],

[Chem. 13]

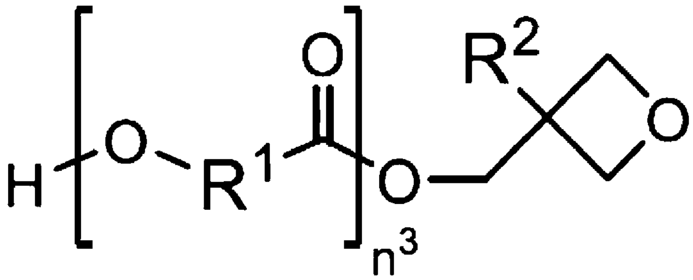

(A-3)

[in Formula (A-3), $R^1$ and $R^2$ have the same meaning as above, and $n^3$ represents an integer of 1 or more, and a plurality of $R^1$'s may be the same or different from each other], and

[Chem. 14]

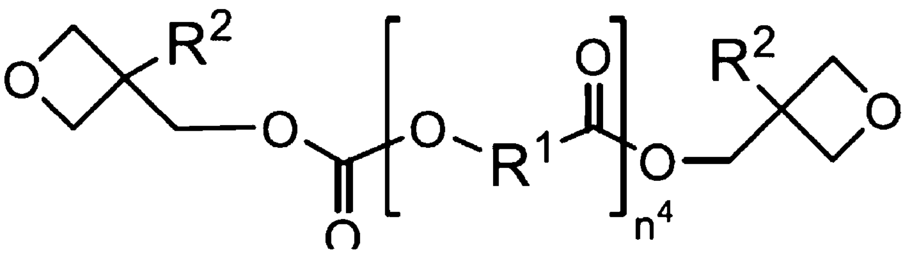

(A-4)

[in Formula (A-4), $R^1$ and $R^2$ have the same meaning as above, and $n^4$ represents an integer of 1 or more, a plurality of $R^2$'s may be the same or different from each other, and when a plurality of $R^1$'s are present, they may be the same or different from each other].

**11.** The composition according to any one of claims 1 to 3, further comprising lithium acetylacetonate.

**12.** A method for producing the composition according to any one of claims 1 to 3, comprising:
a step of heating a mixed solution containing a polyhydric alcohol (B1), a diol (D1), a carbonate ester, and a transesterification catalyst to perform a reflux reaction while removing an alcohol derived from the carbonate ester from the reaction system, thereby obtaining the composition.

**13.** A method for producing the composition according to any one of claims 1 to 3, comprising:

a reaction step of obtaining the compound (A-1) by reacting a polycarbonate polyol (B2) with a polyester polyol (C2) in a mixed solution containing the polycarbonate polyol (B2), the polyester polyol (C2), and a transesterification catalyst,
wherein at least one of the polycarbonate polyol (B2) and the polyester polyol (C2) comprises a group represented by the following Formula (I), or the mixed solution further comprises a polyhydric alcohol (E2),

[Chem. 15]

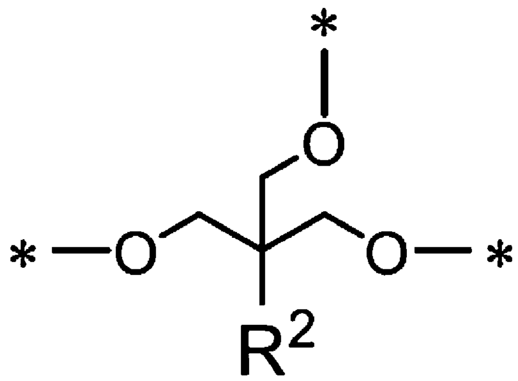

(I)

[in Formula (I), $R^2$ has the same meaning as above, and * represents a bonding site].

**14.** The production method according to claim 12, wherein the content of the transesterification catalyst in the mixed solution is 0.001 to 0.050 parts by mass relative to 100 parts by mass of the total amount of the polyhydric alcohol (B1), the diol (D1), and the carbonate ester in the mixed solution.

**15.** The production method according to claim 12, wherein the content of the transesterification catalyst in the mixed solution is 0.001 to 0.050 parts by mass relative to 100 parts by mass of the total amount of the polycarbonate polyol (B2) and the polyester polyol (C2).

**16.** The production method according to claim 13, wherein the transesterification catalyst comprises lithium acetylacetonate.

**17.** A urethane resin which is a polycondensate of a polyol component and a polyisocyanate component or a crosslinked product thereof,
wherein the polyol component comprises the composition according to any one of claims 1 to 3.

**18.** The urethane resin according to claim 17, wherein the polyol component further comprises a polyol having an acid group.

**19.** An aqueous urethane resin dispersion comprising an aqueous medium, and the urethane resin according to claim 18 dispersed in the aqueous medium or a neutralized product thereof.

**20.** A coating agent comprising the urethane resin according to claim 17.

Fig.1

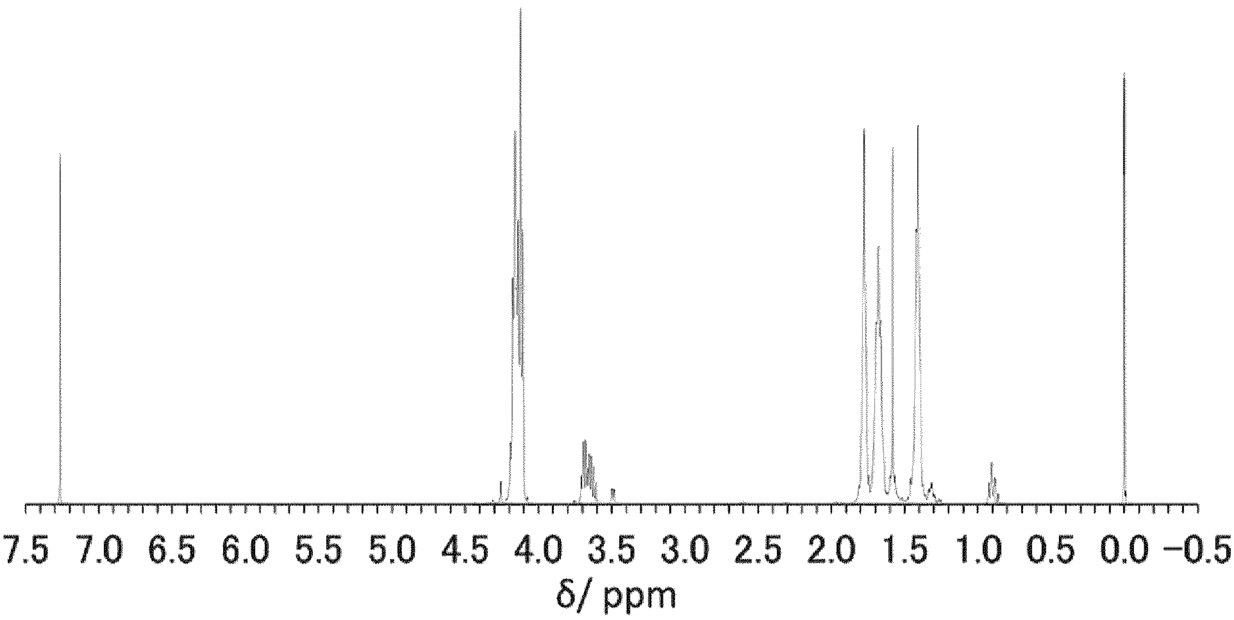

Fig.2

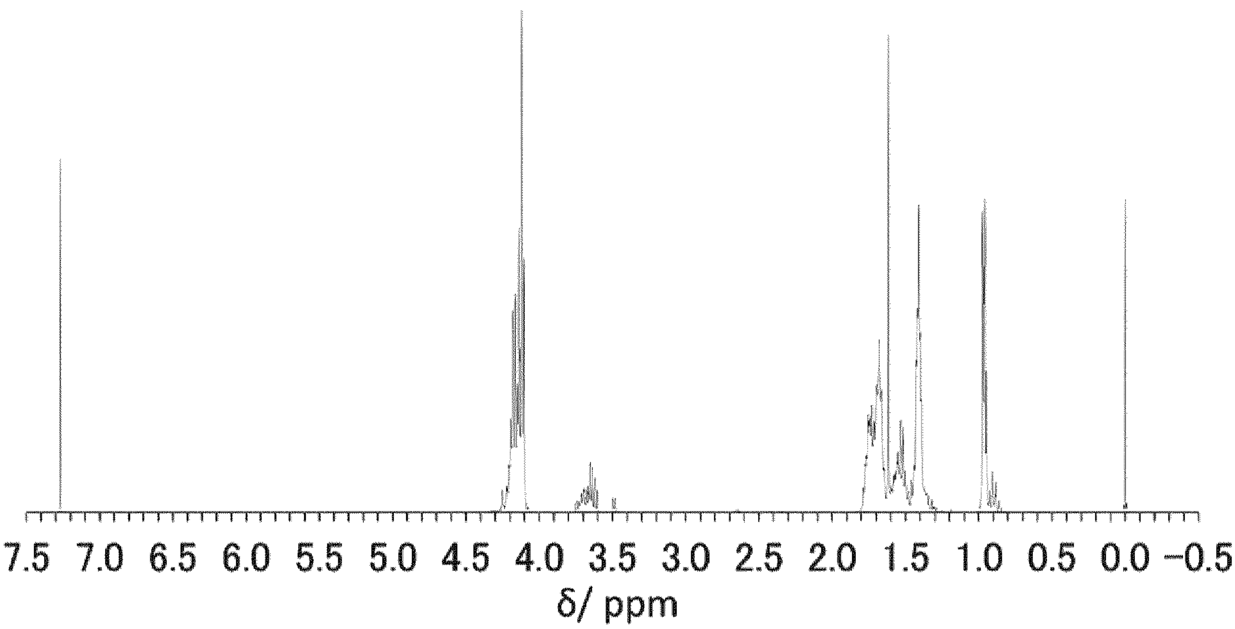

## INTERNATIONAL SEARCH REPORT

International application No. **PCT/JP2024/007151**

**A. CLASSIFICATION OF SUBJECT MATTER**

***C08G 64/00***(2006.01)i; ***C08G 18/44***(2006.01)i; ***C08G 63/66***(2006.01)i; ***C08G 63/78***(2006.01)i; ***C09D 175/06***(2006.01)i
FI: C08G64/00; C08G63/66; C08G63/78; C08G18/44; C09D175/06

According to International Patent Classification (IPC) or to both national classification and IPC

**B. FIELDS SEARCHED**

Minimum documentation searched (classification system followed by classification symbols)

C08G18/00-18/87; C08G63/00-64/42; C08G71/00-71/04; C09D1/00-10/00; C09D101/00-201/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | WO 2022/080491 A1 (TOSOH CORPORATION) 21 April 2022 (2022-04-21) claims 1-23, examples | 1-20 |
| A | WO 2022/244850 A1 (TOSOH CORPORATION) 24 November 2022 (2022-11-24) claims 1-19, examples | 1-20 |
| A | JP 2019-123871 A (UBE INDUSTRIES, LTD.) 25 July 2019 (2019-07-25) claims 1-9, examples | 1-20 |
| A | JP 2019-035073 A (MITSUBISHI CHEMICAL CORPORATION) 07 March 2019 (2019-03-07) claims 1-10, examples | 1-20 |
| A | JP 2011-219750 A (UBE INDUSTRIES, LTD.) 04 November 2011 (2011-11-04) claims 1-6, examples | 1-20 |
| P, X | WO 2023/199756 A1 (TOSOH CORPORATION) 19 October 2023 (2023-10-19) claims 1-32, examples | 1-20 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 April 2024** | **07 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/007151**

| Patent document cited in search report | Publication date (day/month/year) | Patent family member(s) | Publication date (day/month/year) |
|---|---|---|---|
| WO 2022/080491 A1 | 21 April 2022 | US 2023/0348670 A1<br>claims 1-31, examples<br>EP 4212337 A1<br>CN 116348298 A<br>KR 10-2023-0054900 A<br>TW 202244119 A | |
| WO 2022/244850 A1 | 24 November 2022 | EP 4342927 A1<br>claims 1-19, examples<br>CN 117321111 A | |
| JP 2019-123871 A | 25 July 2019 | CN 110041484 A<br>claims 1-9, examples<br>CN 115651149 A | |
| JP 2019-035073 A | 07 March 2019 | (Family: none) | |
| JP 2011-219750 A | 04 November 2011 | (Family: none) | |
| WO 2023/199756 A1 | 19 October 2023 | TW 202402876 A<br>claims 1-32, examples | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H3220233 A
- JP 2012184380 A